(19) Europäisches Patentamt
European Patent Office
Office européen des brevets

(11) Veröffentlichungsnummer : **0 102 325**
**B1**

(12) # EUROPÄISCHE PATENTSCHRIFT

(45) Veröffentlichungstag der Patentschrift : **21.01.87**

(51) Int. Cl.[4] : **C 09 B 29/01**, C 09 B 62/008, C 07 C147/12// D06P1/02

(21) Anmeldenummer : **83810341.4**

(22) Anmeldetag : **29.07.83**

(54) **Monoazofarbstoffe, deren Herstellung und Verwendung.**

(30) Priorität : **04.08.82 CH 4696/82**

(43) Veröffentlichungstag der Anmeldung : **07.03.84 Patentblatt 84/10**

(45) Bekanntmachung des Hinweises auf die Patenterteilung : **21.01.87 Patentblatt 87/04**

(84) Benannte Vertragsstaaten : **BE CH DE FR GB IT LI**

(56) Entgegenhaltungen :
**CH-A- 364 570**
**FR-A- 1 214 975**
**FR-A- 1 221 165**
**GB-A- 868 474**

(73) Patentinhaber : **CIBA-GEIGY AG**
**Klybeckstrasse 141**
**CH-4002 Basel (CH)**

(72) Erfinder : **Hurter, Rudolf**
**Laufenburgerstrasse 10/3**
**CH-4058 Basel (CH)**

**EP 0 102 325 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die der vorliegenden Erfindung zugrunde liegende Aufgabe war es, neue Monoazofarbstoffe zu finden, die zum Färben von natürlichen und synthetischen Polyamiden aus wässrigem Bad geeignet sind, die ferner Nuancen im Bereich Gelb bis Rot haben, und die ausserdem verbesserte Echtheitseigenschaften, insbesondere in der Lichtechtheit, aufweisen.

Es wurde nun gefunden, dass die Monoazofarbstoffe der Formel (1) den genannten Anforderungen genügen.

Gegenstand der vorliegenden Erfindung sind somit Monoazofarbstoffe der Formel

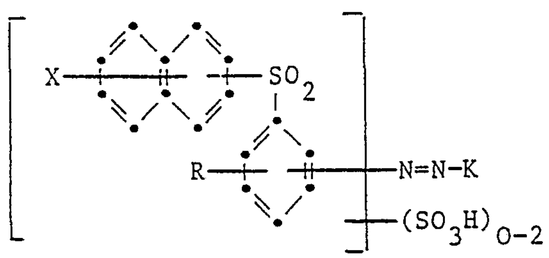

(1)

worin K der Rest eines Amino- oder Alkoxybenzols, Amino- oder Alkoxynaphthalins, Phenols, Naphthols, Aminonaphthols, Pyrazolons, Aminopyrazols, Pyridons, Pyrimidins, Indols, Diphenylamins, Acetessigsäureamids, Naphthimidazols, Tetrahydrochinolins oder Pyrazolo[2,3-a]pyrimidins ist, wobei die oben genannten Reste weitersubstituiert sein können, und R Wasserstoff, Halogen, Carboxy, ein $C_{1-6}$-Alkyl-, $C_{1-6}$-Alkoxy-, $C_{2-6}$-Alkanoylamino-, $C_{1-6}$-Alkylsulfonylamino-, $C_{1-6}$-Alkylsulfonyl-, Phenyl- oder Naphthyl-$C_{1-4}$-alkylsulfonyl- oder Benzoylrest, wobei die oben genannten Reste weitersubstituiert sein können, oder eine

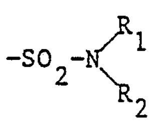 oder 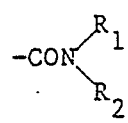

-Gruppe ist, worin $R_1$ und $R_2$ unabhängig voneinander Wasserstoff, einen $C_{1-6}$-Alkyl-, $C_{5-7}$-Cycloalkyl-, Phenyl- oder Naphthylrest bedeuten, wobei die genannten Reste weitersubstituiert sein können, und worin X Wasserstoff, Halogen oder ein $C_{1-6}$-Alkyl-, $C_{1-6}$-Alkoxy-, $C_{2-6}$-Alkanoylamino- oder $C_{1-6}$-Alkylsulfonylamino-Rest, der weitersubstituiert sein kann, ist, ausgenommen 3-Methyl-1-(m- oder p-sulfophenyl)-5-amino-pyrazol-4-azo-1′-[4′-naphthyl-(2″)-sulfonylbenzol] gemäss den Beispielen 36 und 37 der britischen Patentschrift 868 474, 3-Methyl-1-(m-sulfophenyl)-5-aminopyrazol-4-azo-1′-[2′-naphthyl-(2″)-sulfonylbenzol] gemäss Beispiel 24 der französischen Patentschrift 1 214 975, 3-Methyl-1-(3′-chlor-6′-sulfophenyl)-5-aminopyrazol-4-azo-1″-[2″-naphthyl-(2‴)-sulfonylbenzol] gemäss Beispiel 25 der französischen Patentschrift 1 214 975, und ausgenommen Monoazofarbstoffe der Formel (1), worin K als Aminonaphthalin- oder Aminonaphtholrest einen N-substituierten Sulfamoylrest enthält.

Der Rest K einer Kupplungskomponente kann die bei Azofarbstoffen üblichen Substituenten enthalten, z. B. Alkylgruppen mit 1 bis 4 Kohlenstoffatomen, wie Methyl, Aethyl, Propyl, Isopropyl, Butyl, Isobutyl, sek-Butyl und tert.-Butyl, Alkoxygruppen mit 1 bis 4 Kohlenstoffatomen, wie Methoxy, Aethoxy, Propyloxy, Isopropyloxy, Butyloxy, Isobutyloxy, sek.-Butyloxy und tert.-Butyloxy, Phenoxy, Alkanoylaminogruppen mit 1 bis 6 Kohlenstoffatomen, wie Acetylamino oder Propionylamino, Benzoylamino, Aminogruppen, wie $—NH_2$, Methylamino, Aethylamino, Dimethylamino, Diäthylamino, Cyanäthylamino, Hydroxyäthylamino, Di-hydroxyäthylamino, Cyclohexylamino, Benzylamino und Phenylamino, Carbonsäureestergruppen, wie Methoxycarbonyl und Aethoxycarbonyl, Trifluormethyl, Nitro, Cyan, Acetyl, Methylsulfonyl, Carbamoyl, Sulfamoyl, Ureido, Hydroxy, Carboxy, Sulfo, Sulfomethyl und Halogen, wie Fluor, Chlor und Brom, sowie faserreaktive Reste.

Bedeuten R und X Halogen, so kommt unabhängig voneinander beispielsweise ein Fluor-, Chlor- oder Bromatom in Betracht.

Bedeuten R, $R_1$, $R_2$ und X einen $C_{1-6}$-Alkylrest, so kommt unabhängig voneinander beispielsweise ein Methyl-, Aethyl-, Propyl-, Isopropyl-, Butyl-, Isobutyl, sec-Butyl-, tert.-Butyl-, Pentyl- oder Hexylrest in Betracht, der weitersubstituiert sein kann, z. B. durch Halogen, wie Fluor, Chlor oder Brom, Hydroxy, Sulfato, Sulfo, Carboxy, Cyano, $C_{1-4}$-Alkoxy, wie Methoxy, Aethoxy, Propoxy, Isopropoxy, Butoxy, sek.-Butoxy, Isobutoxy oder tert.-Butoxy, Alkanoylgruppen mit 1 bis 6 Kohlenstoffatomen, wie die Acetyl- oder Propionylgruppe, die Benzoylgruppe, Phenyl Naphthyl und Cycloalkyl, wie Cyclohexyl. Als Beispiele seien genannt : Methyl, Aethyl, β-Chloräthyl, β-Hydroxyäthyl, β-Cyanäthyl, Propyl, β-Sulfoäthyl, Isopropyl, n-Butyl, Pentyl, Trifluormethyl, Hexyl, Cyclohexylmethyl, Benzyl, Phenäthyl und Naphthylmethyl.

Bedeuten R und X einen $C_{1-6}$-Alkoxyrest, so kommt unabhängig voneinander ein Methoxy-, Aethoxy-, Propoxy-, Isopropoxy-, Butoxy-, sec.-Butoxy-, Isobutoxy-, tert.-Butoxy-, Pentyloxy- oder Hexyloxyrest in Betracht, der weitersubstituiert sein kann, wie z. B. durch Halogen, wie Fluor, Chlor oder Brom, Hydroxy, Carboxy und Sulfo.

Bedeuten R und X einen $C_{2-6}$-Alkanoylaminorest, so kommt unabhängig voneinander beispielsweise der Acetylamino-, Propionylamino- oder Butyrylaminorest in Betracht, der weitersubstituiert sein kann, wie z. B. durch Halogen, wie Fluor, Chlor oder Brom. Als Beispiel sei der β-Brompropionylaminorest genannt.

Bedeuten R und X einen $C_{1-6}$-Alkylsulfonylaminorest, so kommt unabhängig voneinander z. B. ein Methyl-, Aethyl-, Propyl-, Butyl- oder Hexyl-sulfonylaminorest in Betracht, der weitersubstituiert sein kann, z. B. durch Halogen, wie Fluor, Chlor oder Brom oder $C_{1-4}$-Alkoxy, wie Methoxy.

Bedeutet R einen $C_{1-6}$-Alkylsulfonylrest, so kommt beispielsweise ein Methyl-, Aethyl-, Propyl-, Isopropyl-, Butyl-, Isobutyl-, sec.-Butyl-, tert.-Butyl-, Pentyl- oder Hexyl-sulfonylrest in Betracht. Vorzugsweise bedeutet R den Methyl- oder Aethylsulfonylrest.

Bedeutet R einen Phenyl- oder Naphthyl-$C_{1-4}$-alkylsulfonylrest, so kommt beispielsweise der Benzyl-, Phenäthyl- oder Naphthylmethylsulfonylrest in Betracht, der im Arylteil weitersubstituiert sein kann, beispielsweise durch $C_{1-4}$-Alkylgruppen, wie Methyl, $C_{1-4}$-Alkoxygruppen wie Methoxy oder Aethoxy, Halogen, wie Fluor, Chlor oder Brom, Alkanoylaminogruppen mit 1 bis 6 Kohlenstoffatomen, wie Acetylamino, Hydroxy, Carboxy und Sulfo.

Bedeutet R einen Benzoylrest, so kann dieser substituiert sein, z. B. durch $C_{1-4}$-Alkylgruppen, wie Methyl, $C_{1-4}$-Alkoxygruppen, wie Methoxy und Aethoxy, Halogen, wie Fluor, Chlor und Brom, Alkanoylaminogruppen mit 1-6 Kohlenstoffatomen, wie Acetylamino, Hydroxy, Carboxy und Sulfo. Als Beispiele seien genannt : 4-Methyl-3-sulfobenzoyl, 4-Chlor-3-sulfobenzoyl.

Bedeuten $R_1$ und $R_2$ einen $C_{5-7}$-Cycloalkylrest, so kommt unabhängig voneinander ein Cyclopentyl-, Cyclohexyl- und Cycloheptylrest in Betracht, der weitersubstituiert sein kann, z. B. durch Halogen, wie Fluor, Chlor und Brom, $C_{1-4}$-Alkyl, wie Methyl, Aethyl, Propyl und Isopropyl, $C_{1-4}$-Alkoxy, wie Methoxy. Als Beispiel sei der Methylcyclohexylrest genannt.

Bedeuten $R_1$ und $R_2$ einen Phenyl- oder Naphthylrest, so kann dieser weitersubstituiert sein, beispielsweise durch $C_{1-4}$-Alkylgruppen, wie Methyl, Aethyl, Propyl, Isopropyl und Butyl, $C_{1-4}$-Alkoxygruppen, wie Methoxy und Aethoxy, Halogen, wie Fluor, Chlor und Brom, $C_{1-6}$-Alkanoylaminogruppen, wie Acetylamino, Hydroxy, Carboxy und Sulfo.

Bevorzugt sind die Monoazofarbstoffe der Formel (1), worin

a) der Rest —N=N—K in o- oder p-Stellung zur —$SO_2$-Gruppe an den Phenylring begunden ist,

b) 1 bis 3 Sulfonsäuregruppen im Molekül enthalten sind,

c) X Wasserstoff oder $C_{2-4}$-Alkanoylamino ist.

Die Monoazofarbstoffe der Formel (1) können in der Kupplungskomponente K durch faserreaktive Gruppen substituiert sein.

Geeignete Faserreaktivgruppen sind z. B. solche der aliphatischen Reihe, wie Acryloyl, Mono-, Di- oder Trichlor- bzw. Mono-, Di- oder Tribromacryloyl oder -metacryloyl, wie —CO—CH=CH—Cl, —CO—CCl=$CH_2$, —CO—CH=CHBr, —COCBr=$CH_2$, —CO—CBr=CHBr, —CO—CCl=CH—$CH_3$, ferner —CO—CCl=CH—COOH, —CO—CH=CCl—COOH, 3-Chlorpropionyl, 3-Phenylsulfonylpropionyl, 3-Methylsulfonylpropionyl, β-Sulfatoäthylaminosulfonyl, Vinylsulfonyl, β-Chloräthylsulfonyl, β-Sulfatoäthylsulfonyl, β-Methylsulfonyläthylsulfonyl, β-Phenylsulfonyläthylsulfonyl, 2-Fluor-2-chlor-3,3-difluorcyclobutan-1-carbonyl, 2,2,3,3-Tetrafluorcyclobutan-carbonyl-1 oder -sulfonyl-1, β-(2,2,3,3-Tetrafluorcyclobutyl-1)-acryloyl, α- oder β-Alkyl- oder -arylsulfonyl-acryloyl, wie α- oder β-Methylsulfonylacryloyl.

Besonders für synthetisches Polyamid und für Wolle geeignete Reaktivreste sind : Chloracetyl, Bromacetyl, α,β-Dichlor- oder α,β-Dibrompropionyl, α-Chlor- oder α-Bromacryloyl, 2,4-Difluor-5-chlorpyrimidyl-6, 2,4,6-Trifluoropyrimidyl-5, 2,4-Dichlor-5-methylsulfonylpyrimidyl-6, 2,4-Difluor-5-methyl-sulfonylpyrimidyl-6, 2,4-Difluortriazinyl-6, sowie Fluortriazinylreste der Formel

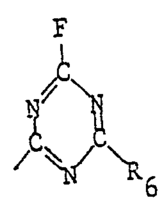

worin $R_6$ eine gegebenenfalls substituierte Aminogruppe oder eine gegebenenfalls verätherte Oxy- oder Thiogruppe bedeutet, wie z. B. die $NH_2$-Gruppe, eine mit $C_{1-4}$-Alkylresten mono- oder disubstituierte Aminogruppe, eine $C_{1-4}$-Alkoxygruppe, eine $C_{1-4}$-Alkylmercaptogruppe, Arylamino, insbesondere Phenylamino, oder mit Methyl, Methoxy, Chlor und vor allem Sulfo substituiertes Phenylamino, Phenoxy, Mono- oder Disulfophenyloxy etc., sowie die entsprechenden Chlortriazinylreste.

Ausgangsprodukte zur Einführung solcher Triazinreste sind z. B. 2,4-Difluor- oder 2,4-Dichlor-6-aminotriazin, 2,4-Difluor- oder 2,4-Dichlor-6-methylaminotriazin, 2,4-Difluor- oder 2,4-Dichlor-6-äthylami-

notriazin, 2,4-Difluor- oder 2,4-Dichlor-6-phenylaminotriazin, 2,4-Difluor- oder 2,4-Dichlor-6-(2',3'- oder 4'-sulfophenyl)-aminotriazin, 2,4-Difluor- oder 2,4-Dichlor-6-(2',4'- oder 3',4'- oder 2',5'- oder 4',5'-disulfophenyl)-aminotriazin, 2,4-Difluor- oder 2,4-Dichlor-6-dimethylaminotriazin, 2,4-Difluor- oder 2,4-Dichlor-6-methoxytriazin, 2,4-Difluor- oder 2,4-Dichlor-6-(β-methoxyäthoxy)-triazin, 2,4-Difluor- oder 2,4-Dichlor-6-methylmercaptotriazin, 2,4-Difluor- oder 2,4-Dichlor-6-phenylmercaptotriazin und 2,4,6-Trichlor- oder 2,4,6-Trifluortriazin.

Besonders bevorzugt sind die Monoazofarbstoffe der Formel (1), worin K ein N—$C_{1-4}$-Alkylamino- oder N,N-Di-$C_{1-4}$-alkylamino-benzolrest, der im Benzolring durch Methyl, Methoxy und Acetylamino substituiert sein kann, und worin die N-Alkylreste unabhängig voneinander durch Cyano, Hydroxy, Sulfo oder Phenyl substituiert sein können, ein $C_{1-2}$-Alkoxybenzolrest, der durch Methyl substituiert sein kann, ein Methoxynaphthalinrest, ein Phenolrest, der durch Methyl substituiert ist, ein Aminonaphthalinrest, der durch Sulfo substituiert sein kann, ein Hydroxynaphthalinrest, der durch Sulfo substituiert ist, ein Aminonaphtholrest, der im Naphthalinkern durch Sulfo substituiert ist, und worin die Aminogruppe durch Methyl, α,β-Dibrompropionyl, α,β-Dibrompropionylaminobenzoyl und 2,6-Difluor-5-chlor-pyrimidylaminobenzoyl substituiert sein kann, ein 1-Phenyl-3-methylpyrazolon-5-rest, der im Phenylrest durch Methyl, Aethyl und Chlor substituiert sein kann, ein 1-Phenyl-3-methylaminopyrazolrest, der im Phenylrest durch Chlor und Sulfo substituiert sein kann, ein 2-Methylindolrest, ein 1-Chlorphenylamino-2-pentyl-naphthimidazolrest, der im Naphthalinkern durch Hydroxy und Sulfo substituiert ist, ein 1-Aethyl-4-methyl-3-carbamoyl-6-hydroxypyridon-(2)-rest, ein N-Methyl- oder N-Aethyl-1,2,3,4-tetrahydrochinolinrest oder ein 2,4,6-Triaminopyrimidinrest ist, und worin R Wasserstoff, Chlor, Methyl, Methoxy, Carboxy, Trifluormethyl, Acetylamino, $C_{1-2}$-Alkylsulfonyl, eine

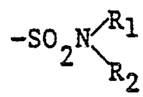 oder 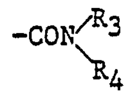

-Gruppe, worin $R_1$ Wasserstoff oder Methyl, $R_2$ Wasserstoff, $C_{1-2}$-Alkyl, Cyclohexyl, β-Hydroxyäthyl, β-Sulfoäthyl, Sulfophenyl, das durch Methyl, Methoxy, Chlor, Acetylamino und Carboxy substituiert sein kann, Disulfophenyl, und Mono- oder Disulfonaphthyl, $R_3$ Wasserstoff oder Methyl und $R_4$ Wasserstoff, Methyl, β-Sulfoäthyl oder Sulfophenyl bedeutet, oder ein Benzoylrest ist, der im Benzolkern durch Sulfo substituiert ist und durch Chlor oder Methyl weitersubstituiert sein kann, und worin X Wasserstoff oder Acetylamino ist.

Insbesondere bevorzugt sind die Monoazofarbstoffe der Formel (1), worin

a) K ein N,N-Di-$C_{1-4}$-alkylaminobenzolrest, der im Benzolring durch Methyl, Methoxy und Acetylamino substituiert sein kann und worin die N-Alkylreste unabhängig voneinander durch Cyano, Hydroxy, Sulfo oder Phenyl substituiert sein können, ein 1-Phenyl-3-methylaminopyrazolrest, der im Phenylrest durch Chlor und Sulfo substituiert sein kann, oder ein 2-Methylindolrest ist,

b) X Wasserstoff ist,

c) R in o- oder p-Stellung zur —$SO_2$-Gruppe an den Phenylkern gebunden ist.

Besonders bevorzugt sind ferner die Monoazofarbstoffe der Formel

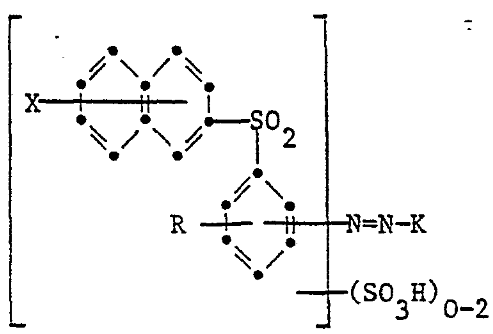

(2)

worin K, R und X die oben angegebenen Bedeutungen haben.

Insbesondere bevorzugt sind die Monoazofarbstoffe der Formel

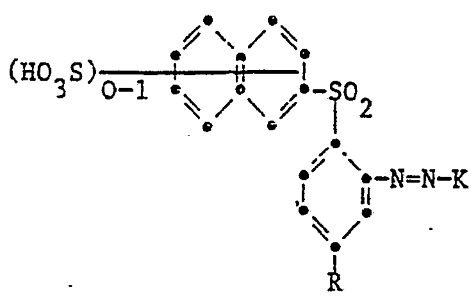

(3)

worin K ein 3-Methyl-N,N-diäthylanilinrest, 3-Methyl-N,N-di-n-butylanilinrest, ein 1-Phenyl-3-methyl-5-aminopyrazolrest, ein 1-(2'-Chlor-5'-sulfophenyl)-3-methyl-5-aminopyrazolrest oder ein 2-Methylindolrest und R Chlor, Trifluormethyl, Sulfo oder $—SO_2NH_2$ ist, wobei der Monoazofarbstoff der Formel (3) nur eine Sulfogruppe enthält.

Gegenstand der Erfindung ist ferner ein Verfahren zur Herstellung der Monoazofarbstoffe der Formel (1). Das Verfahren ist dadurch gekennzeichnet, dass man eine Diazokomponente der Formel

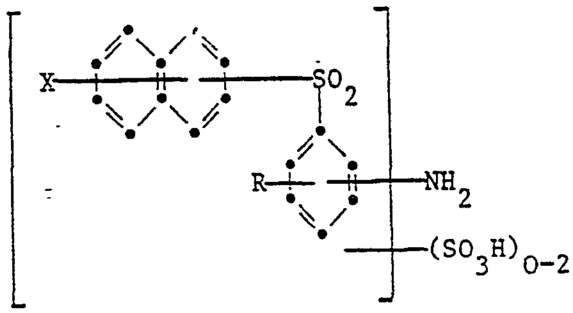 (4)

diazotiert und auf eine Kupplungskomponente der Formel

$$H—K \qquad (5)$$

kuppelt, worin K, R und X in den Formeln (4) und (5) die unter Formel (1) angegebenen Bedeutungen haben.

Die Diazotierung der Diazokomponenten der Formel (4) erfolgt in der Regel durch Einwirkung salpetriger Säure in wässrig-mineralsaurer Lösung bei tiefer Temperatur, die Kupplung auf die Kupplungskomponente der Formel (5) bei sauren, neutralen bis alkalischen pH-Werten.

Gegebenenfalls kann eine freie Aminogruppe im Rest K nach der Kupplung mit einem Acylierungs- oder Alkylierungsmittel in eine Acylamino- oder Alkylaminogruppe umgewandelt werden, und ebenso kann eine Hydroxygruppe im Rest K durch Alkylierung in eine Alkoxygruppe übergeführt werden.

Die Azofarbstoffe der Formel (1), die einen faserreaktiven Rest enthalten, werden hergestellt, indem man eine Diazokomponente der Formel (4), eine Kupplungskomponente der Formel (5), die eine acylierbare Amino- oder Hydroxygruppe enthält, und ein Acylierungsmittel, das einen faserreaktiven Rest enthält, in beliebiger Reihenfolge miteinander umsetzt.

Vorzugsweise werden als Kupplungskomponenten, die eine acylierbare Gruppe enthalten, solche der Benzol- oder Naphthalinreihe verwendet.

Bevorzugte Verfahrensvarianten sind dadurch gekennzeichnet, dass man eine Diazokomponente der Formel (4) verwendet, worin

a) die $NH_2$-Gruppe in o- oder p-Stellung zur $—SO_2$-Gruppe an den Phenylring gebunden ist,

b) X Wasserstoff oder $C_{1-4}$-Alkanoylamino ist.

Vorzugsweise verwendet man Diazokomponenten der Formel (4) und Kupplungskomponenten der Formel (5), die zusammen 1 bis 3 Sulfonsäuregruppen enthalten.

Die besonders bevorzugten Monoazofarbstoffe der Formel (1) werden hergestellt, indem man eine Diazokomponente der Formel (4), worin R Wasserstoff, Chlor, Methyl, Carboxy, Trifluormethyl, Acetylamino, $C_{1-2}$-Alkylsulfonyl, eine

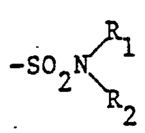 – oder 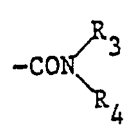

-Gruppe, wobei $R_1$ Wasserstoff oder Methyl, $R_2$ Wasserstoff, $C_{1-2}$-Alkyl, Cyclohexyl, β-Hydroxyäthyl, β-Sulfoäthyl, Sulfophenyl, das durch Methyl, Methoxy, Chlor, Acetylamino und Carboxy substituiert sein kann, Disulfophenyl, und Mono- oder Disulfonaphthyl, $R_3$ Wasserstoff oder Methyl und $R_4$ Wasserstoff, Methyl, β-Sulfoäthyl oder Sulfophenyl bedeutet, oder ein Benzoylrest ist, der im Benzolkern durch Sulfo substituiert ist und durch Chlor oder Methyl weitersubstituiert sein kann, und worin X Wasserstoff oder Acetylamino ist, diazotiert und auf eine Kupplungskomponente der Formel (5) kuppelt, worin K ein N—$C_{1-4}$-Alkylamino- oder N,N-Di-$C_{1-4}$-alkylamino-benzolrest, der im Benzolring durch Methyl, Methoxy und Acetylamino substituiert sein kann, und worin die N-Alkylreste unabhängig voneinander durch Cyano, Hydroxy, Sulfo oder Phenyl substituiert sein können, ein Phenolrest, der durch Methyl substituiert ist, ein Aminonaphthalinrest, der durch Sulfo substituiert sein kann, ein Hydroxynaphthalinrest, der durch Sulfo substituiert ist, ein Aminonaphtholrest, der im Naphthalinkern durch Sulfo substituiert ist, und worin die Aminogruppe durch Methyl, α,β-Dibrompropionyl, α-β-Dibrompropionylaminobenzoyl und 2,6-Difluor-5-chlor-pyrimidylaminobenzoyl substituiert sein kann, ein 1-Phenyl-3-methylpyrazolon-5-rest, der im

Phenylrest durch Methyl, Aethyl und Chlor substituiert sein kann, ein 1-Phenyl-3-methylaminopyrazolrest, der im Phenylrest durch Chlor und Sulfo substituiert sein kann, ein 2-Methylindolrest, ein 1-Chlorphenylamino-2-pentyl-naphthimidazolrest, der im Naphthalinkern durch Hydroxy und Sulfo substituiert ist, ein 1-Aethyl-4-methyl-3-carbamoyl-6-hydroxypyridon-(2)-rest, ein N-Methyl- oder N-Aethyl-1,2,3,4-tetrahydrochinolinrest oder ein 2,4,6-Triaminopyrimidinrest ist.

Insbesondere verwendet man Diazokomponenten der Formel (4), worin

a) X Wasserstoff ist,

b) R in o- oder p-Stellung zur $—SO_2$-Gruppe an den Phenylring gebunden ist ; und

Kupplungskomponenten der Formel (5), worin K ein N,N-Di-$C_{1-4}$-alkylaminobenzolrest, der im Benzolring durch Methyl, Methoxy und Acetylamino substituiert sein kann und worin die N-Alkylreste unabhängig voneinander durch Cyano, Hydroxy, Sulfo oder Phenyl substituiert sein können, ein 1-Phenyl-3-methylaminopyrazolrest, der im Phenylrest durch Chlor und Sulfo substituiert sein kann, oder ein 2-Methylindolrest ist.

Vorzugsweise verwendet man ferner Diazokomponenten der Formel

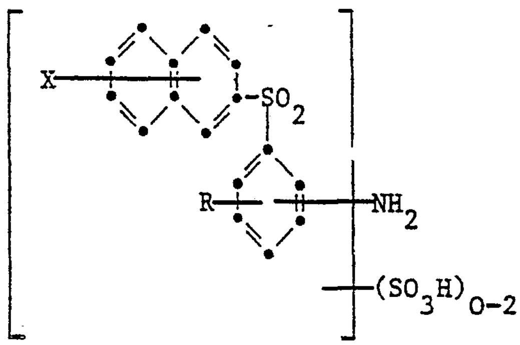

(6)

worin R und X die angegebenen Bedeutungen haben.

Die besonders bevorzugten Monoazofarbstoffe der Formel (3) werden erhalten, indem man eine Diazokomponente der Formel

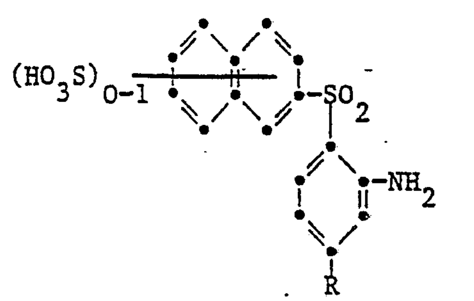

(7)

worin R Chlor, Trifluormethyl, Sulfo oder $—SO_2NH_2$ ist, die höchstens eine Sulfogruppe enthält, diazotiert und auf eine Kupplungskomponente der Formel (5) kuppelt, worin K ein 3-Methyl-N,N-diäthylanilinrest, ein 3-Methyl-N,N-di-n-butylanilinrest, ein 1-Phenyl-3-methyl-5-aminopyrazolrest, ein 1-(2′-Chlor-5′-sulfophenyl)-3-methyl-5-aminopyrazolrest oder ein 2-Methylindolrest ist, mit der Massgabe, dass der gebildete Monoazofarbstoff nur eine Sulfogruppe enthält.

Eine Verfahrensvariante betrifft die Herstellung von Mischungen der Monoazofarbstoffe der Formeln

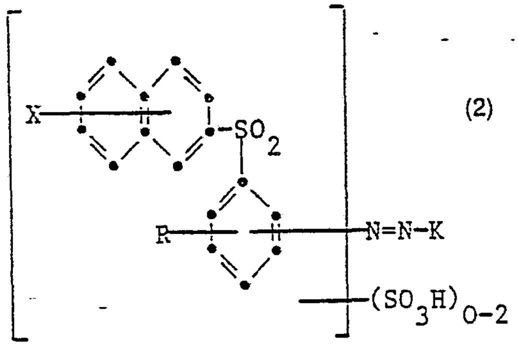

(2) und

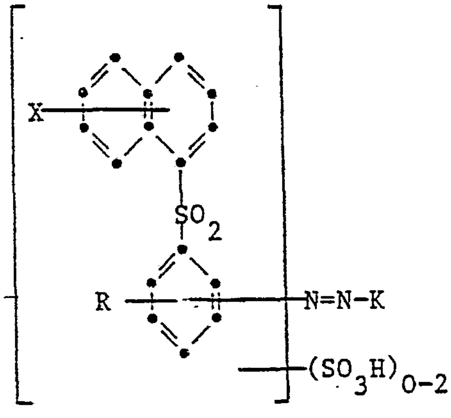

(8)

worin K, R, und X die unter Formel (1) angegebenen Bedeutungen haben. Das Verfahren ist dadurch gekennzeichnet, dass man eine Mischung der Diazokomponenten der Formeln

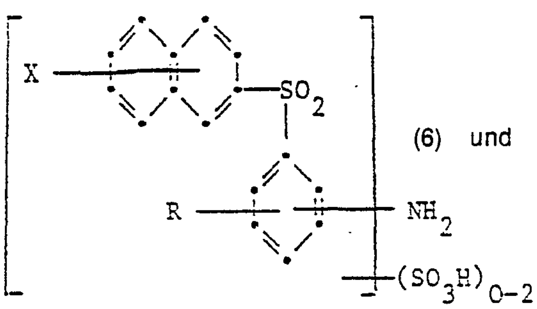
(6) und
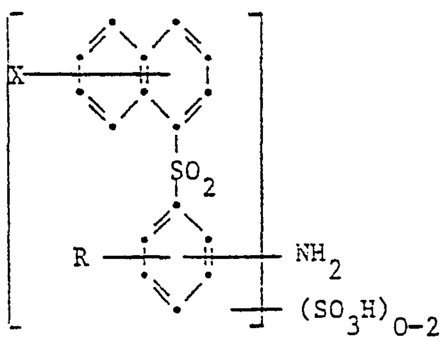
(9)

diazotiert und auf eine Kupplungskomponente der Formel (5) kuppelt.

Aus der grossen Zahl möglicher Kupplungskomponenten seien folgende als Beispiele genannt :

Anilin, Dimethylanilin, Diäthylanilin, 3-Methyl-dimethylanilin, 3-Methyl-dibutylanilin, 3-Methyl-diäthylanilin, 3-Acetylamino- oder 3-Methoxycarbonylamino- oder 3-Ureido-dimethylanilin, 3-Methyl-6-methoxy-diäthylanilin, 3-Methyl-N-äthyl-N-butylanilin, 2,5-Dimethoxy-diäthylanilin, N-Aethyl-N-benzylanilin, N-Aethyl-N-(β-cyanäthyl)-anilin, N-Aethyl-N-(β-hydroxyäthyl)-anilin, N-Aethyl-N-(β-acetoxyäthyl)-anilin, N,N-Dibutylanilin, 3-Acetylamino-N,N-diäthylanilin, N-Methyl-N-(β-cyanäthyl)-anilin, 3-Methyl-N,N-di-(β-cyanäthyl)-anilin, 3-Chlor-N,N-dimethylanilin, 3-Methyl-N-äthyl-N-benzylanilin, N,N-Di-n-propylanilin, 3-Acetylamino-N,N-di-(β-hydroxyäthyl)-anilin, 3-Methyl-N,N-di-(β-acetoxyäthyl)-anilin, 3-Methyl-N-äthyl-N-(3'-sulfobenzyl)-anilin, N-Aethyl-N-(β-chloräthyl)-anilin, 2-Methoxy-5-acetylamino-N-benzylanilin, 2-Methoxy-5-acetylamino-N-(β-acetoxyäthyl)-N-benzylanilin, 3-Methyl-N,N-dibutylanilin, 3-Methyl-N-äthyl-N-(β-cyanäthyl)-anilin, 2-Methyl-5-acetylamino-N,N-dimethylanilin, 2-Chlor-5-acetylamino-N,N-dimethylanilin, 2-Chlor-5-acetylamino-N-(γ-phenoxy-β-hydroxy-n-propyl)-anilin, 3-Ureidoanilin, N-Aethyl-N-(β-hydroxyäthyl)-anilin, N-Aethyl-N-(3'-sulfobenzyl)-anilin, 3-Methyl-N-äthyl-(β-sulfoäthyl)-anilin, 3-Benzoylamino-N,N-diäthylanilin, 3-(p-Tolylsulfamoyl)-N,N-diäthylanilin, 3-(p-Chlorbenzoylamino)-N,N-diäthylanilin, 3-Methoxy-N,N-diäthylanilin, 3-Methyl-N,N-di-(β-hydroxyäthyl)-anilin,3-Methyl-6-methoxy-N,N-di-(β-hydroxyäthyl)-anilin,3-Acetylaminoanilin, 3-Methyl-N-äthyl-N-phenäthylanilin, N,N-Di-(β-cyanäthyl)-anilin, 3-Acetylamino-N,N-di-(β-cyanäthyl)-anilin, 3-Methyl-N-äthyl-N-(β-hydroxyäthyl)-anilin, 3-Methyl-N-äthyl-N-(β-cyanäthyl)-anilin, N-(β-cyanäthyl)-anilin, N-Methyl-N-benzylanilin, Phenol, 3-Methylphenol, 3,4-Dimethylphenol, 2-Phenylphenol, 1-Hydroxy-4-methoxybenzol, 1-Hydroxy-4-tert.-butylbenzol, 1-Hydroxy-7-amino-3-sulfonaphthalin, 1-Hydroxy-7-methylamino- oder 7-phenylamino-3-sulfonaphthalin, 2-Aminonaphthalin, 2-Amino-6-sulfonaphthalin, 2-Amino-5-acetylaminomethylnaphthalin, β-Naphthol, 1-Hydroxy-8-amino-3,6- oder -3,5-disulfonaphthalin, 1-Hydroxy-8-benzoylamino-3,6- oder -3,5-disulfonaphthalin, 1-Hydroxy-8-ureido-3,6- oder -3,5-disulfonaphthalin, 1-Hydroxy-8-acetylamino-3,6- oder -3,5-disulfonaphthalin, 1-(3'-Chlorphenyl)-3-methylpyrazolon-5, 1-(2'-Chlor-6'-methylphenyl)-3-methylpyrazolon-5, 1-Phenyl-3-methylpyrazolon-5, 1-(2',3'- oder 4'-sulfophenyl)-3-methylpyrazolon-5, 1-(2'-Chlor-4'- oder 5'-Sulfophenyl)-3-methylpyrazolon-5, 1-(3'- oder 4'-Dibrompropionylamino)-benzoylamino-8-hydroxy-3,6- oder -4,6-disulfonaphthalin, 2-α,β-Dibrompropionylamino-1-hydroxy-6-sulfonaphthalin, 3-N-α,β-Dibrompropionyl-N-methylamino-8-hydroxy-6-sulfonaphthalin, 1-[3'-(2",4"-Difluor-5"-chlorpyrimidylamino)-benzoylamino]-8-hydroxy-4,6-disulfonaphthalin, 1-(2'-Methyl-4'-sulfophenyl)-3-methylpyrazolon-5, 1-[4',8'-Disulfonaphthyl-(2)]-3-methylpyrazolon-5, 1-[5',7'-Disulfonaphthalin-(2)]-3-methylpyrazolon-5, 1-(2'-Chlor-5'-sulfophenyl)-3-methyl-5-aminopyrazol, 1-(2'-Chlor-4'-sulfophenyl)-3-methyl-5-aminopyrazol, 1-(3'- oder 4'-Sulfophenyl)-3-methyl-5-aminopyrazol, 1-Aethyl-3-cyano-4-methyl-6-hydroxypyridon-2, 1-Aethyl-3-carbamoyl-4-methyl-6-hydroxy-pyridon-2, 1-Aethyl-4-methyl-6-hydroxy-pyridon-2, 1-Aethyl-4-methyl-3-methylsulfonyl-6-hydroxy-pyridon-2, 2-Methylindol, 2-Phenylindol, 1-Methyl-2-phenylindol, 1-Octyl-2-methylindol, 2,4,6-Triaminopyrimidin, N-Methyl-N,N-diphenylamin, Acetessigsäureanilid, 1-(4'-Methylphenyl)-3-methylpyrazolon-5, 1-Aethyl-2-methylindol, 1-Phenyl-3-methyl-5-aminopyrazol, 7-Amino-2,5-dimethyl-pyrazol[2,3-a]pyrimidin, 1-Hydroxynaphthalin, 1-Hydroxy-4-sulfonaphthalin, 1-(2'-Chlorphenylamino)-9-hydroxy-2-methyl-1H-naphthol[1,2-d]imidazol-7-sulfonsäure, 1-(2'-Chlorphenylamino)-9-hydroxy-2-pentyl-1H-naphtho(1.2-d)imidazol-7-sulfonsäure, 3-Methyl-N-äthyl-N-propylanilin, N-Methyl- oder N-Aethyl-1,2,3,4-tetrahydrochinolin.

Die vorliegende Erfindung betrifft ebenfalls die als Diazokomponenten verwendeten Verbindungen der Formel

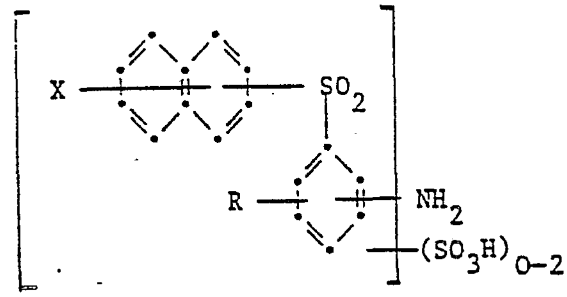

(4)

worin R Wasserstoff, Halogen, Carboxy, ein $C_{1-6}$-Alkyl-, $C_{1-6}$-Alkoxy-, $C_{2-6}$-Alkanoylamino-, $C_{1-6}$-Alkylsulfonylamino-, $C_{1-6}$-Alkylsulfonyl-, Phenyl- oder Naphthyl-$C_{1-4}$-alkylsulfonyl- oder Benzoylrest, wobei die obengenannten Reste weitersubstituiert sein können, oder eine

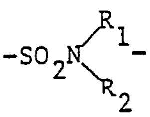 oder 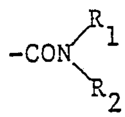

-Gruppe ist, worin $R_1$ und $R_2$ unabhängig voneinander Wasserstoff, einen $C_{1-6}$-Alkyl-, $C_{5-7}$-Cycloalkyl-, Phenyl- oder Naphthylrest bedeuten, wobei die genannten Reste weitersubstituiert sein können, und worin X Wasserstoff, Halogen oder ein $C_{1-6}$-Alkyl, $C_{1-6}$-Alkoxy-, $C_{2-6}$-Alkanoylamino- oder $C_{1-6}$-Alkylsulfonylamino-Rest, der weitersubstituiert sein kann, ist, ausgenommen 4-Amino-1-[naphthyl-(2')-sulfonyl]-benzol gemäss Beispiel 36 der britischen Patentschrift 868 474, 2-Amino-1-[naphthyl-(2')-sulfonyl]-benzol gemäss Beispiel 24 der französischen Patentschrift 1 214 975 und 2-Amino-1-[sulfonaphthyl-(2')-sulfonyl]-benzol gemäss Beispiel 35 der französischen Patentschrift 1 221 165.

Bevorzugt sind Verbindungen der Formel (4), worin

a) die $NH_2$-Gruppe in o- oder p-Stellung zur $SO_2$-Gruppe an den Phenylring gebunden ist,

b) X Wasserstoff oder $C_{1-4}$-Alkanoylamino ist.

Besonders bevorzugt sind Verbindungen der Formel (4), worin R Wasserstoff, Chlor, Methyl, Methoxy, Carboxy, Trifluormethyl, Acetylamino, $C_{1-2}$-Alkylsulfonyl, eine

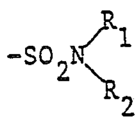 oder 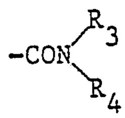

-Gruppe, wobei $R_1$ Wasserstoff oder Methyl, $R_2$ Wasserstoff, $C_{1-2}$-Alkyl, Cyclohexyl, β-Hydroxyäthyl, β-Sulfoäthyl, Sulfophenyl, das durch Methyl, Methoxy, Chlor, Acetylamino und Carboxy substituiert sein kann, Disulfophenyl, und Mono- oder Disulfonaphthyl, $R_3$ Wasserstoff oder Methyl und $R_4$ Wasserstoff, Methyl, β-Sulfoäthyl oder Sulfophenyl bedeutet, oder ein Benzoylrest ist, der im Benzolkern durch Sulfo substituiert ist und durch Chlor oder Methyl weitersubstituiert sein kann, und worin X Wasserstoff oder Acetylamino ist.

Vorzugsweise bedeutet X Wasserstoff. Der Rest R ist vorzugsweise in o- oder p-Stellung zur $—SO_2$-Gruppe an den Phenylring gebunden.

Bevorzugt sind ferner die Verbindungen der Formel

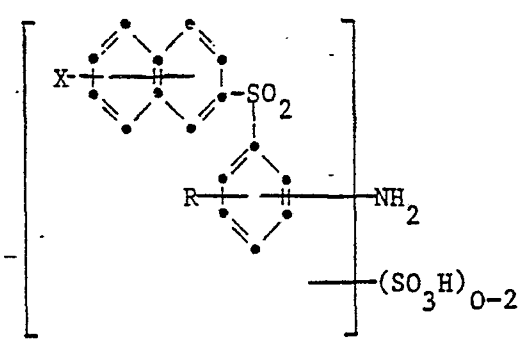

(6)

worin R und X die angegebenen Bedeutungen haben.

Insbesondere bevorzugt sind die Verbindungen der Formel

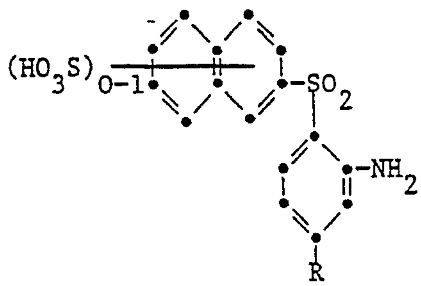

(7)

worin R Chlor, Trifluormethyl, Sulfo oder $-SO_2NH_2$ ist und die Verbindung der Formel (7) höchstens eine Sulfogruppe enthält.

Die Verbindungen der Formel (4) werden hergestellt, indem man eine Verbindung der Formel

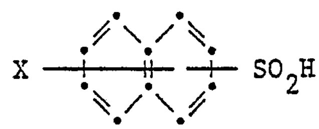

(10)

worin X die unter Formel (4) angegebene Bedeutung hat, mit einer Verbindung der Formel

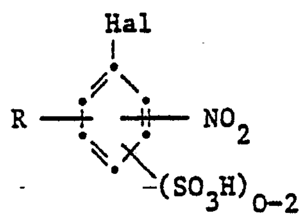

(11)

worin Hal Halogen bedeutet und R die unter Formel (4) angegebene Bedeutung hat, umsetzt, das Reaktionsprodukt gegebenenfalls sulfoniert und die Nitrogruppe zur Aminogruppe reduziert.

Die Verbindungen der Formeln (10) und (11) sind an sich bekannt und können nach bekannten Methoden erhalten werden.

Die Verfahrensweisen zur Herstellung der Verbindungen der Formel (4) sind an sich bekannt. Die Umsetzungen erfolgen bei Temperaturen zwischen 0 und 150 °C, gegebenenfalls unter Druck in wässriger Lösung oder Gemischen aus organischen Lösungsmitteln wie z. B. Aceton und Wasser und bei pH-Werten zwischen 7 und 10. Die Reduktion der Nitrogruppe erfolgt ebenfalls nach an sich bekannten Methoden, wie z. B. in Eisessig in Gegenwart von Eisenpulver. Die Einführung der Sulfonsäuregruppen erfolgt nach an sich bekannten Methoden, wie z. B. in 25 %igem Oleum bei Temperaturen zwischen 0 und 100 °C.

Als Ausgangsverbindungen der Formel (11) seien beispielsweise genannt :

4-Chlor-3-nitrophenyläthylsulfon, 4-Chlor-3-nitrobenzol-1-sulfamid, 4-Chlor-3-nitrobenzoesäureamid, 1,2-Dichlor-3-nitrobenzol, 4,4'-Dichlor-3-nitrobenzophenon, p-Nitrochlorbenzol, 1,4-Dichlor-2-nitrobenzol, o-Nitrochlorbenzol, 4-Chlor-3-nitrobenzolsulfonsäure-N,N-dimethylamid, 4-Chlor-3-nitrobenzol-1-sulfonsäure-N-methylamid, 4-Chlor-3-nitrobenzol-1-sulfonsäure-N,N-diäthylamid, 4-Chlor-3-nitrobenzol-1-sulfonsäure-N-äthyl-, propyl-, isopropyl-, butyl-, sec.-butyl-, isobutyl-, tert.-butyl-, pentyl-, hexyl- oder cyclohexyl-amid, 4-Chlor-3-nitro-benzol-1-sulfonsäure-N-methyl-N-cyclohexylamid, 4-Chlor-3-nitrobenzol-1-sulfonsäure-N-β-hydroxyäthyl- oder β-methoxyäthyl-amid, 4-Chlor-3-nitrobenzol-1-sulfonsäure-N-methyl-N-β-hydroxyäthylamid, 4-Chlor-3-nitrobenzoesäure-N-methyl-, äthyl-, propyl-, oder butyl-amid, 4-Chlor-3-nitrobenzoesäure-N,N-di-methyl-, äthyl-, propyl- oder isopropylamid, 4-Chlor-3-nitrobenzoesäure-N-methyl-N-cyclohexylamid, 4-Chlor-3-nitrophenylbenzylsulfon, 4-Chlor-3-nitrophenylmethylsulfon, 4-Chlor-3-nitrobenzophenon, 4-Chlor-3-nitro-1-trifluormethylbenzol, 4-Chlor-3-nitrotoluol, 4-Chlor-3-nitrobenzoesäure, 4-Chlor-3-nitrobenzolsulfonsäure, 2-Nitro-5-chlorbenzolsulfonsäure, 4-Chlor-3-nitrobenzoesäure-p-sulfoanilid, 4-Chlor-3-nitro-4'-methyl-3'-sulfobenzophenon, 4-Chlor-3-nitrobenzolsulfonsäure-N-β-sulfoäthylamid, 4-Chlor-3-nitrobenzolsulfonsäure-N-methyl-N-β-sulfoäthylamid, 4-Chlor-3-nitrobenzolsulfonsäure-o-sulfo- oder m-sulfo-anilid, 4-Chlor-3-nitrobenzolsulfonsäure-2'-carboxy-4'-sulfoanilid, 4-Chlor-3-nitrobenzolsulfonsäure-4'-acetylamino-3'-sulfoanilid, 4-Chlor-3-nitrobenzolsulfonsäure-2'-chlor- oder 2'-methyl- oder 2'-methoxy-4'-sulfo- oder 5'-sulfoanilid, 4-Chlor-3-nitrobenzolsulfonsäure-2',5'-disulfoanilid, 4-Chlor-3-nitribenzolsulfonsäure-N-1'-sulfo- oder 1',5'-disulfonaphthyl-(2)-amid, 4-Chlor-3-nitro-4'-chlor-3'-sulfobenzophenon, 4-Chlor-3-nitrobenzoesäure-o-sulfo- oder -sulfoanilid, 4-Chlor-3-nitrobenzoesäure-N-β-sulfoäthylamid, 4-Chlor-3-nitrobenzoesäure-N-methyl-N-β-

sulfoäthylamid, 2-Nitro-5-Chlorbenzolsulfonsäure, 4-Acetylamino-2-nitro-1-chlorbenzol, 4-Chlor-3-nitrotoluol, 4-Chlor-3-nitrobenzoesäureamid.

Als Ausgangsverbindungen der Formel (10) seien beispielsweise genannt : Naphthalin-1-sulfinsäure, Naphthalin-2-sulfinsäure, 6-Acetylamino-naphthalin-2-sulfinsäure.

Als Beispiele für die Verbindungen der Formel (4) seien genannt : 2-Amino-4-sulfophenyl-(1)-naphthyl-(2')-sulfon, 4-Amino-3-sulfophenyl-(1)-naphthyl-(2')-sulfon, 4-Aminophenyl-(1)-sulfonaphthyl-(2')-sulfon, 2-Amino-5-chlorphenyl-(1)-sulfonaphthyl-(2')-sulfon, 2-Amino-4-sulfamoylphenyl-(1)-naphthyl-(2')-sulfon, 2-Aminophenyl-(1)-naphthyl-(2')-sulfon-4-carbonsäure-4''-sulfoanilid, 2-Amino-(4(4''-methyl-3''-sulfophenyl)-carbonyl-phenyl-(1)-naphthyl-(2')-sulfon, 2-Amino-4-sulfophenyl-(1)-naphthyl-(1')-sulfon, 2-Amino-4-trifluormethylphenyl-(1)-disulfonaphthyl-(2')-sulfon, 2-Amino-4-chlorphenyl-(1)-sulfonaphthyl-(2')-sulfon, 4-Aminophenyl-(1)-naphthyl-(2')-sulfon, 2-Aminophenyl-(1)-naphthyl-(2')-sulfon-4-sulfonsäure-N-β-sulfoäthyl- oder N-Methyl-N-β-sulfoäthylamid, 2-Aminophenyl-(1)-naphthyl-(2')-sulfon-4-sulfonsäure-o, m oder p-sulfoanilid, 2-Aminophenyl-(1)-naphthyl-(2')-sulfon-4-sulfonsäure-(2''-carboxy-4''-sulfo, 4''-acetylamino-3''-sulfo, 2''-chlor-5''-sulfo, 2''-methyl-4''-sulfo oder 2''-methoxy-5''-sulfo)-anilid, 2-Aminophenyl-(1)-naphthyl-(2')-sulfon-4-sulfonsäure-2'',5''-disulfoanilid, 2-Aminophenyl-(1)-naphthyl-(2')-sulfon-4-sulfonsäure-N-1''-sulfonaphthylamid, 2-Aminophenyl-(1)-naphthyl-(2')-sulfon-4-sulfonsäure-N-1'',5''-disulfonaphthyl-(2'')-amid, 2-Aminophenyl-(1)-naphthyl-(2')-sulfon-4(4''-chlor-3''-sulfophenyl)-carbonyl, 2-Aminophenyl-(1)-naphthyl-(2')-sulfon-4-carbonsäure-N-, o-, m- oder p-sulfophenylamid, 2-Aminophenyl-(1)-naphthyl-(2')-sulfon-4-carbonsäure-N-β-sulfoäthyl- oder N-methyl-N-β-sulfoäthylamid, 4-Amino-3-sulfophenyl-(1)-naphthyl-(2')-sulfon, 2-Amino-6-chlorphenyl-(1)-naphthyl-(2')-sulfon, 2-Aminophenyl-(1)-naphthyl-(2')-sulfon-4-sulfonsäure-N-methyl- oder N,N-dimethyl- oder N-methyl-N-β-hydroxyäthyl- oder N-methyl-N-cyclohexyl-amid, 2-Aminophenyl-(1)-naphthyl-(2')-sulfon-4-methyl- oder äthylsulfon, 4-Amino-2-chlorphenyl-(1)-naphthyl-(2')-sulfon, 4-Amino-3-trifluormethylphenyl-(1)-naphthyl-(2')-sulfon, 2-Amino-4-methylphenyl-(1)-naphthyl-(2')-sulfon, 2-Amino-4-methylphenyl-(1)-sulfonaphthyl-(2')-sulfon, 4-Amino-3-methoxyphenyl-(1)-sulfonaphthyl-(2')-sulfon, 2-Amino-4-sulfamoylphenyl-(1)-sulfonaphthyl-(2')-sulfon, 2-Aminophenyl-(1)-sulfo- oder disulfonaphthyl-(2')-sulfon-4-sulfonsäure-N-methyl- oder N,N-dimethyl- oder N-äthyl- oder N-β-hydroxyäthyl- oder N-methyl-N-β-hydroxyäthyl- oder N-cyclohexyl- oder N-β-sulfoäthyl- oder N-p-sulfophenyl-amid, 2-Amino-4-carboxyphenyl-(1)-sulfo- oder disulfonaphthyl-(2')-sulfon, 2-Amino-4-sulfophenyl-(1)-6'-acetylaminonaphthyl-(2')-sulfon, sowie die entsprechenden Aminophenyl-(1)-naphthyl-(1')-sulfone.

Die erfindungsgemässen Farbstoffe der Formel (1) liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Die Farbstoffe der Formel (1) eignen sich zum Färben und Bedrucken von Amidgruppen enthaltenden Materialien, wie Textilfasern, Textilfäden und -geweben aus Wolle, Seide und Polyurethanfasern, insbesondere aber zum Färben und Bedrucken von synthetischem Polyamid, wobei die üblichen Färbeverfahren angewendet werden.

Sie zeichnen sich aus durch Brillanz und Farbstärke, sehr gutes Auszieh- und Aufbauvermögen, und sie ergeben egale Färbungen von allgemein guten Echtheiten, wie Reibechtheit, Säure- und Alkaliechtheit, Nassechtheiten, insbesondere Wasch-, Wasser-, Heisswasser- und Schweissechtheit. Insbesondere hervorzuheben ist die sehr gute Lichtechtheit und die sehr gute Beständigkeit gegenüber Formaldehyd.

Aus der GB-A-868 474 und der FR-A-1 214 975 sind ähnliche Monoazofarbstoffe bekannt, die jedoch nicht alle guten Eigenschaften der erfindungsgemässen Monoazofarbstoffe aufweisen. Aus der FR-A-1 221 165 sind Monoazofarbstoffe bekannt, die sich in charakteristischer Weise von den erfindungsgemässen Monoazofarbstoffen dadurch unterscheiden, dass die Kupplungskomponente einen N-substituierten Sulfamoylrest enthält.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1

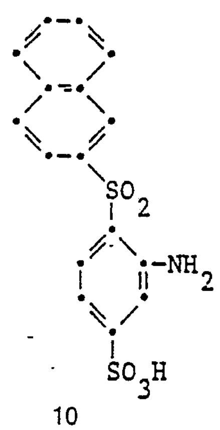

120,5 g Naphthalin-2-sulfonsäure Na-Salz (95,5 %ig) werden in 188 ml Dimethylformamid suspendiert und mit 39 ml Thionylchlorid versetzt. Nach 10 min rühren wird die Lösung auf 500 g Eis ausgetragen. Man filtriert nach einiger Zeit den Niederschlag ab, wäscht mit Eiswasser und trocknet im Exsikkator über Phosphorpentoxid. Man erhält 114,9 g Säurechlorid mit dem Smp. von 73-74°.

85 ml Natriumbisulfitlösung (40 %ig) werden mit 260 ml Wasser verdünnt und mit konz. Natronlauge bei gleichzeitigem Erwärmen auf 75° auf pH 7-8 gestellt. Unter gutem Rühren werden 90,6 g des oben hergestellten Säurechlorids im Verlaufe von 1 Stunde eingetragen und bei gleichbleibender Temperatur wird mit konz. Natronlauge der pH-Wert bei 7-8 gehalten. Man lässt 1 Stunde bei 80-85° nachrühren, dann wird die Lösung klärfiltriert und die Sulfinsäure mit Kochsalz ausgesalzen. Die abfiltrierte, mit Kochsalzlösung gewaschene Ausfällung wird im Vakuumschrank bei 60-70° getrocknet. Man erhält 102,3 g Sulfinsäure-Na-Salz.

99,2 g (58,9 %ig) dieser Verbindung werden zusammen mit 82,8 g 4-Chlor-3-nitrobenzol-1-sulfonsäure (85,9 %ig) in 250 ml Wasser suspendiert und mit verdünnter Natronlauge auf pH 8 gestellt. Nach einer Verweilzeit von 15 Stunden bei 112-115° in einem Tantalautoklaven wird der vorliegende Brei filtriert, mit Kochsalzlösung gewaschen und im Vakuum bei 60-70° getrocknet.

129 g erhaltenes Nitroprodukt werden in 300 ml Wasser, enthaltend 60 g Eisenpulver und 3 ml Eisessig eingetragen. Nach 20 min Rückfluss wird vorsichtig 4,8 g Soda eingetragen und vom Eisenrückstand abfiltriert.

Das Produkt wird mit Kochsalz ausgefällt, filtriert, mit Kochsalzlösung gewaschen und im Vakuum bei 60-70° getrocknet. Die Ausbeute der oben formulierten, chromatographisch einheitlichen Verbindung beträgt 126,4 g.

Beispiel 2

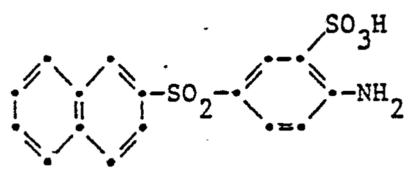

96,3 g Naphthalin-2-sulfinsäure-Na-Salz (59,7 %ig) wie unter Beispiel 1 hergestellt werden mit 47,25 g 1-Chlor-4-nitrobenzol in 150 ml Dimethylsulfoxid verrührt und auf 102° erwärmt. Nach 1 1/2 Stunden verdünnt man die trübe Lösung mit 150 ml Alkohol und 300 ml Wasser. Die Ausfällung wird filtriert, mit Wasser und Methanol gewaschen und im Vakuum bei 60-70° getrocknet. Man erhält 77,7 g einer Verbindung mit dem Smp. von 142-145°.

31,3 g dieses Nitrokörpers werden in 100 ml Dimethylformamid mit Raney-Nickel katalytisch reduziert. Die vom Katalysator befreite Lösung wird auf Wasser ausgetragen, die entstehende Ausfällung filtriert, mit Wasser gewaschen und im Vakuum bei 60-70° getrocknet. Man erhält 27,3 g Aminoprodukt mit einem Smp. von 188-191°.

26,8 g dieser Komponente werden unter Rühren in 150 ml Tetrachloräthan und 7,25 ml Chlorsulfonsäure vermischt. Die Suspension wird mit einem Bad von 160° erwärmt und 6 Stunden bei Rückfluss belassen. Der filtrierte und mit Chloroform gewaschene Filterrückstand wird in Wasser unter Zusatz von Natronlauge bei pH 7 gelöst. Noch vorhandene Lösungsmittelrückstände werden abgetrennt und die wässrige Lösung mit Aktivkohle klärfiltriert. Das oben formulierte Produkt fällt auf Zugabe von konz. Salzsäure aus. Man filtriert, wäscht mit Wasser und trocknet den Rückstand im Vakuum bei 60-70°. Die Ausbeute beträgt 22,9 g.

Beispiel 3

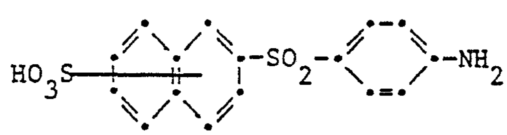

40,3 g 4-Nitrophenyl-naphthyl (2)-sulfon wie unter Beispiel 2 hergestellt, werden in 100 ml Oleum (10 %ig) bei Raumtemperatur monosulfiert. Das Isomerengemisch wird auf Eis ausgetragen und mit konz. Natronlauge neutralisiert. Der abgesaugte und gewaschene Niederschlag wird in 200 ml Wasser, enthaltend 24 g Eisenpulver und 2 ml Eisessig, eingetragen und bei Siedetemperatur reduziert. Nach vorsichtiger Zugabe von 3,9 g Soda wird vom Eisenrückstand abfiltriert und das Amin im klaren Filtrat mit konz. Salzsäure ausgefällt. Der filtrierte und gewaschene Rückstand wird im Vakuum bei 60-70° getrocknet. Man erhält 39,9 g grau-weisses Pulver.

Beispiel 4

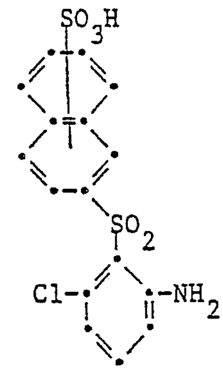

96,3 g Naphthalin-2-sulfinsäure Na-Salz (59,7 %ig) wie unter Beispiel 1 hergestellt werden mit 57,6 g 1,2-Dichlor-3-nitrobenzol in 150 ml Dimethylsulfoxid während 2 Stunden bei 90-95° verrührt. Nun werden 150 ml Alkohol und 300 ml Wasser zugegeben und der entstehende Brei filtriert. Nach dem Waschen und Trocknen im Vakuum bei 60-70° erhält man 88,2 g einer Verbindung mit dem Smp. von 159-169°.

87 g davon werden in 200 ml Oleum (10 %ig) sulfiert. Man trägt die Lösung auf vorgelegtes Eis aus und lässt einige Zeit stehen. Nach dem Abgiessen der schwefelsauren Lösung wird der verbleibende Rückstand in Wasser gelöst und mit Kalilauge auf pH 10 gestellt. Die reine Monosulfonsäure wird durch Zugabe von Kaliumchlorid ausgefällt, filtriert und gewaschen.

Von der erhaltenen Paste werden 134 g in 200 ml Wasser, enthaltend 32 g Eisenpulver und 2 ml Eisessig, eingetragen. Man lässt 30 min bei Siedetemperatur rühren, dann werden vorsichtig 4 g Soda eingestreut und vom Eisenrückstand abfiltriert. Das Amin wird mit Salzsäure konz. ausgefällt filtriert und im Vakuum bei 60-70° getrocknet. Man erhält 46 g der oben formulierten Verbindung.

Beispiel 5

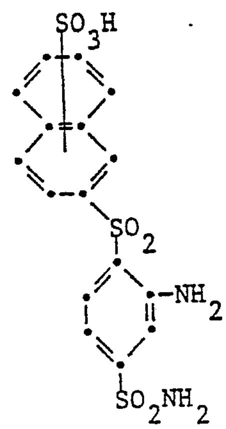

94,6 g Naphthalin-2-sulfinsäure Na-Salz (61 %ig) wie unter Beispiel 1 hergestellt, werden mit 70,95 g 4-Chlor-3-nitrobenzol-1-sulfamid und 12,3 g Natriumacetat calc. in 150 ml Dimethylsulfoxid verrührt und auf 50° erwärmt. Nach 3 Stunden wird mit 150 ml Alkohol und 450 ml Wasser verdünnt und die filtrierte Ausfällung nach dem Waschen im Vakuum bei 60-70° getrocknet. Man erhält 101,6 g einer Verbindung mit dem Smp. von 169-173°.

94,6 g dieses Pulvers werden in 192 ml Oleum (10 %ig) sulfiert. Das auf Eis ausgefällte und filtriert Produkt wird in heissem Wasser bei pH 7-10 gelöst und mit Kochsalz ausgesalzen. Die abgesaugte und gewaschene Ausfällung wird in 300 ml Wasser, enthaltend 40 g Eisenpulver und 3 ml Eisessig eingetragen und siedend zum Amin reduziert. Nach vorsichtigem Einstreuen von 3,6 g Soda wird vom Eisenrückstand abfiltriert. Man fällt die oben formulierte Verbindung mit Kaliumchlorid aus und trocknet das filtrierte und gewaschene Produkt im Vakuum bei 60-70°. Die Ausbeute beträgt 91,8 g.

Beispiel 6

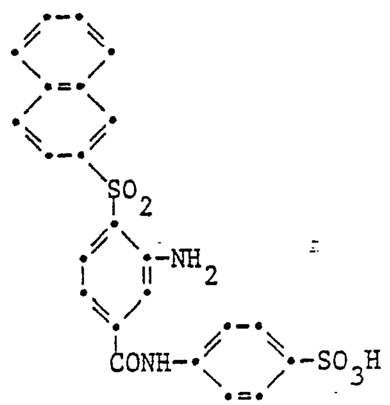

87,5 g Sulfanilsäure (99 %ig) werden unter Rühren in 500 ml Wasser mit Natronlauge konz. auf pH 7-8 gestellt und abgekühlt. Zu der 5° kalten Lösung werden 106,2 g 4-Chlor-3-nitro-benzoylchlorid in 100 ml Aceton gelöst zugetropft. Man lässt eine Weile bei pH 7 nachrühren und fällt dann das Carbonamid durch Kochsalzzugabe aus. Das filtrierte und gewaschene Produkt ergibt nach der Trocknung im Vakuum bei 60-70° 163 g.

38,6 g Naphthalin-2-sulfinsäure Na-Salz (59,7 %ig) wie unter Beispiel 1 hergestellt werden zusammen mit 44,9 g von der oben erhaltenen Verbindung in 250 ml Wasser während einigen Stunden unter Rückfluss behalten. Die kalt abfiltrierte und im Vakuum bei 60-70° getrocknete Kristallmasse ergibt 53,7 g.

Das Pulver wird in 300 ml Wasser, enthaltend 20 g Eisenpulver und 7 ml Eisessig eingetragen und siedend reduziert. Man trägt vorsichtig 9,1 g Soda ein und filtriert vom Eisenrückstand ab. Das kalt abgesaugte und gewaschene Produkt wird im Vakuum bei 60-70° getrocknet. Man erhält 47 g der oben formulierten Verbindung.

Beispiel 7

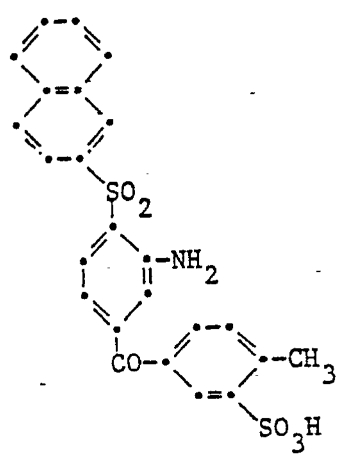

138 g 1-Chlor-2-nitro-4'-methyl-benzophenon werden in 450 ml Oleum 25 %ig bei 20-48° sulfiert. Das auf Eis ausgetragene und mit Kochsalz ausgefällte Produkt wird filtriert, erneut in Wasser gelöst und mit Kaliumchlorid ausgesalzen. Man wäscht den abgesaugten Niederschlag und trocknet im Vakuum bei 60-70°. Die Ausbeute beträgt 221,9 g.

35,4 g Naphthalin-2-sulfinsäure Na-Salz (59,7 %ig) wie unter Beispiel 1 hergestellt, werden zusammen mit 59,8 g der oben erhaltenen Verbindung in 300 ml Wasser auf pH 8 gestellt und für einige Stunden bei Siedetemperatur behalten. Das kalt abgeschiedene Sulfonderivat wird als feuchtes Nutschgut in 250 ml Wasser, enthaltend 20 g Eisenpulver und 2 ml Eisessig, eingetragen und bei Rückflusstemperatur zum Amin reduziert. Nach vorsichtiger Zugabe von 3,3 g Soda wird vom Eisenrückstand abfiltriert und das Produkt im Filtrat mit Kochsalz ausgefällt. Filtriert, gewaschen und im Vakuum bei 60-70° getrocknet erhält man 50,2 g der oben formulierten Verbindung.

Beispiel 8

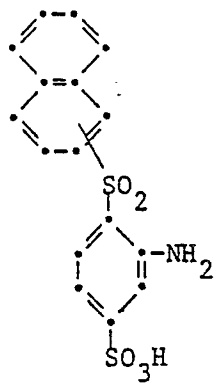

Verwendet man 153,3 g (67,6 %ig) eine Mischung von ca. 45 % Naphthalin-2-sulfinsäure Na-Salz und 55 % Naphthalin-1-sulfinsäure Na-Salz, sowie 82,8 g 4-Chlor-3-nitrobenzol-1-sulfonsäure Na-Salz (85,9 %ig) und verfährt analog Beispiel 1, so erhält man 83,7 g der oben formulierten Verbindung.

Beispiel 9

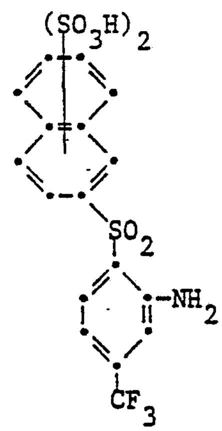

67,65 g 4-Chlor-3-nitro-benzotrifluorid und 97 g Naphthalin-2-sulfinsäure Na-Salz (62,4 %ig) werden unter ähnlichen Bedingungen wie in Beispiel 2 zum Sulfonderivat umgesetzt. Man erhält 113,5 g Pulver mit dem Smp. 143-144°.

53,1 g davon werden in 110 ml Oleum (25 %ig) disulfoniert und wie üblich isoliert. Der in Wasser angeschwemmte und neutralisierte Filterkuchen wird in 100 ml Wasser, enthaltend 25 g Eisenpulver und 20 ml Eisessig, eingetragen und bei Rückflusstemperatur zum Amin reduziert. Nach vorsichtiger Zugabe von 3,3 g Soda wird vom Eisenrückstand abfiltriert und das Produkt im Filtrat mit Kochsalz ausgefällt. Filtriert, gewaschen und im Vakuum bei 60-70° getrocknet erhält man 67,0 g der oben formulierten Verbindung.

Beispiel 10

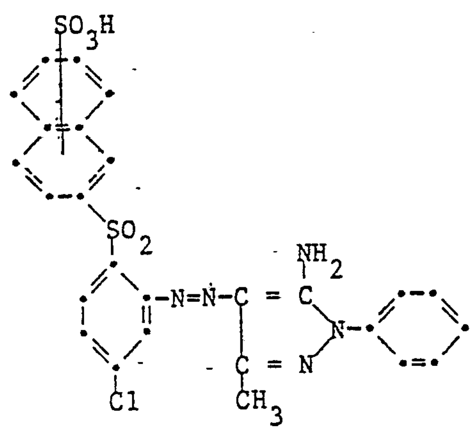

7,95 g 4-Chlor-2-aminophenyl-sulfonaphthyl (2)-sulfon, in Analogie zu den Beispielen 1-4 hergestellt, werden in 50 ml Wasser neutral gelöst und mit 5 ml Natriumnitrit 4n versetzt. Die Lösung tropft man in eine Mischung von 50 g Eis und 5 ml Salzsäure konz. und lässt die entstehende Suspension einige Zeit nachrühren. Ein geringer Nitritüberschuss wird mit Sulfaminsäure zerstört.

Nun lässt man 3,6 g 3-Methyl-1-phenyl-5-pyrazolimin (96,3 %ig), gelöst in 25 ml Wasser und 3 ml Salzsäure konz., zur Diazosuspension tropfen. Nach beendeter Kupplung wird der Farbstoff abgesaugt und gewaschen. Das Nutschgut wird in Wasser mit Natronlauge bei pH 9 gelöst und mit Kochsalz wieder ausgefällt. Es wird filtriert, gewaschen und im Vakuum bei 60-70° getrocknet. Man erhält 6,9 g Farbstoff, der Polyamidmaterial aus schwach saurem Bad in brillanten, gelben Tönen färbt. Der Farbstoff zeichnet sich aus durch ein hervorragendes Aufbauvermögen, hohe Lichtechtheit und sehr gute Beständigkeit gegenüber Formaldehyd.

Beispiel 11

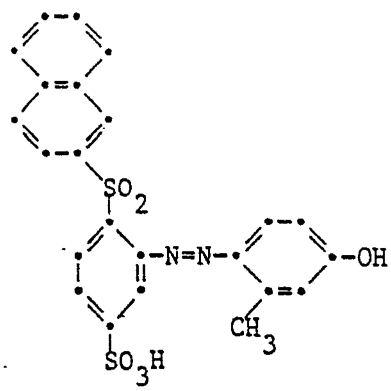

14,6 g der Verbindung aus Beispiel 1 (74,4 %ig) werden in 90 ml Wasser von 50° gelöst, 7,5 ml Natriumnitritlösung 4N zugebeben und mit 45 g Eis auf 17° gekühlt. In die Lösung werden 18 ml 4N α-Naphthalinsulfonsäurelösung eingegossen. Nach einiger Zeit wird ein geringer Nitritüberschuss mit Sulfaminsäure zerstört.

3,24 g m-Kresol löst man in 60 ml Wasser unter Zusatz von Natronlauge bei pH 11, kühlt ab auf 2° und lässt dann die Suspension des Diazoniumsalzes innerhalb von 25 min bei einem mit Natronlauge 2N gehaltenen pH-Wert von 11 zutropfen. Der Farbstoff wird bei pH 8 durch Zugabe von Salzsäure ausgefällt, filtriert, mit Wasser gewaschen und im Vakuum bei 60-70° getrocknet. Die Ausbeute beträgt 15,52 g.

Der Farbstoff färbt Polyamidmaterial aus schwach saurem Bad in brillanten orangen Tönen.

Beispiel 12

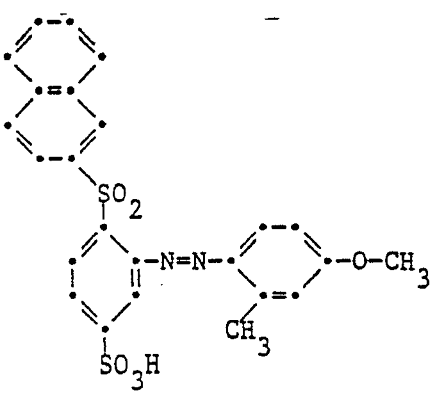

10,34 g des Farbstoffes aus Beispiel 11 löst man in 150 ml Wasser von 50-55°. Bei dieser Temperatur und einem mit Natronlauge 2N gehaltenen pH-Wert von 10,5 lässt man Dimethylsulfat zutropfen, bis nach Chromatogramm die Verätherung abgeschlossen ist. Der mit Kochsalz ausgefällte und filtrierte Farbstoff wird nach dem Waschen mit verdünnter Kochsalzlösung im Vakuum bei 60-70° getrocknet. Man erhält 8,65 g Farbstoff, der aus schwach saurem Bad Polyamidmaterial in brillanten orangen Tönen anfärbt.

Beispiel 13

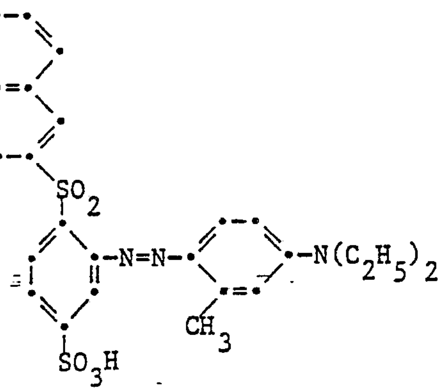

9,76 g der Verbindung aus Beispiel 1 werden wie nach Beispiel 11 diazotiert.

3,26 g N,N-Diäthyl-m-toluidin werden in 25 ml Wasser mit 2,5 ml Salzsäure konz. gelöst und der Diazosuspension zugegeben. Man erhöht den pH-Wert vorerst mit Natriumacetat, dann mit Natronlauge 2n bis pH 7 und fällt den Farbstoff mit Kochsalz aus. Der filtrierte und gewaschene Niederschlag wird im Vakuum bei 60-70° getrocknet. Man erhält 5,8 g Farbstoff, der aus schwach saurem Bad auf Polyamidmaterial gefärbt brillante gelbstichig rote Töne ergibt. Der Farbstoff verfügt über ein hervorragendes Aufbauvermögen, vorzügliche Lichtechtheit, sehr gute Formaldehydbeständigkeit und gute Nassechtheiten.

Beispiel 14

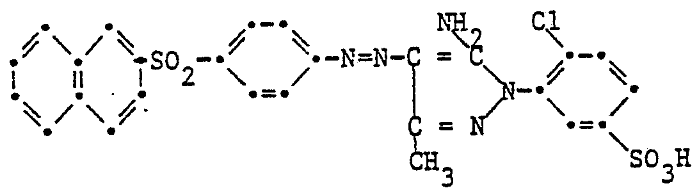

5,66 g 4-Aminophenyl-naphthyl (2)-sulfon, als Zwischenstufe aus Beispiel 2 hergestellt, werden in 25 ml Eisessig und 5 ml Salzsäure konz. bei Zimmertemperatur mit 5 ml Natriumnitrit 4n diazotiert. Nach einiger Zeit wird mit 50 ml Wasser verdünnt und ein geringer Nitritüberschuss mit Sulfaminsäure zerstört.

5,94 g 2-Chlor-5-sulfophenyl-3-methyl-5-pyrazolimin (96,7 %ig) werden in 75 ml Wasser neutral in Lösung gebracht und auf 2° abgekühlt, dann wird die oben hergestellte Diazolösung bei 2-5° zugefügt. Nach vollendeter Kupplung wird der Farbstoff ausgesalzen, filtriert und im Vakuum bei 60-70° getrocknet.

Man erhält 10,2 g Farbstoff, der aus schwach saurem Bad auf Polyamidmaterial gefärbt brillante gelbe Farbtöne, ein hohes Aufbauvermögen und gute Allgemeinechtheiten ergibt.

Beispiel 15

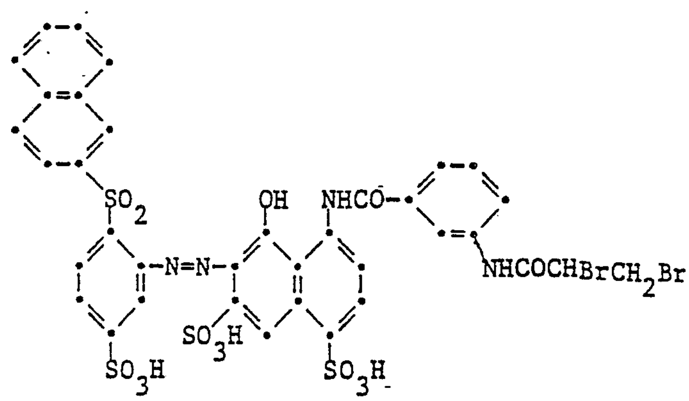

7,32 g der Verbindung aus Beispiel 1 (74,4 %ig) werden wie unter Beispiel 11 diazotiert.

17,74 g 3-α,β-Dibrompropionylaminobenzoyl-K-säure (55,1 %ig) werden in 75 ml Wasser bei pH 7

gelöst und auf 2° abgekühlt. Die Diazosuspension lässt man tropfenweise zugeben, wobei gleichzeitig der pH-Wert 7 mit Natronlauge gehalten wird. Der filtrierte und gewaschene Farbstoff wird im Vakuum bei 60-70° getrocknet.

Man erhält 15,3 g Farbstoff, der Wolle mit guten Allgemeinechtheiten in roten Farbtönen färbt.

Wenn man wie in den Beispielen 1 bis 15 verfährt, jedoch als Diazokomponente und als Kupplungskomponente die in den folgenden Tabellen aufgeführten Verbindungen einsetzt, wobei die Formel

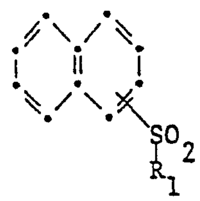

bedeutet, dass man ein Gemisch der in 1-Stellung und der in 2-Stellung des Naphthalinringes substituierten Diazokomponente im Verhältnis von ca. 1 : 1 verwendet, so erhält man ebenfalls wertvolle Farbstoffe mit ähnlich guten Eigenschaften, die Polyamid oder Wolle in der angegebenen Nuance anfärben.

(Siehe Tabellen Seite 18 ff.)

Tabelle 1

| Beispiel | Diazokomponente | R1 | R2 | Kupplungskomponente | Nuance auf Polyamid |
|---|---|---|---|---|---|
| 1 | 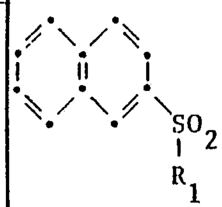 | 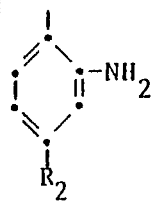 | $-SO_2NHCH_2CH_2SO_3H$ | 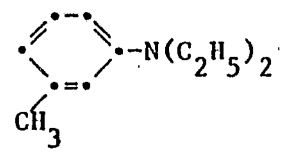 | rot |
| 2 | do. | do. | 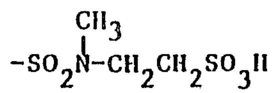 | do. | dc. |
| 3 | do. | do. | 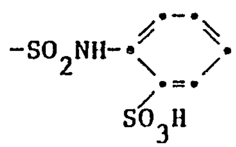 | do. | do. |
| 4 | do. | do. | 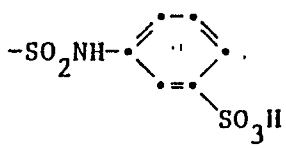 | do. | do. |
| 5. | do. | do. | 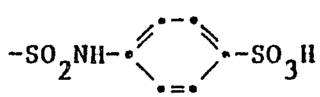 | do | do. |
| 6 | do. | do. | 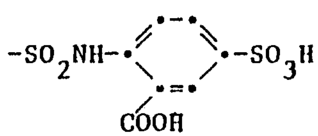 | do. | do. |

Tabelle 1 (Fortsetzung)

| Beispiel | Diazokomponente | $R_1$ | $R_2$ | Kupplungskomponente | Nuance auf Polyamid |
|---|---|---|---|---|---|
| 7 | 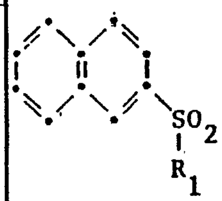 | 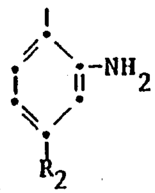 | 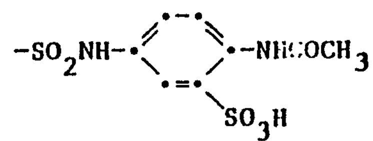 | 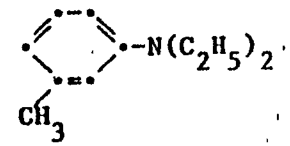 | rot |
| 8 | do. | do. | 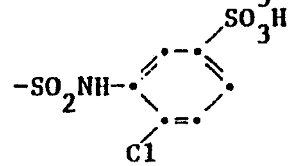 | do. | do. |
| 9 | do. | do. | 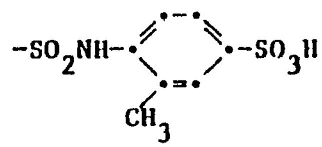 | do. | do. |
| 10 | do. | do. | 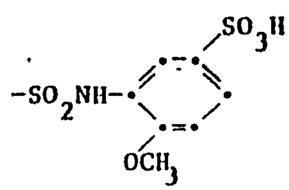 | do. | do. |
| 11 | do. | do. | 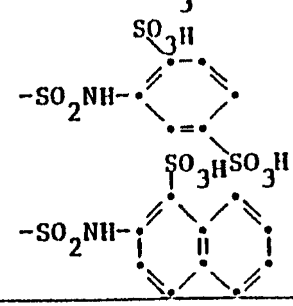 | do. | do. |
| 12 | do. | do. | | do. | do. |

Tabelle 1 (Fortsetzung)

| Bei-spiel | Diazokomponente | $R_1$ | $R_2$ | Kupplungskomponente | Nuance auf Polyamid |
|---|---|---|---|---|---|
| 13 | 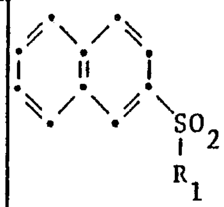 | 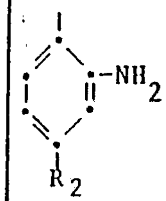 | 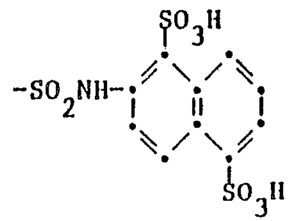 | 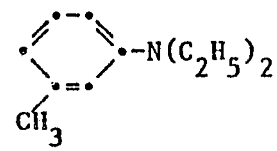 | rot |
| 14 | do | do. | 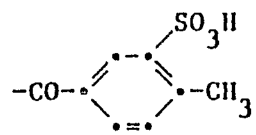 | do. | do. |
| 15 | do. | do. | 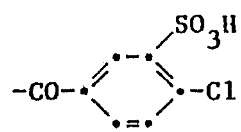 | do. | do. |
| 16 | do. | do. | 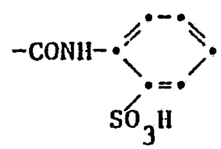 | do. | gelbstichig rot |
| 17 | do. | do. | 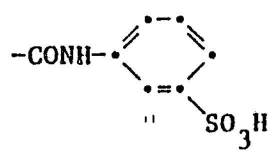 | do. | do. |
| 18 | do. | do. | 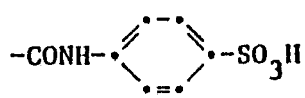 | do. | do. |

Tabelle 1 (Fortsetzung)

| Beispiel | Diazokomponente | R1 | R2 | Kupplungskomponente | Nuance auf Polyamid |
|---|---|---|---|---|---|
| 19 | 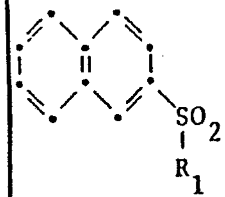 | 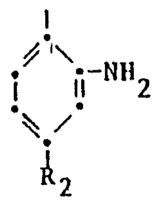 | $-CONHCH_2CH_2SO_3H$ | 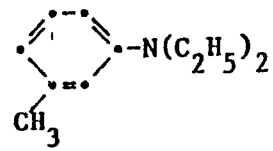 | gelbstichig rot |
| 20 | do. | do. | 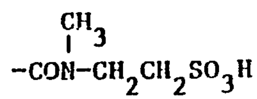 | do. | do. |
| 21 | 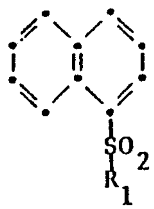 | do. | $-SO_2NHCH_2CH_2SO_3H$ | do. | rot |
| 22 | do. | do. | 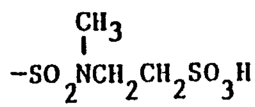 | do. | do. |
| 23 | do. | do. | 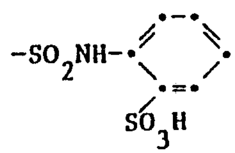 | do. | do. |
| 24 | do. | do. | 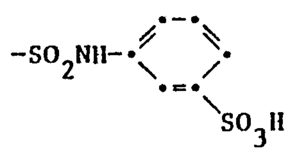 | do. | do. |

Tabelle 1 (Fortsetzung)

| Beispiel | Diazokomponente | R1 | R2 | Kupplungskomponente | Nuance auf Polyamid |
|---|---|---|---|---|---|
| 25 | 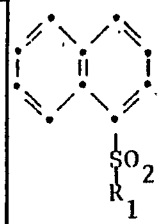 | 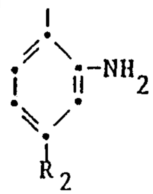 | 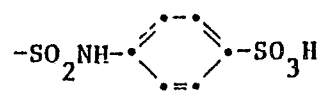 | 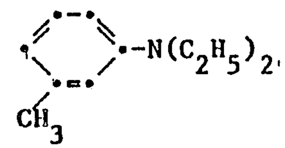 | rot |
| 26 | do. | do. | 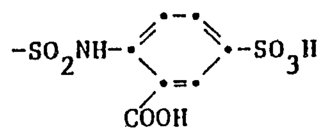 | do. | do. |
| 27 | do. | do. | 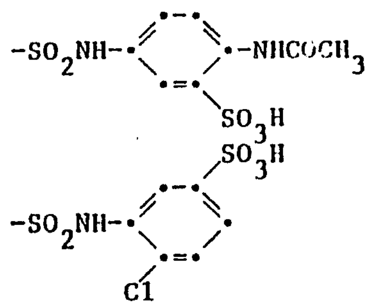 | do. | do. |
| 28 | do. | do. | | do. | do. |
| 29 | do. | do. | 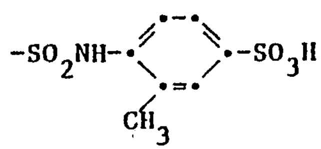 | do. | do. |
| 30 | do. | do. | 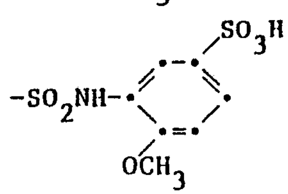 | do. | do. |

Tabelle 1 (Fortsetzung)

| Beispiel | Diazokomponente | $R_1$ | $R_2$ | Kupplungskomponente | Nuance auf Polyamid |
|---|---|---|---|---|---|
| 31 | 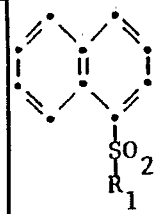 | 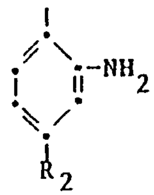 | 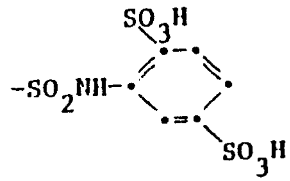 | 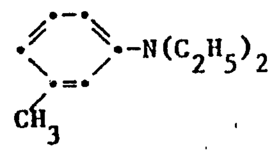 | rot |
| 32 | do. | do. | 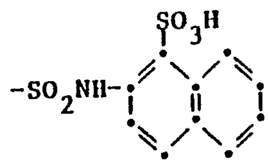 | do. | do. |
| 33 | do. | do. | 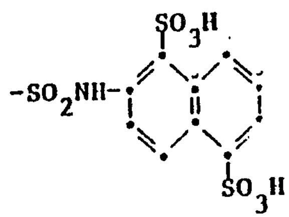 | do. | do. |
| 34 | do. | do. | 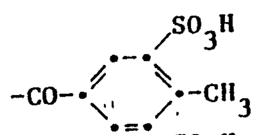 | do. | do. |
| 35 | do. | do. | 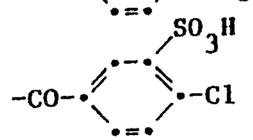 | do. | do. |
| 36 | do. | do. | 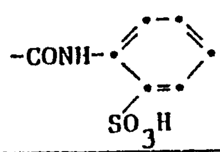 | do. | gelbstichig rot |

Tabelle 1 (Fortsetzung)

| Beispiel | Diazokomponente | | | Kupplungskomponente | Nuance auf Polyamid |
|---|---|---|---|---|---|
| | | $R_1$ | $R_2$ | | |
| 37 | 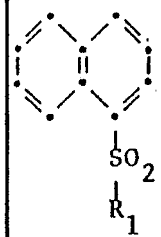 | 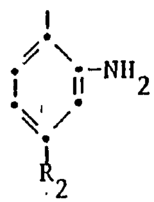 | 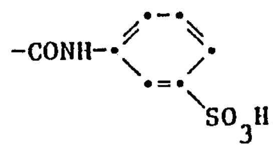 | 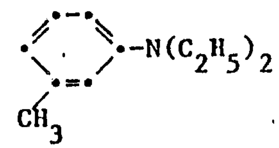 | gelbstichig rot |
| 38 | do. | do. | 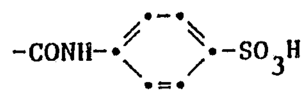 | do. | do. |
| 39 | do. | do. | $-CONHCH_2CH_2SO_3H$ | do. | do. |
| 40 | do. | do. | $CH_3$<br>$-CON-CH_2CH_2SO_3H$ | do. | do. |
| 41 | do. | do. | $-SO_3H$ | do. | do. |
| 42 | 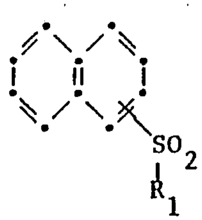 | do. | $-SO_2NHCH_2CH_2SO_3H$ | do. | rot |
| 43 | do. | do. | $CH_3$<br>$-SO_2NCH_2CH_2SO_3H$ | do. | do. |

Tabelle 1 (Fortsetzung)

| Bei-spiel | Diazokomponente | R1 | R2 | Kupplungskomponente | Nuance auf Polyamid |
|---|---|---|---|---|---|
| 44 | 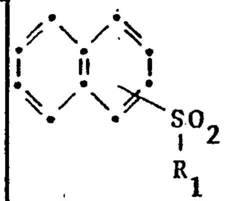 | 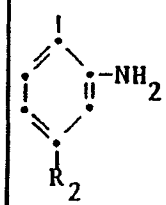 | 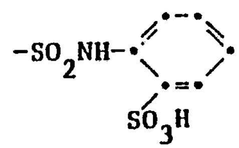 | 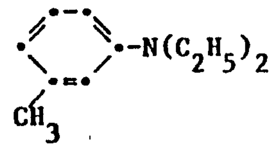 | rot |
| 45 | do. | do. | 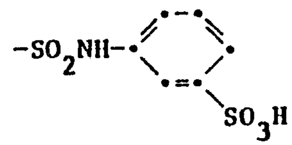 | do. | do. |
| 46 | do. | do. | 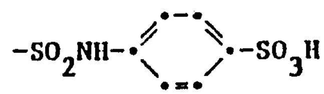 | do. | do. |
| 47 | do. | do. | 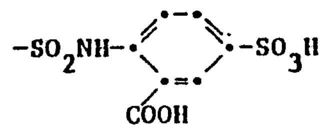 | do. | do. |
| 48 | do. | do. | 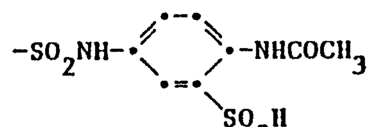 | do. | do. |
| 49 | do. | do. | 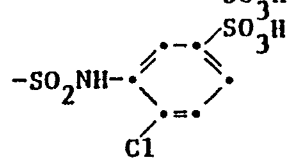 | do. | do. |

Tabelle 1 (Fortsetzung)

| Beispiel | Diazokomponente | R1 | R2 | Kupplungskomponente | Nuance auf Polyamid |
|---|---|---|---|---|---|
| 50 | 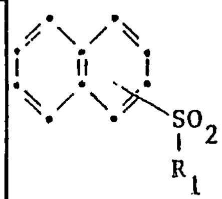 | 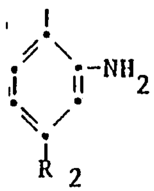 | 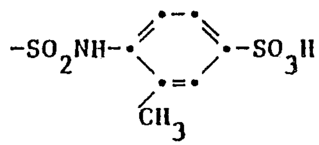 | 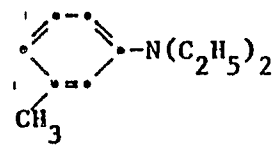 | rot |
| 51 | do. | do. | 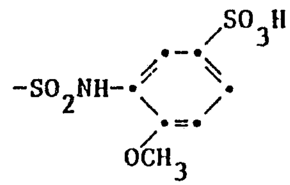 | do. | do. |
| 52 | do. | do. | 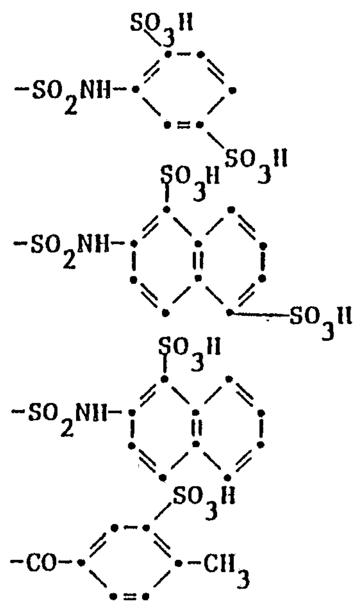 | do. | do. |
| 53 | do. | do. | | do. | do. |
| 54 | do. | do. | | do. | do. |
| 55 | do. | do. | | do. | do. |

Tabelle 1 (Fortsetzung)

| Beispiel | Diazokomponente | R1 | R2 | Kupplungskomponente | Nuance auf Polyamid |
|---|---|---|---|---|---|
| 56 | 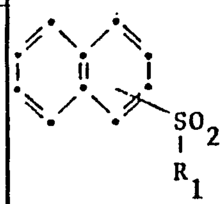 | 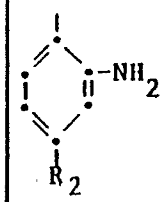 | 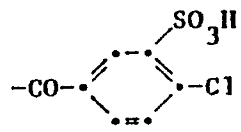 | 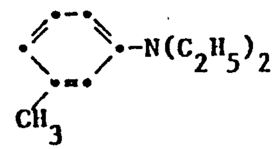 | rot |
| 57 | do. | do. | 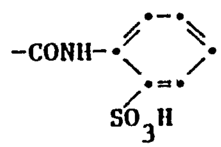 | do. | gelbstichig rot |
| 58 | do. | do. | 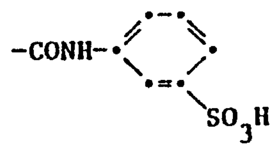 | do. | do. |
| 59 | do. | do. | 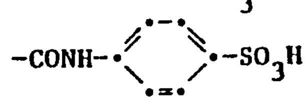 | do. | do. |
| 60 | do. | do. | $-CONHCH_2CH_2SO_3H$ | do. | do. |
| 61 | do. | do. | $CH_3$<br>$-CON-CH_2CH_2SO_3H$ | do. | do. |
| 62 | do. | do. | $-SO_3H$ | do. | do. |

Tabelle 1 (Fortsetzung)

| Beispiel | Diazokomponente | R1 | R2 | Kupplungskomponente | Nuance auf Polyamid |
|---|---|---|---|---|---|
| | 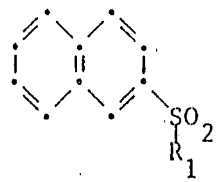 | | | | |
| 63 | | 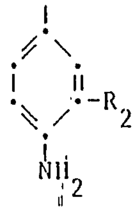 | $-SO_3H$ | 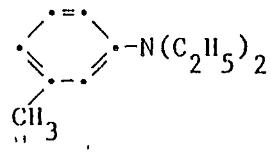 | rot |
| 64 | do. | do. | do. | 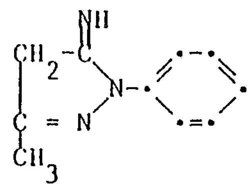 | gelb |
| 65 | do. | 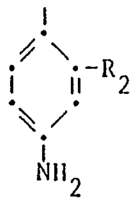 | do. | do. | do. |
| 66 | do. | do. | do. | 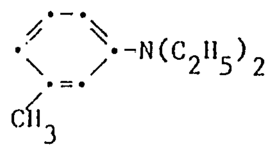 | rot |
| 67 | do. | 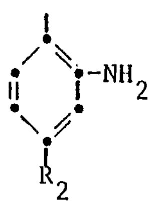 | $-SO_3H$ | 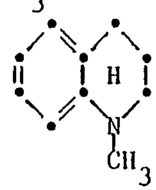 | gelbstichig rot |

Tabelle 1 (Fortsetzung)

| Bei-spiel | Diazokomponente | | | Kupplungskomponente | Nuance auf Polyamid |
|---|---|---|---|---|---|
| | | $R_1$ | $R_2$ | | |
| 68 | 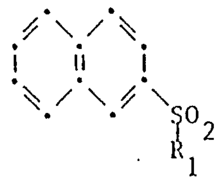 | 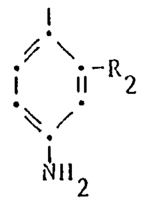 | H | 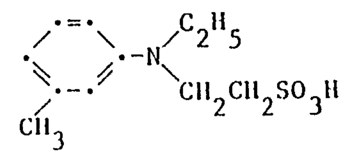 | gelbstichig rot |
| 69 | do. | 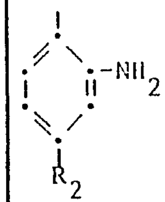 | do. | 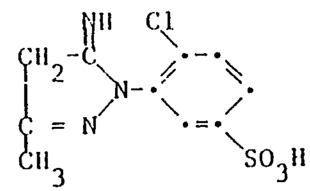 | gelb |
| 70 | do. | do. | $-SO_3H$ | 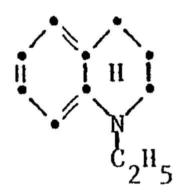 | gelbstichig rot |
| 71 | do. | do. | H | 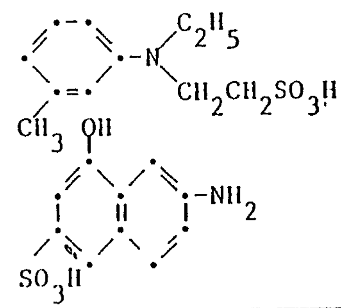 | gelbstichig rot |
| 72 | do. | do. | do. | | rot |

Tabelle 1 (Fortsetzung)

| Bei-spiel | Diazokomponente | $R_1$ | $R_2$ | Kupplungskomponente | Nuance auf Polyamid |
|---|---|---|---|---|---|
| 73 | 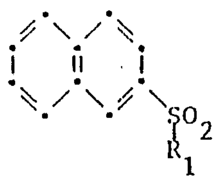 | 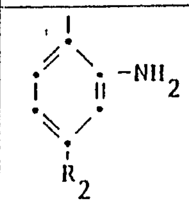 | H | 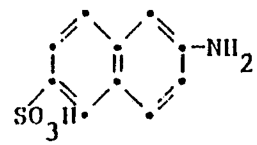 | rot |
| 74 | do. | 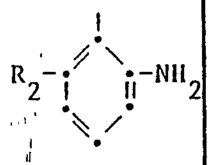 | Cl | 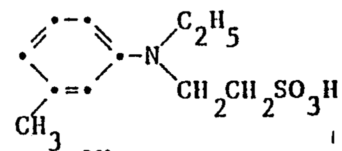 | rotstichig orange |
| 75 | do. | do. | do. | 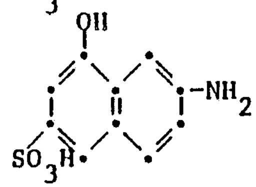 | rot |
| 76 | do. | do. | do. | 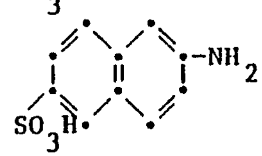 | do. |
| 77 | do. | do. | do. | 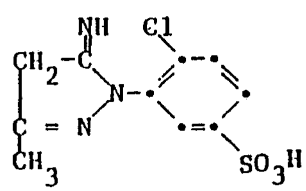 | gelb |

Tabelle 1 (Fortsetzung)

| Beispiel | Diazokomponente | R1 | R2 | Kupplungskomponente | Nuance auf Polyamid |
|---|---|---|---|---|---|
| 78 | 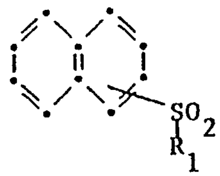 | 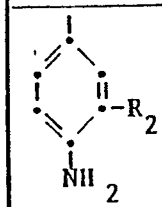 | $-SO_3H$ | 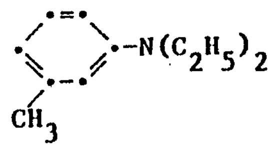 | rot |
| 79 | do. | do. | do. | 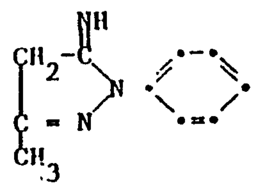 | gelb |
| 80 | do. | 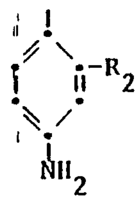 | do. | do. | do. |
| 81 | do. | do. | do. | 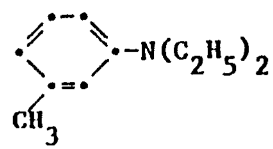 | rot |
| 82 | 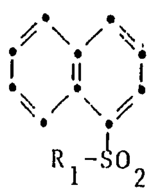 | do. | H | 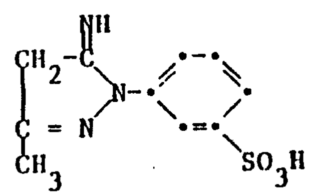 | gelb |

Tabelle 1 (Fortsetzung)

| Bei-spiel | | Diazokomponente R1 | Diazokomponente R2 | Kupplungskomponente | Nuance auf Polyamid |
|---|---|---|---|---|---|
| 83 | 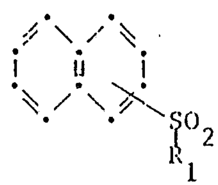 | 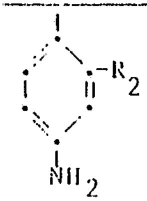 | H | 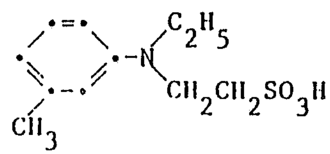 | gelbstichig rot |
| 84 | do. | 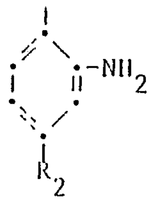 | do. | 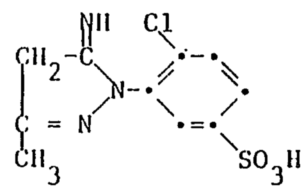 | gelb |
| 85 | 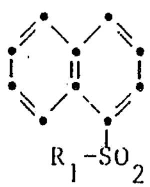 | do. | do. | 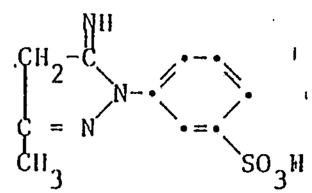 | do. |
| 86 | 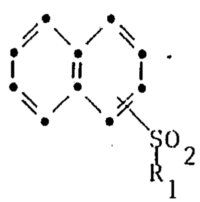 | do. | do. | 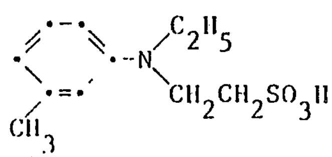 | rotstichig orange |
| 87 | do. | do. | do. | 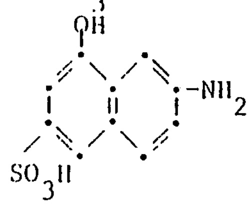 | rot |

Tabelle 1 (Fortsetzung)

| Beispiel | Diazokomponente | R1 | R2 | Kupplungskomponente | Nuance auf Polyamid |
|---|---|---|---|---|---|
| 88 | 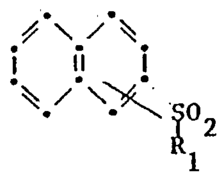 | 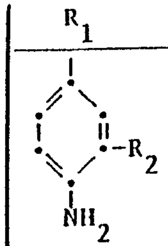 | H | 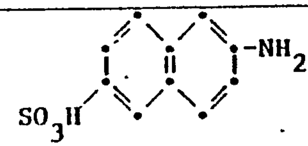 | rot |
| 89 | do. | 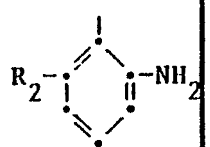 | Cl | 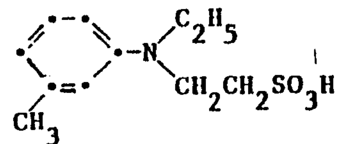 | rotstichig orange |
| 92 | do. | do. | do. | 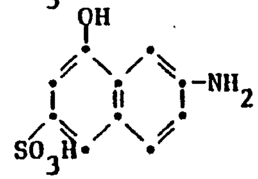 | rot |
| 91 | do. | do. | do. | 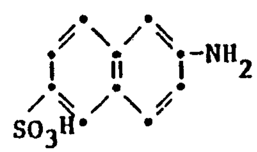 | do. |
| 92 | do. | do. | do. | 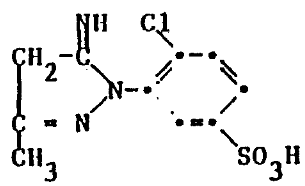 | gelb |

Tabelle 1 (Fortsetzung)

| Bei-spiel | Diazokomponente 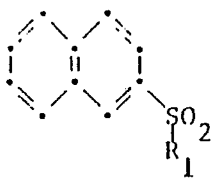 | $R_1$ | $R_2$ | Kupplungskomponente | Nuance auf Polyamid |
|---|---|---|---|---|---|
| 93 | | 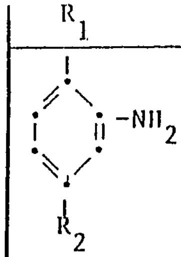 | Cl | 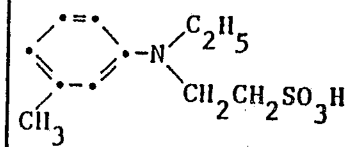 | gelb-stichig rot |
| 94 | do. | do. | do. | 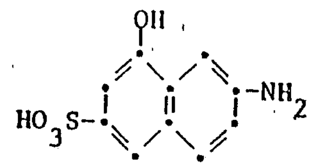 | rot |
| 95 | do. | do. | $-SO_2NH_2$ | do. | do. |
| 96 | do. | do. | do. | do. | do. |
| 97 | do. | do. | $-SO_2NHCH_3$ | do. | do. |
| 98 | do. | do. | do. | do. | do. |
| 99 | do. | do. | $CH_3$<br>\|<br>$-SO_2N-CH_2CH_2OH$ | do. | do. |
| 100 | do. | do. | do. | do. | do. |
| 101 | do. | do. | 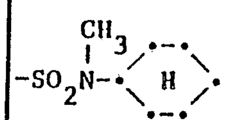 | do. | do. |
| 102 | do. | do. | do. | do. | dc. |

Tabelle 1 (Fortsetzung)

| Bei-spiel | Diazokomponente | $R_1$ | $R_2$ | Kupplungskomponente | Nuance auf Polyamid |
|---|---|---|---|---|---|
| 103 | 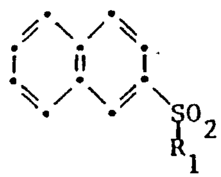 | 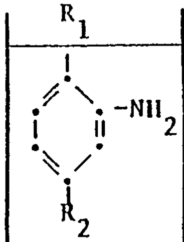 | $-SO_2CH_3$ | 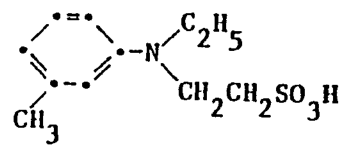 | gelb-stichig rot |
| 104 | do. | do. | do. | 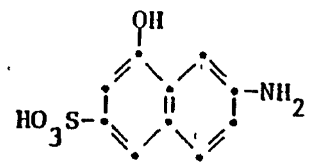 | rot |
| 105 | do. | do. | $-SO_2C_2H_5$ | do. | do. |
| 106 | do. | do. | do. | do. | do. |
| 107 | do. | do. | $CF_3$ | do. | do. |
| 108 | do. | do. | do. | do. | do. |
| 109 | do. | do. | $-CH_3$ | do. | do. |
| 110 | do. | do. | do. | do. | rot |
| 111 | do. | do. | $-NHCOCH_3$ | do. | do. |
| 112 | do. | do. | do. | do. | do. |

Tabelle 1 (Fortsetzung)

| Beispiel | Diazokomponente 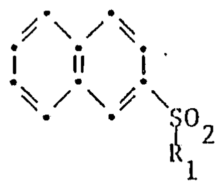 | R1 | R2 | Kupplungskomponente | Nuance auf Polyamid |
|---|---|---|---|---|---|
| 113 | | 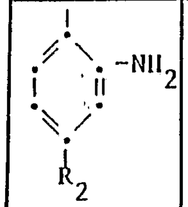 | $-CONH_2$ | 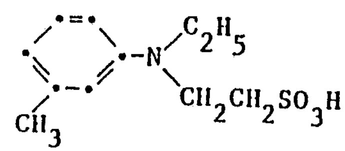 | gelbstichig rot |
| 114 | do. | do. | do. | 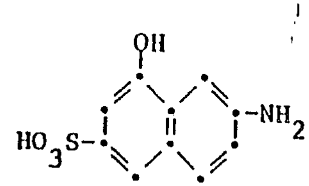 | rot |
| 115 | do. | do. | $-CONHCH_3$ | do. | do. |
| 116 | do. | do. | do. | do. | do. |
| 117 | do. | do. | $-CON(CH_3)_2$ | do. | do. |
| 118 | do. | do. | do. | do. | do. |
| 119 | do. | 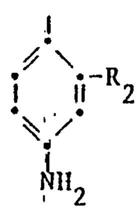 | Cl | do. | rotstichig orange |
| 120 | do. | do. | do. | do. | rot |

Tabelle 1 (Fortsetzung)

| Bei-spiel | Diazokomponente | $R_1$ | $R_2$ | Kupplungskomponente | Nuance auf Polyamid |
|---|---|---|---|---|---|
| 121 | 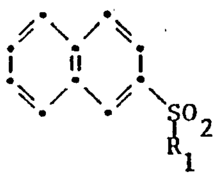 | 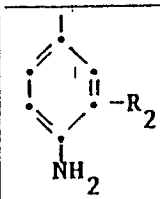 | $CF_3$ | 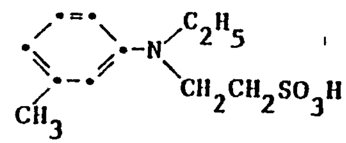 | gelb-stichig rot |
| 122 | do. | do. | do. | 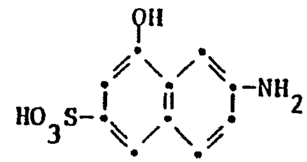 | rot |
| 123 | 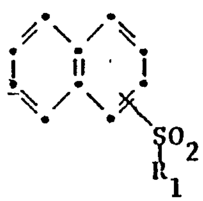 | 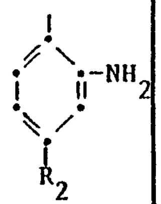 | Cl | do. | do. |
| 124 | do. | do. | do. | do. | do. |
| 125 | do. | do. | $-SO_2NH_2$ | do. | do. |
| 126 | do. | do. | do. | do. | do. |
| 127 | do. | do. | $-SO_2NHCH_3$ | do. | do. |
| 128 | do. | do. | do. | do. | do. |

Tabelle 1 (Fortsetzung)

| Beispiel | Diazokomponente | | | Kupplungskomponente | Nuance auf Polyamid |
|---|---|---|---|---|---|
| | 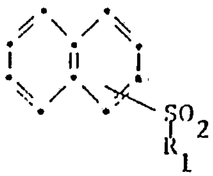 | $R_1$ | $R_2$ | | |
| 129 | | 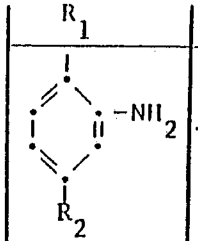 | 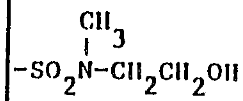 | 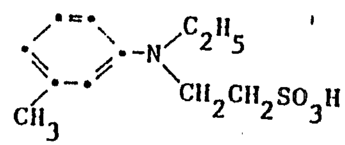 | gelbstichig rot |
| 130 | do. | do. | do. | 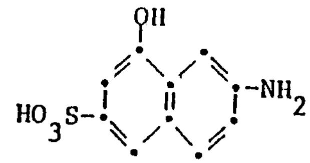 | rot |
| 131 | do. | do. | 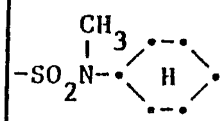 | do. | do. |
| 132 | do. | do. | do. | do. | do. |
| 133 | do. | do. | $-SO_2CH_3$ | do. | do. |
| 134 | do. | do. | do. | do. | do. |
| 135 | do. | do. | $-SO_2C_2H_5$ | do. | do. |
| 136 | do. | do. | do. | do. | do. |
| 137 | do. | do. | $-CF_3$ | do. | do. |
| 138 | do. | do. | do. | do. | do. |

Tabelle 1 (Fortsetzung)

| Beispiel | Diazokomponente | R1 | R2 | Kupplungskomponente | Nuance auf Polyamid |
|---|---|---|---|---|---|
| 139 | 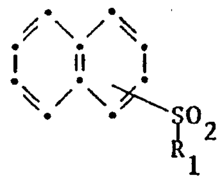 | 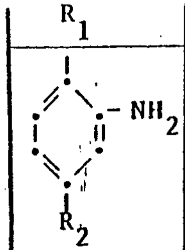 | $-CH_3$ | 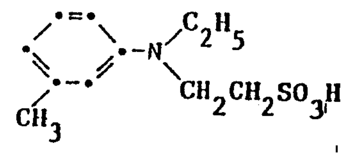 | gelbstichig rot |
| 140 | do. | do. | do. | 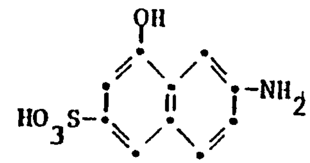 | rot |
| 141 | do. | do. | $-NHCOCH_3$ | do. | do. |
| 142 | do. | do. | do. | do. | do. |
| 143 | do. | do. | $-CONH_2$ | do. | do. |
| 144 | do. | do. | do. | do. | do. |
| 145 | do. | do. | $-CONHCH_3$ | do. | do. |
| 146 | do. | do. | do. | do. | do. |

Tabelle 1 (Fortsetzung)

| Beispiel | Diazokomponente | R1 | R2 | Kupplungskomponente | Nuance auf Polyamid |
|---|---|---|---|---|---|
| 147 | 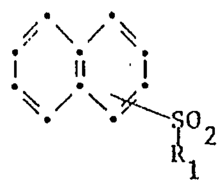 | 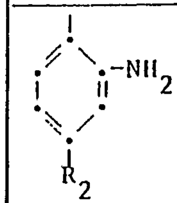 | $-CON(CH_3)_2$ | 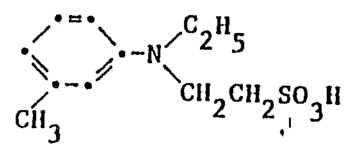 | gelbstichig rot |
| 148 | do. | do. | do. | 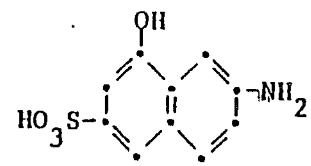 | rot |
| 149 | do. | 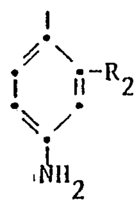 | Cl | do. | rotstichig orange |
| 150 | do. | do. | do. | do. | do. |
| 151 | do. | 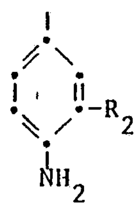 | $-CF_3$ | do. | gelbstichig rot |
| 152 | do. | do. | do. | do. | do. |

Tabelle 1 (Fortsetzung)

| Beispiel | Diazokomponente | | | Kupplungskomponente | Nuance auf Polyamid |
|---|---|---|---|---|---|
| | | $R_1$ | $R_2$ | | |
| 153 | 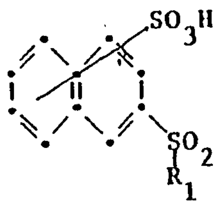 | 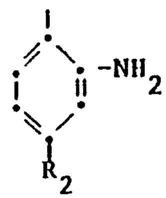 | $-SO_2NH_2$ | 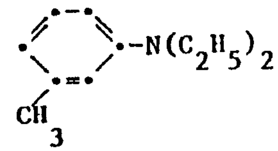 | rot |
| 154 | do. | do. | $-SO_2NHCH_3$ | do. | do. |
| 155 | do. | do. | $-SO_2N(CH_3)_2$ | do. | do. |
| 156 | do. | do. | $-SO_2NHC_2H_5$ | do. | do. |
| 157 | do. | do. | $-SO_2NHCH_2CH_2OH$ | do. | do. |
| 158 | do. | do. | $-SO_2N(CH_3)-CH_2CH_2OH$ | do. | do. |
| 159 | do. | do. | $-SO_2NH-$ 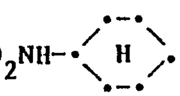 | do. | do. |
| 160 | do. | do. | $-SO_2NHCH_2CH_2SO_3H$ | do. | do. |
| 161 | do. | do. | $-SO_2NH-$ 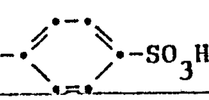 | do. | do. |

Tabelle 1 (Fortsetzung)

| Bei-spiel | Diazokomponente 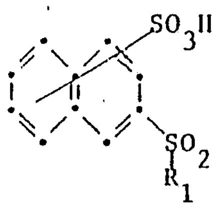 | R1 | R2 | Kupplungskomponente | Nuance auf Polyamid |
|---|---|---|---|---|---|
| 162 | | 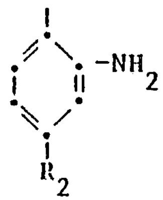 | 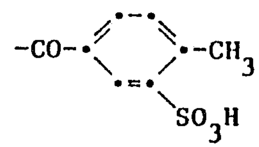 | 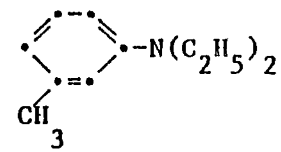 | rot |
| 163 | do. | do. | 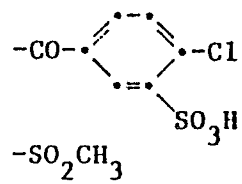 | do. | do. |
| 164 | do. | do. | $-SO_2CH_3$ | do. | do. |
| 165 | do. | do. | $-SO_2C_2H_5$ | do. | do. |
| 166 | do. | do. | -Cl | do. | do. |
| 167 | do. | do. | $-CF_3$ | do. | do. |
| 168 | do. | do. | $-CH_3$ | do. | gelbstichig rot |
| 169 | do. | do. | $-NHCOCH_3$ | do. | do. |
| 170 | do. | do. | $-SO_3H$ | do. | do. |

Tabelle 1 (Fortsetzung)

| Bei-spiel | Diazokomponente | | | Kupplungskomponente | Nuance auf Polyamid |
|---|---|---|---|---|---|
| | | $R_1$ | $R_2$ | | |
| 171 | 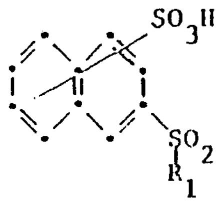 | 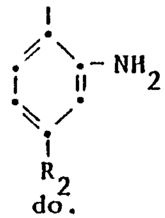 | $-COOH$ | 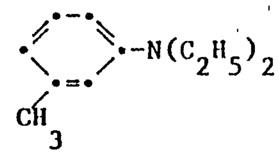 | gelbstichig rot |
| 172 | do. | do. | $-CONH_2$ | do. | do. |
| 173 | do. | do. | $-CONHCH_3$ | do. | do. |
| 174 | do. | do. | $-CON(CH_3)_2$ | do. | do. |
| 175 | do. | do. | -H | do. | do. |
| 176 | do. | 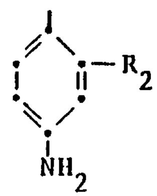 | do. | do. | do. |
| 177 | do. | 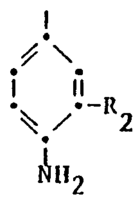 | $-OCH_3$ | do. | rot |

Tabelle 1 (Fortsetzung)

| Beispiel | Diazokomponente | R1 | R2 | Kupplungskomponente | Nuance auf Polyamid |
|---|---|---|---|---|---|
| 178 | 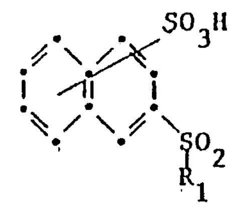 | 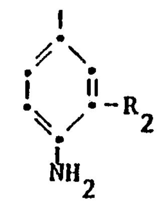 | $-CF_3$ | 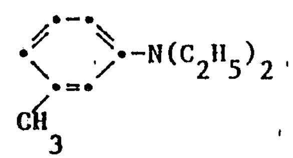 | rot |
| 179 | do. | 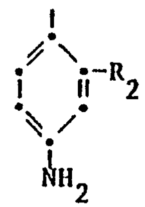 | $-Cl$ | do. | gelbstichig rot |
| 180 | 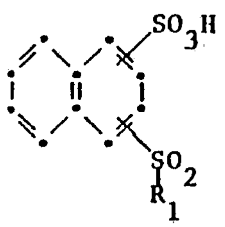 | 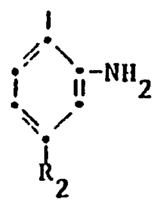 | $-SO_2NH_2$ | do. | rot |
| 181 | do. | do. | $-SO_2NHCH_3$ | do. | do. |
| 182 | do. | do. | $-SO_2N(CH_3)_2$ | do. | do. |
| 183 | do. | do. | $-SO_2NHC_2H_5$ | do. | do. |
| 184 | do. | do. | $-SO_2NHCH_2CH_2OH$ | do. | do. |

Tabelle 1 (Fortsetzung)

| Beispiel | Diazokomponente | | | Kupplungskomponente | Nuance auf Polyamid |
|---|---|---|---|---|---|
| | | $R_1$ | $R_2$ | | |
| 185 | 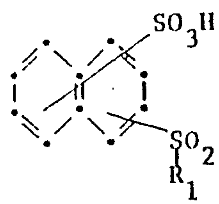 | 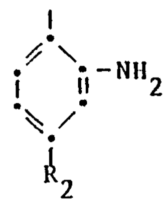 | $-SO_2N(CH_3)-CH_2CH_2OH$ | 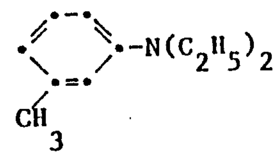 | rot |
| 186 | do. | do. | $-SO_2NH-$ 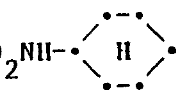 | do. | do. |
| 187 | do. | do. | $-SO_2NHCH_2CH_2SO_3H$ | do. | do. |
| 188 | do. | do. | $-SO_2NH-$ 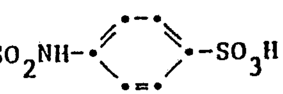 | do. | do. |
| 189 | do. | do. | $-CO-$ 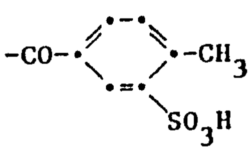 | do. | do. |
| 190 | do. | do. | $-CO-$ 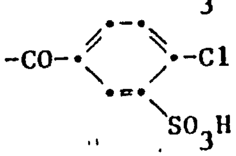 | do. | do. |
| 191 | do. | do. | $-SO_2CH_3$ | do. | do. |
| 192 | do. | do. | $-SO_2C_2H_5$ | do. | do. |

Tabelle 1 (Fortsetzung)

| Bei-spiel | Diazokomponente | R1 | R2 | Kupplungskomponente | Nuance auf Polyamid |
|---|---|---|---|---|---|
| 193 | 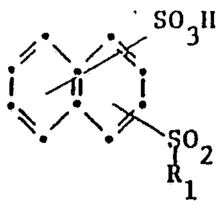 | 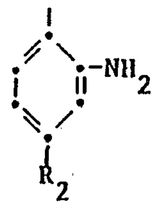 | Cl | 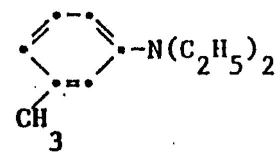 | rot |
| 194 | do. | do. | $-CF_3$ | do. | do. |
| 195 | do. | do. | $-CH_3$ | do. | gelbstichig rot |
| 196 | do. | do. | $-NHCOCH_3$ | do. | do. |
| 197 | do. | do. | $-SO_3H$ | do. | do. |
| 198 | do. | do. | $-COOH$ | do. | do. |
| 199 | do. | do. | $-CONH_2$ | do. | do. |
| 200 | do. | do. | $-CONHCH_3$ | do. | do. |
| 201 | do. | do. | $-CON(CH_3)_2$ | do. | do. |

Tabelle 1 (Fortsetzung)

| Beispiel | Diazokomponente | | | Kupplungskomponente | Nuance auf Polyamid |
|---|---|---|---|---|---|
| | | $R_1$ | $R_2$ | | |
| 202 | 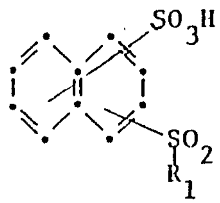 | 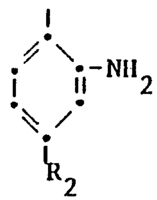 | -H | 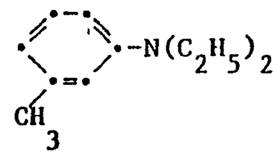 | gelbstichig rot |
| 203 | do. | 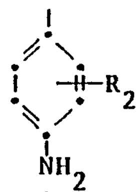 | do. | do. | do. |
| 204 | do. | 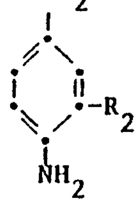 | $-OCH_3$ | do. | rot |
| 205 | do. | do. | $-CF_3$ | do. | do. |
| 206 | do. | 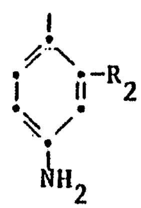 | -Cl | do. | gelbstichig rot |

Tabelle 1 (Fortsetzung)

| Bei-spiel | Diazokomponente | R1 | R2 | Kupplungskomponente | Nuance auf Polyamid |
|---|---|---|---|---|---|
| 207 | 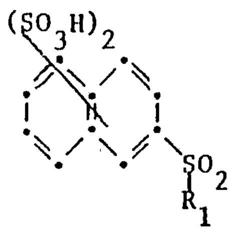 | 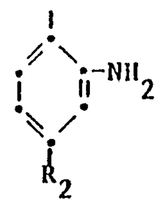 | $-SO_2NH_2$ | 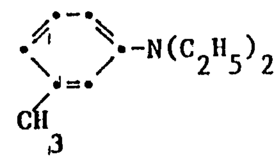 | rot |
| 208 | do. | do. | $-SO_2N(CH_3)_2$ | do. | do. |
| 209 | do. | do. | $-SO_2NHC_2H_5$ | do. | do. |
| 210 | do. | do. | $-SO_2N(C_2H_5)_2$ | do. | do. |
| 211 | do. | do. | 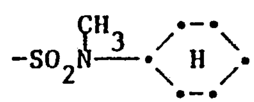 | do. | do. |
| 212 | do. | do. | $-SO_2CH_3$ | do. | do. |
| 213 | do. | do. | -Cl | do. | do. |
| 214 | do. | do. | $-CF_3$ | do. | do. |
| 215 | do. | do. | $-CH_3$ | do. | gelbstichig rot |

Tabelle 1 (Fortsetzung)

| Beispiel | Diazokomponente 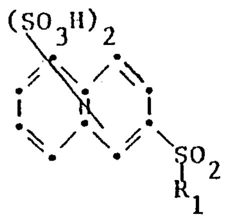 | $R_1$ | $R_2$ | Kupplungskomponente | Nuance auf Polyamid |
|---|---|---|---|---|---|
| 216 | | 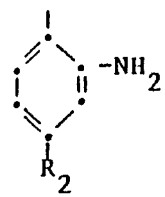 | $-NHCOCH_3$ | 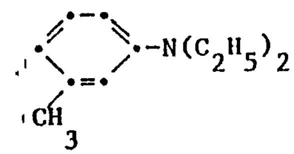 | gelbstichig rot |
| 217 | do. | do. | $-CONH_2$ | do. | do. |
| 218 | do. | do. | $-CON(CH_3)_2$ | do. | do. |
| 219 | do. | do. | -H | do. | do. |
| 220 | do. | 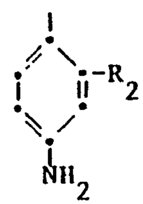 | do. | do. | do. |
| 221 | do. | do. | -Cl | do. | do. |
| 222 | do. | 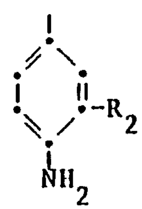 | $-OCH_3$ | do. | rot |

Tabelle 1 (Fortsetzung)

| Beispiel | Diazokomponente | | | Kupplungskomponente | Nuance auf Polyamid |
|---|---|---|---|---|---|
| | | $R_1$ | $R_2$ | | |
| 223 | 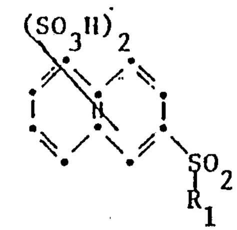 | 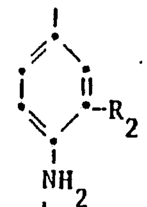 | $-CF_3$ | 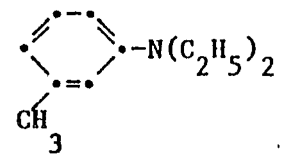 | rot |
| 224 | do. | 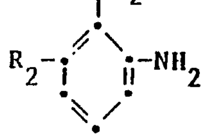 | $-Cl$ | do. | gelbstichig rot |
| 225 | 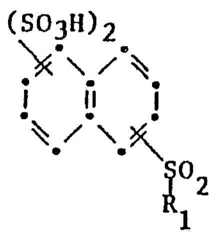 | 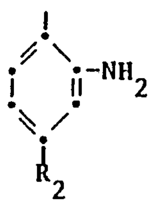 | $-SO_2NH_2$ | do. | rot |
| 226 | do. | do. | $-SO_2N(CH_3)_2$ | do. | do. |
| 227 | do. | do. | $-SO_2NHC_2H_5$ | do. | do. |
| 228 | do. | do. | $-SO_2N(C_2H_5)_2$ | do. | do. |
| 229 | do. | do. | $-SO_2N(CH_3)-$ 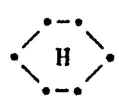 | do. | do. |
| 230 | do. | do. | $-SO_2CH_3$ | do. | do. |

Tabelle 1 (Fortsetzung)

| Bei-spiel | 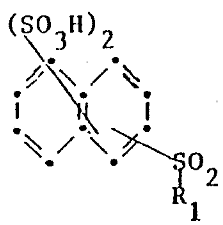 | Diazokomponente $R_1$ | $R_2$ | Kupplungskomponente | Nuance auf Polyamid |
|---|---|---|---|---|---|
| 231 | | 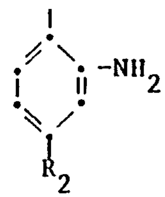 | -Cl | 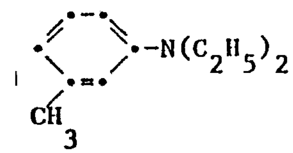 | rot |
| 232 | do. | do. | $-CF_3$ | do. | do. |
| 233 | do. | do. | $-CH_3$ | do. | gelbstichig rot |
| 234 | do. | do. | $-NHCOCH_3$ | do. | do. |
| 235 | do. | do. | $-CONH_2$ | do. | do. |
| 236 | do. | do. | $-CON(CH_3)_2$ | do. | do. |
| 237 | do. | do. | -H | do. | do. |
| 238 | do. | 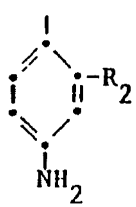 | do. | do. | do. |

Tabelle 1 (Fortsetzung)

| Bei-spiel | Diazokomponente | R1 | R2 | Kupplungskomponente | Nuance auf Polyamid |
|---|---|---|---|---|---|
| 239 | 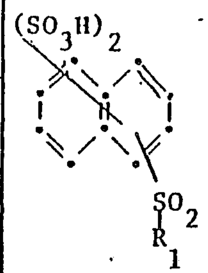 | 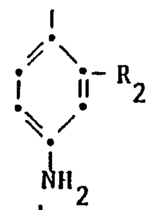 | -Cl | 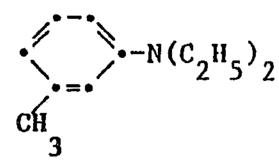 | gelbstichig rot |
| 240 | do. | 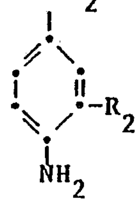 | $-OCH_3$ | do. | rot |
| 241 | do. | do. | $-CF_3$ | do. | do. |
| 242 | do. | 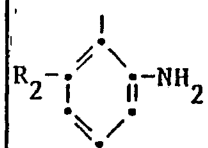 | -Cl | do. | gelbstichig rot |
| 243 | 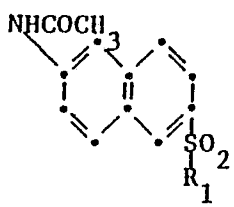 | 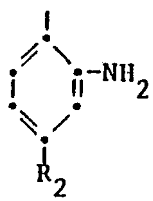 | $-SO_3H$ | do. | rot |
| 244 | do. | do. | 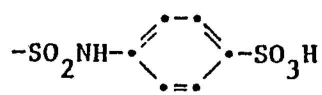 | do. | do. |
| 245 | do. | do. | $-SO_2NHCH_2CH_2SO_3H$ | do. | do. |

Tabelle 1 (Fortsetzung)

| Beispiel | Diazokomponente | R1 | R2 | Kupplungskomponente | Nuance auf Polyamid |
|---|---|---|---|---|---|
| 246 | 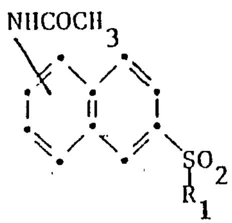 | 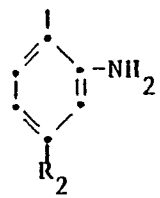 | 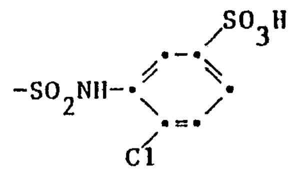 | 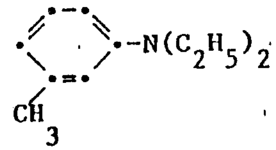 | rot |
| 247 | do. | do. | 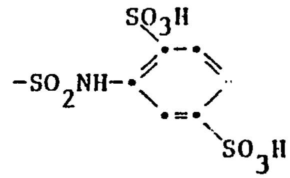 | do. | do. |
| 248 | do. | do. | 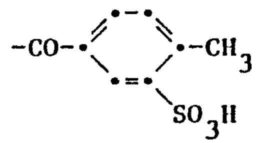 | do. | do. |
| 249 | do. | do. | 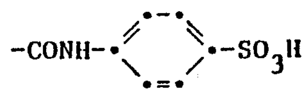 | do. | gelbstichig rot |
| 250 | 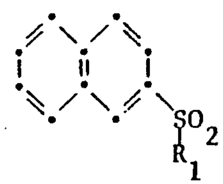 | do. | $-SO_3H$ | 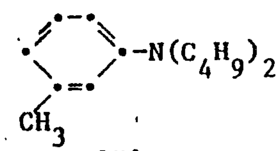 | do. |
| 251 | do. | do. | do. | 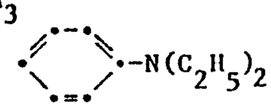 | do. |
| 252 | do. | do. | do. | 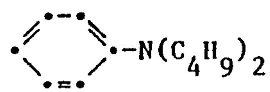 | do. |

Tabelle 1 (Fortsetzung)

| Bei-spiel | Diazokomponente | $R_1$ | $R_2$ | Kupplungskomponente | Nuance auf Polyamid |
|---|---|---|---|---|---|
| 253 | 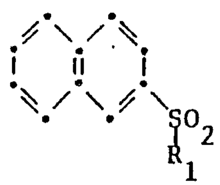 | 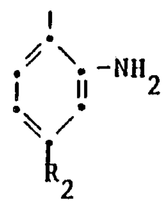 | $-SO_3H$ | 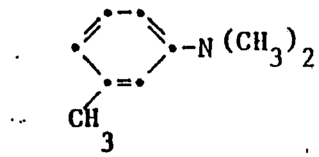 | gelbstichig rot |
| 254 | do. | do. | do. | 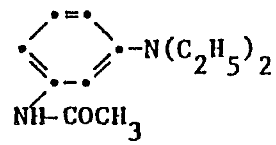 | do. |
| 255 | do. | do. | do. | 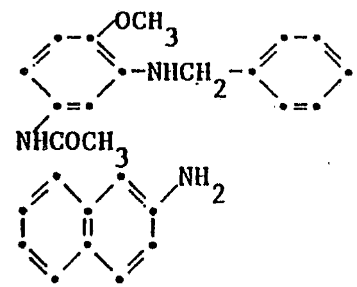 | rot |
| 256 | do. | do. | do. |  | do. |
| 257 | do. | do. | do. | 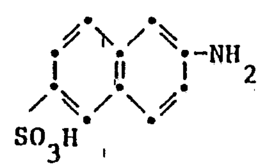 | do. |
| 258 | do. | do. | do. | 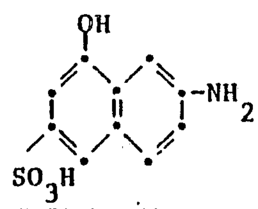 | do. |

Tabelle 1 (Fortsetzung)

| Bei-spiel | Diazokomponente | R1 | R2 | Kupplungskomponente | Nuance auf Polyamid |
|---|---|---|---|---|---|
| 259 | 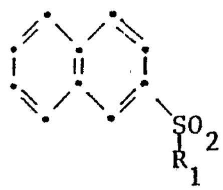 | 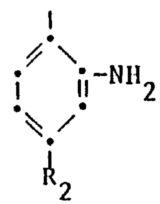 | $-SO_3H$ | 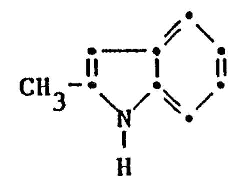 | rotstichig gelb |
| 260 | do. | do. | do. | 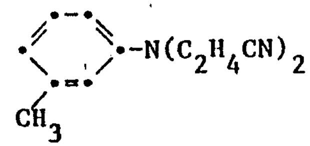 | orange |
| 261 | do. | do. | do. | 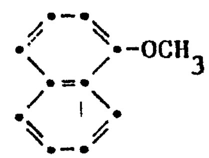 | do. |
| 262 | do. | do. | do. | 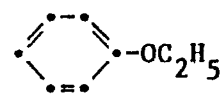 | gelbstichig orange |
| 263 | do. | do. | do. | 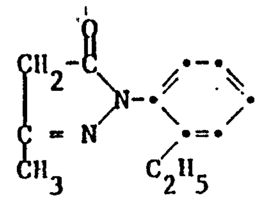 | rotstichig gelb |

Tabelle 1 (Fortsetzung)

| Beispiel | Diazokomponente | | | Kupplungskomponente | Nuance auf Polyamid |
|---|---|---|---|---|---|
| | | $R_1$ | $R_2$ | | |
| 264 | 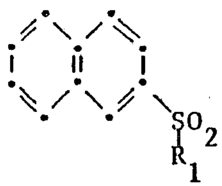 | 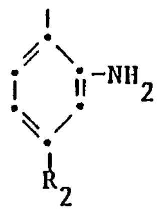 | $-SO_3H$ | 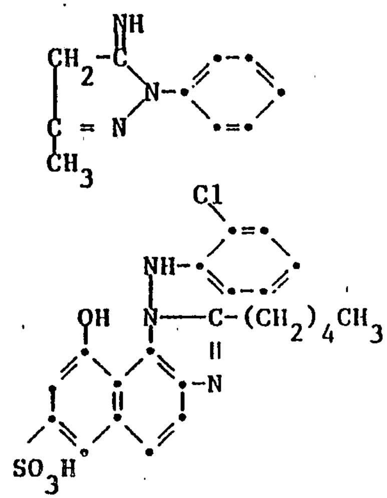 | gelb |
| 265 | do. | do. | do. | | rot |
| 266 | 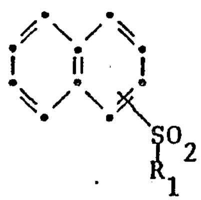 | do. | do. | 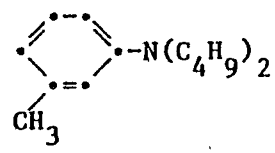 | gelbstichig rot |
| 267 | do. | do. | do. | 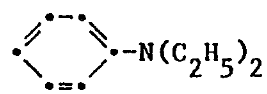 | do. |
| 268 | do. | do. | do. | 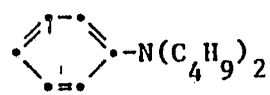 | do. |

Tabelle 1 (Fortsetzung)

| Bei-spiel | Diazokomponente | R1 | R2 | Kupplungskomponente | Nuance auf Polyamid |
|---|---|---|---|---|---|
| 269 | 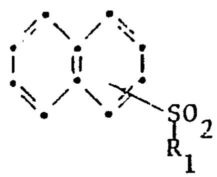 | 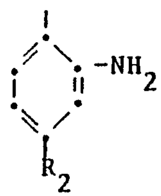 | $-SO_3H$ | 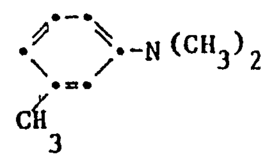 | gelbstichig rot |
| 270 | do. | do. | do. | 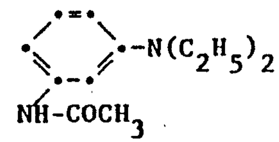 | do. |
| 271 | do. | do. | do. | 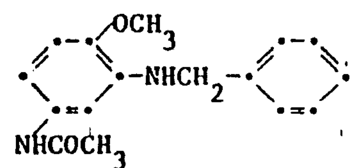 | rot |
| 272 | do. | do. | do. | 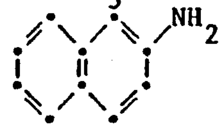 | do. |
| 273 | do. | do. | do. | 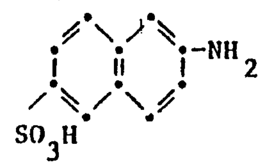 | do. |
| 274 | do. | do. | do. | 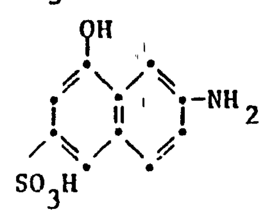 | do. |

Tabelle 1 (Fortsetzung)

| Bei-spiel | Diazokomponente | $R_1$ | $R_2$ | Kupplungskomponente | Nuance auf Polyamid |
|---|---|---|---|---|---|
| 275 | 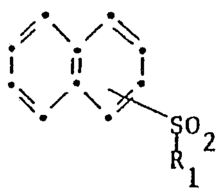 | 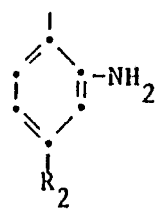 | $-SO_3H$ | 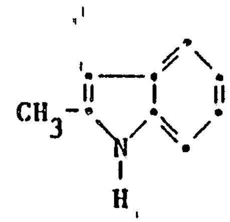 | rotstichig gelb |
| 276 | do. | do. | do. | 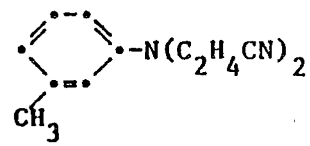 | orange |
| 277 | do. | do. | do. | 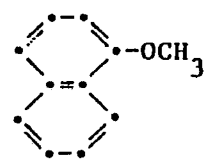 | do. |
| 278 | do. | do. | do. | 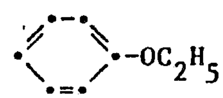 | gelbstichig orange |
| 279 | do. | do. | do. | 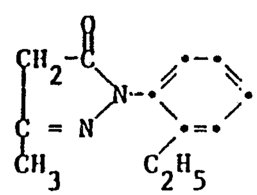 | rotstichig gelb |

Tabelle 1 (Fortsetzung)

| Bei-spiel | Diazokomponente | $R_1$ | $R_2$ | Kupplungskomponente | Nuance auf Polyamid |
|---|---|---|---|---|---|
| 280 | 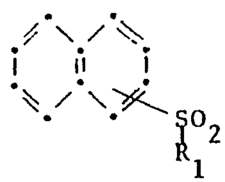 | 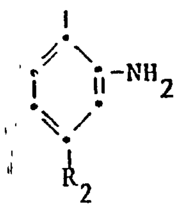 | $-SO_3H$ | 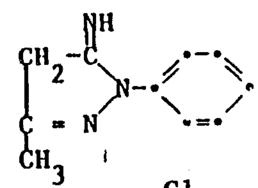 | gelb |
| 281 | do. | do. | do. | 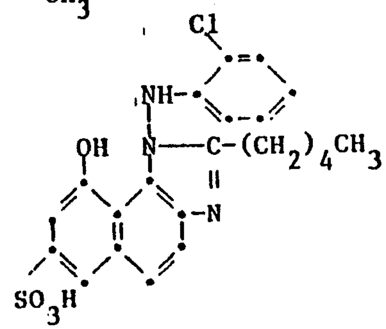 | rot |
| 282 | 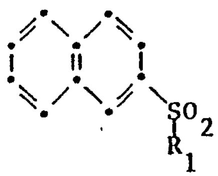 | do. | 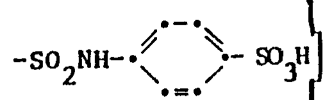 | 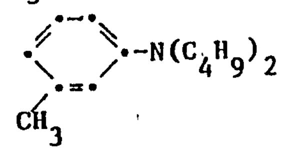 | do. |
| 283 | do. | do. | $-SO_2NHCH_2CH_2SO_3H$ | do. | do. |
| 284 | do | do. | 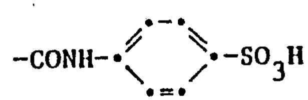 | do. | gelbstichig rot |

Tabelle 1 (Fortsetzung)

| Bei-spiel | Diazokomponente | R1 | R2 | Kupplungskomponente | Nuance auf Polyamid |
|---|---|---|---|---|---|
| 285 | 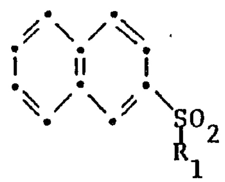 | 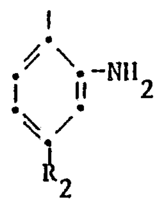 | 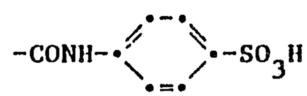 | 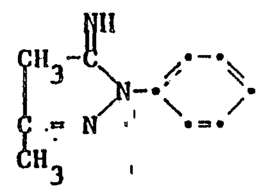 | gelb |
| 286 | do. | do. | 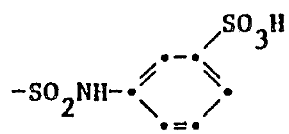 | do. | do. |
| 287 | do. | do. | do. | 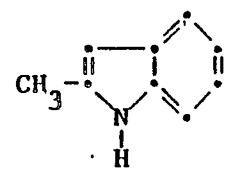 | rotstichig gelb |
| 288 | do. | do. | 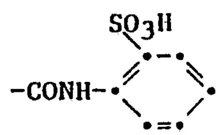 | do. | do. |
| 289 | do | do. | $-SO_2NH_2$ | 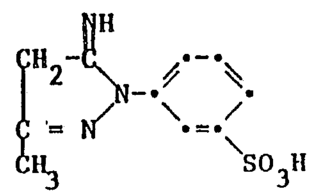 | gelb |
| 290 | do. | do. | $-SO_2NHCH_3$ | do. | do. |
| 291 | do. | do. | 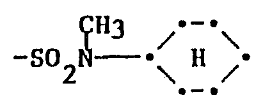 | do. | do. |

Tabelle 1 (Fortsetzung)

| Bei-spiel | Diazokomponente | | | Kupplungskomponente | Nuance auf Polyamid |
|---|---|---|---|---|---|
| | | $R_1$ | $R_2$ | | |
| 292 | 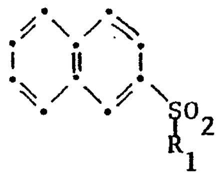 | 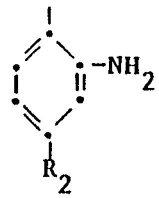 | $-CONH_2$ | 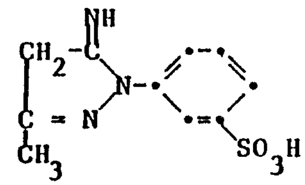 | gelb |
| 293 | do. | do. | $-CON(CH_3)_3$ | do. | do. |
| 294 | do. | do. | $-SO_2C_2H_5$ | do. | do. |
| 295 | do. | do. | $-NHCOCH_3$ | do. | do. |
| 296 | do. | do. | $-CF_3$ | do. | do. |
| 297 | do. | do. | $-Cl$ | do. | do. |
| 298 | do. | do. | $-SO_2NH_2$ | 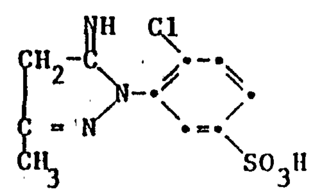 | do. |
| 299 | do. | do. | $-CON(CH_3)_2$ | do. | do. |

Tabelle 1 (Fortsetzung)

| Bei-spiel | Diazokomponente | | | Kupplungskomponente | Nuance auf Polyamid |
|---|---|---|---|---|---|
| | | $R_1$ | $R_2$ | | |
| 300 | 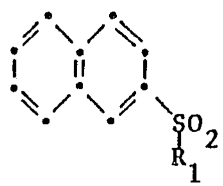 | 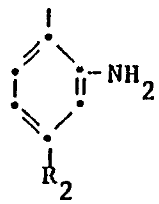 | $-SO_2CH_3$ | 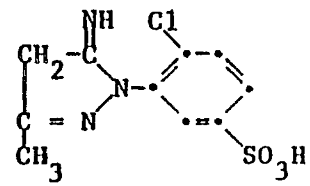 | gelb |
| 301 | do. | do. | $-NHCOCH_3$ | do. | do. |
| 302 | do. | do. | -Cl | do. | do. |
| 303 | do. | do. | $-CF_3$ | do. | do. |
| 304 | do. | do. | $-SO_2NH_2$ | 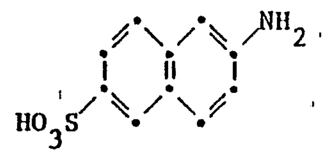 | rot |
| 305 | do. | do. | -Cl | do. | do. |

Tabelle 1 (Fortsetzung)

| Bei-spiel | Diazokomponente | R1 | R2 | Kupplungskomponente | Nuance auf Polyamid |
|---|---|---|---|---|---|
| 306 | 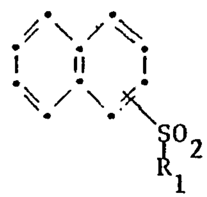 | 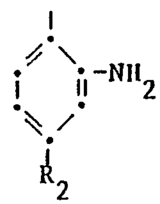 | 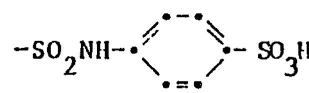 | 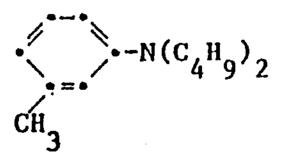 | rot |
| 307 | do. | do. | $-SO_2NHCH_2CH_2SO_3H$ | do. | do. |
| 308 | do | do. | 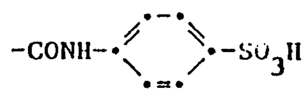 | do. | gelbstichig rot |

Tabelle 1 (Fortsetzung)

| Bei-spiel | Diazokomponente | R1 | R2 | Kupplungskomponente | Nuance auf Polyamid |
|---|---|---|---|---|---|
| 309 | 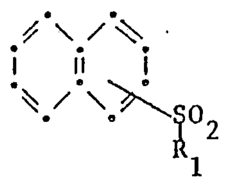 | 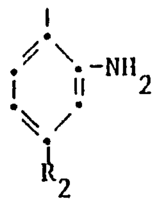 | 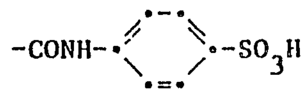 | 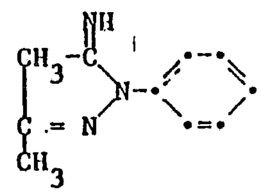 | gelb |
| 310 | do. | do. | 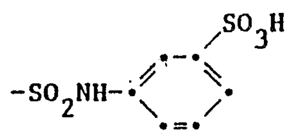 | do. | do. |
| 311 | do. | do. | do. | 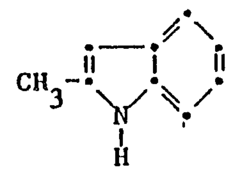 | rotstichig gelb |
| 312 | do. | do. | 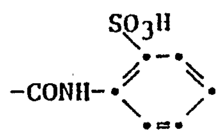 | do. | do. |
| 313 | do | do. | $-SO_2NH_2$ | 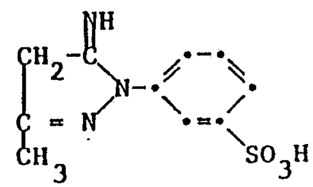 | gelb |
| 314 | do. | do. | $-SO_2NHCH_3$ | do. | do. |
| 315 | do. | do. | 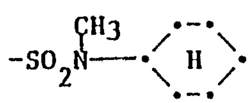 | do. | do. |

Tabelle 1 (Fortsetzung)

| Bei-spiel | Diazokomponente | $R_1$ | $R_2$ | Kupplungskomponente | Nuance auf Polyamid |
|---|---|---|---|---|---|
| 316 | 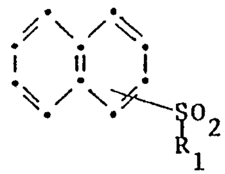 | 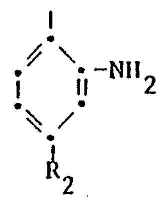 | $-CONH_2$ | 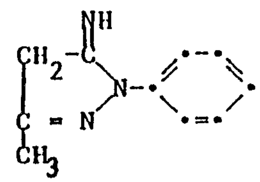 | gelb |
| 317 | do. | do. | $-CON(CH_3)_2$ | do. | do. |
| 318 | do. | do. | $-SO_2C_2H_5$ | do. | do. |
| 319 | do. | do. | $-NHCOCH_3$ | do. | do. |
| 320 | do. | do. | $-CF_3$ | do. | do. |
| 321 | do. | do. | $-Cl$ | do. | do. |
| 322 | do. | do. | $-SO_2NH_2$ | 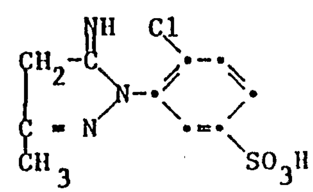 | do. |
| 323 | do. | do. | $-CON(CH_3)_2$ | do. | do. |

Tabelle 1 (Fortsetzung)

| Bei-spiel | Diazokomponente | | | Kupplungskomponente | Nuance auf Polyamid |
|---|---|---|---|---|---|
| | | $R_1$ | $R_2$ | | |
| 324 | 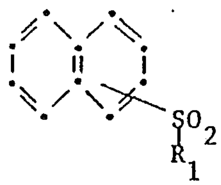 | 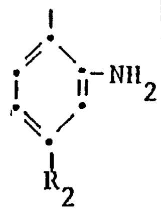 | $-SO_2CH_3$ | 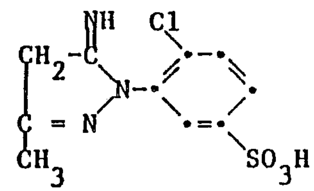 | gelb |
| 325 | do. | do. | $-NHCOCH_3$ | do. | do. |
| 326 | do. | do. | -Cl | do. | do. |
| 327 | do. | do. | $-CF_3$ | do. | do. |
| 328 | do. | do. | $-SO_2NH_2$ | 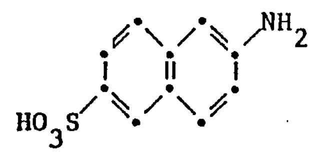 | rot |
| 329 | do. | do. | -Cl | do. | do. |

Tabelle 1 (Fortsetzung)

| Beispiel | Diazokomponente 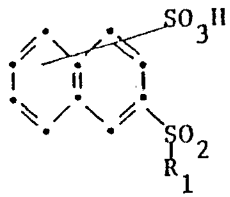 | $R_1$ | $R_2$ | Kupplungskomponente | Nuance auf Polyamid |
|---|---|---|---|---|---|
| 330 | | 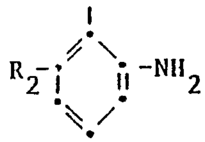 | -Cl | 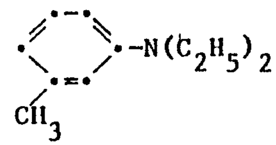 | gelbstichig rot |
| 331 | do. | do. | do. | 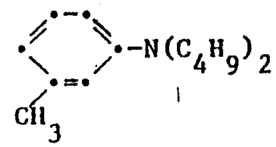 | do. |
| 332 | do. | do. | do. | 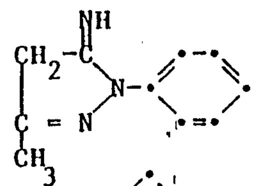 | gelb |
| 333 | do. | do. | do. | 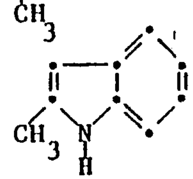 | rotstichig gelb |
| 334 | do. | 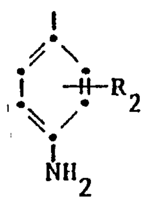 | -H | do. | do. |
| 335 | do. | do. | do. | 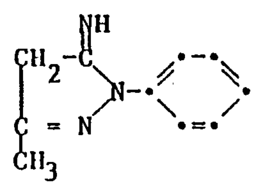 | gelb |

Tabelle 1 (Fortsetzung)

| Bei-spiel | Diazokomponente | | | Kupplungskomponente | Nuance auf Polyamid |
|---|---|---|---|---|---|
| | 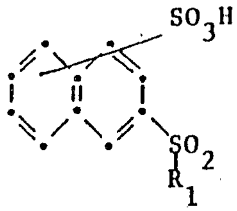 | $R_1$ | $R_2$ | | |
| 336 | | 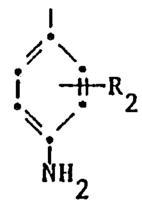 | -H | 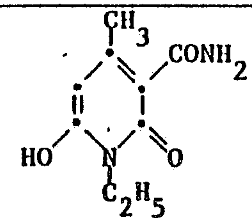 | grünstichig gelb |
| 337 | do. | do. | do. | 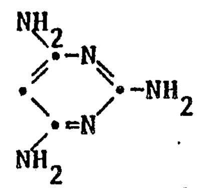 | gelb |
| 338 | do. | 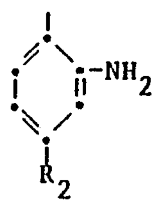 | Cl | 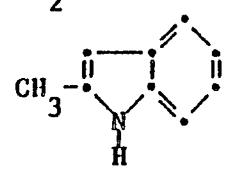 | rotstichig gelb |
| 339 | do. | do. | $-SO_2NH_2$ | do. | do. |
| 340 | do. | do. | $-CF_3$ | do. | do. |
| 341 | do. | do. | $-CONH_2$ | do. | do. |
| 342 | do. | do. | -H | do. | do. |

Tabelle 1 (Fortsetzung)

| Beispiel | Diazokomponente 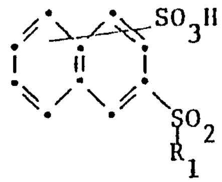 | $R_1$ | $R_2$ | Kupplungskomponente | Nuance auf Polyamid |
|---|---|---|---|---|---|
| 343 | | 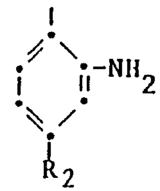 | $-H$ | 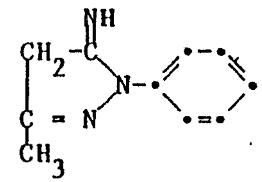 | gelb |
| 344 | do. | do. | $-SO_2NH_2$ | do. | do. |
| 345 | do. | do. | $-CF_3$ | do. | do. |
| 346 | do. | do. | $-CONH_2$ | do. | do. |
| 347 | do. | do. | $-H$ | 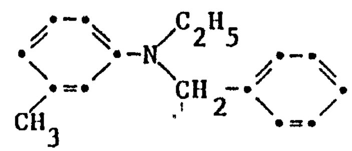 | rotstichig orange |
| 348 | do. | do. | $-Cl$ | 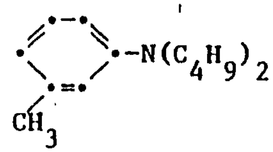 | rot |
| 349 | do. | do. | $-CF_3$ | do. | do. |

Tabelle 1 (Fortsetzung)

| Beispiel | Diazokomponente | R1 | R2 | Kupplungskomponente | Nuance auf Polyamid |
|---|---|---|---|---|---|
| 350 | 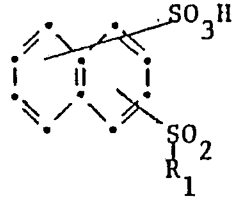 | 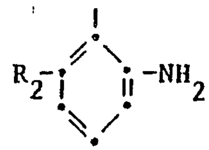 | -Cl | 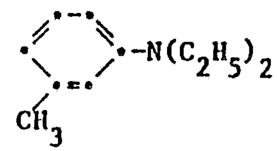 | gelbstichig rot |
| 351 | do. | do. | do. | 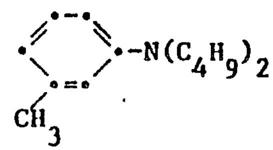 | do. |
| 352 | do. | do. | do. | 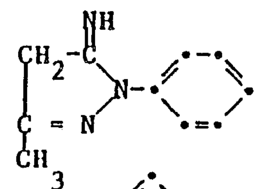 | gelb |
| 353 | do. | do. | do. | 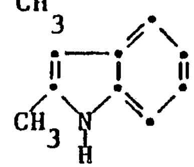 | rotstichig gelb |
| 354 | do. | 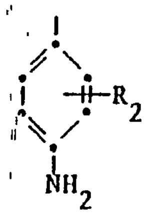 | -H | do. | do. |
| 355 | do. | do. | do. | 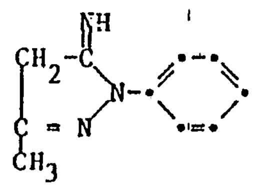 | gelb |

Tabelle 1 (Fortsetzung)

| Bei- spiel | | Diazokomponente $R_1$ | $R_2$ | Kupplungskomponente | Nuance auf Polyamid |
|---|---|---|---|---|---|
| 356 | 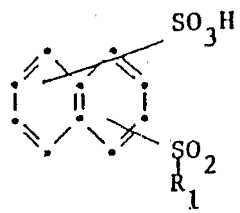 | 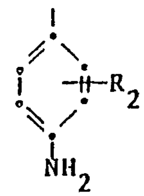 | $-H$ | 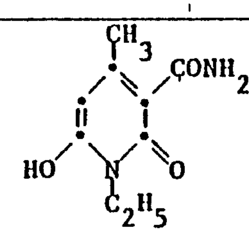 | grünstichig gelb |
| 357 | do. | do. | do. | 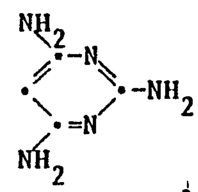 | gelb |
| 358 | do. | 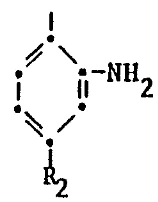 | Cl | 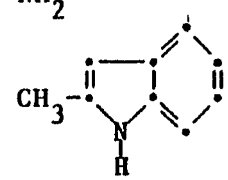 | rotstichig gelb |
| 359 | do. | do. | $-SO_2NH_2$ | do. | do. |
| 360 | do. | do. | $-CF_3$ | do. | do. |
| 361 | do. | do. | $-CONH_2$ | do. | do. |
| 362 | do. | do. | H | do. | do. |

Tabelle 1 (Fortsetzung)

| Bei-spiel | Diazokomponente | R1 | R2 | Kupplungskomponente | Nuance auf Polyamid |
|---|---|---|---|---|---|
| 363 | 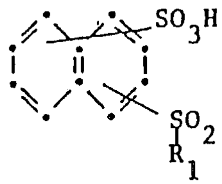 | 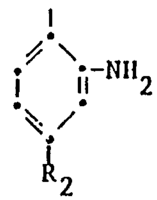 | -H | 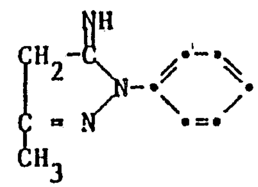 | gelb |
| 364 | do. | do. | $-SO_2NH_2$ | do. | do. |
| 365 | do. | do. | $-CF_3$ | do. | do. |
| 366 | do. | do. | $-CONH_2$ | do. | do. |
| 367 | do. | do. | -H | 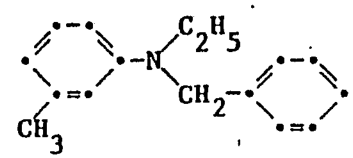 | rotstichig orange |
| 368 | do. | do. | -Cl | 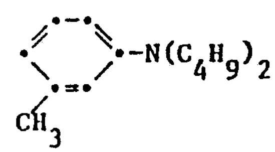 | rot |
| 369 | do. | do. | $-CF_3$ | do. | do. |

Tabelle 1 (Fortsetzung)

| Beispiel | Diazokomponente 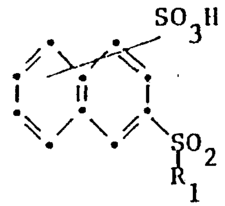 | $R_1$ | $R_2$ | Kupplungskomponente | Nuance auf Polyamid |
|---|---|---|---|---|---|
| 370 | | 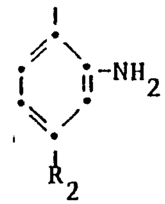 | $-SO_2NH_2$ | 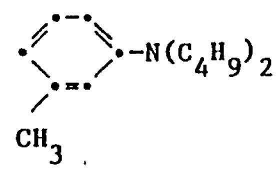 | rot |
| 371 | do. | do. | do. | 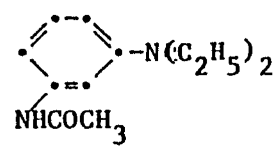 | do. |
| 372 | do. | do. | do. | 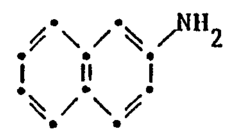 | do. |
| 373 | do. | do. | do. | 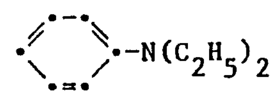 | gelbstichig rot |
| 374 | do. | do. | do. | 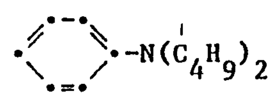 | do. |
| 375 | do. | do. | do. | 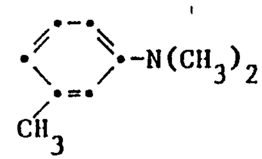 | do. |

Tabelle 1 (Fortsetzung)

| Bei-spiel | Diazokomponente | R1 | R2 | Kupplungskomponente | Nuance auf Polyamid |
|---|---|---|---|---|---|
| 376 | 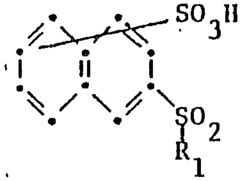 | 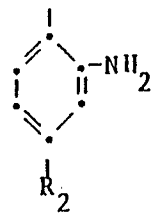 | $-SO_2NH_2$ | 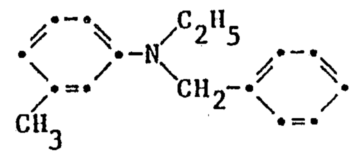 | gelbstichig rot |
| 377 | do. | do. | do. | 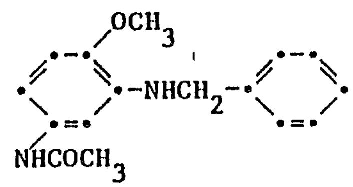 | blaustichig rot |
| 378 | do. | do. | do. | 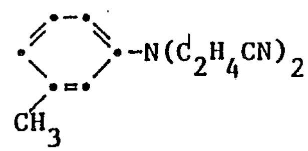 | orange |
| 379 | do. | do. | do. | 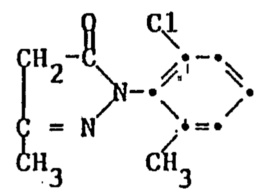 | rotstichig gelb |
| 380 | do. | do. | do. | 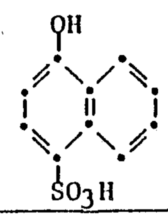 | braun |

Tabelle 1 (Fortsetzung)

| Bei-spiel | Diazokomponente 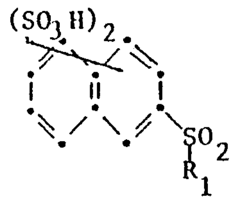 | R1 | R2 | Kupplungskomponente | Nuance auf Polyamid |
|---|---|---|---|---|---|
| 381 | | 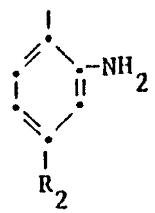 | 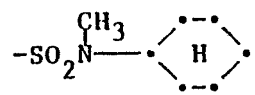 | 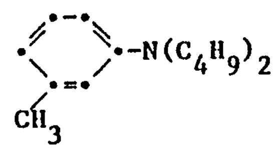 | rot |
| 382 | do. | do. | $-CF_3$ | do. | do. |
| 383 | do. | do. | $-Cl$ | do. | do. |
| 384 | do. | do. | $-SO_2N(CH_3)_2$ | do. | do. |
| 385 | do. | do. | do. | 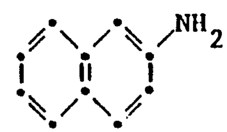 | do. |
| 386 | do. | do. | $-SO_2NH_2$ | 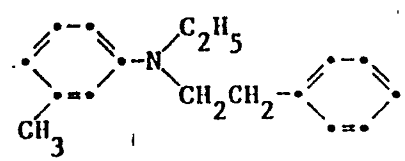 | do. |

Tabelle 1 (Fortsetzung)

| Bei-spiel | Diazokomponente | | | Kupplungskomponente | Nuançe auf Polyamid |
|---|---|---|---|---|---|
| | 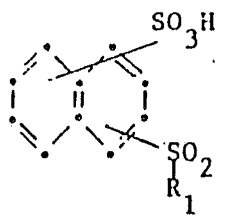 | $R_1$ | $R_2$ | | |
| 387 | | 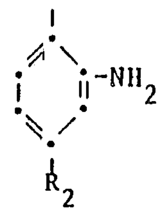 | $-SO_2NH_2$ | 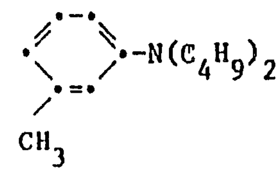 | rot |
| 388 | do. | do. | do. | 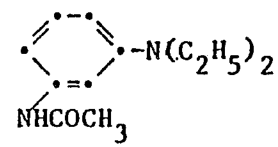 | do. |
| 389 | do. | do. | do. | 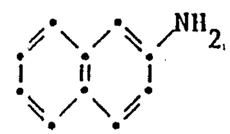 | do. |
| 390 | do. | do. | do. | 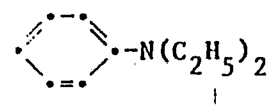 | gelbstichig rot |
| 391 | do. | do. | do. | 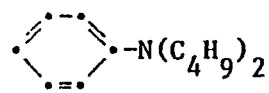 | do. |
| 392 | do. | do. | do. | 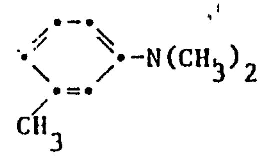 | do. |

Tabelle 1 (Fortsetzung)

| Bei-spiel. | Diazokomponente | R1 | R2 | Kupplungskomponente | Nuance auf Polyamid |
|---|---|---|---|---|---|
| 393 | 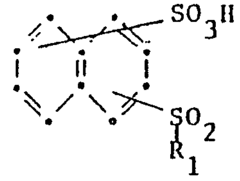 | 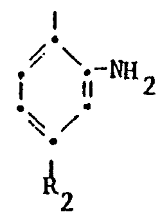 | $-SO_2NH_2$ | 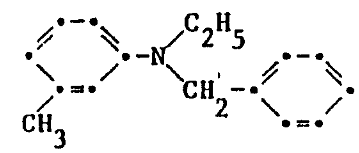 | gelbstichig rot |
| 394 | do. | do. | do. | 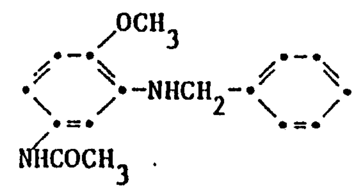 | blaustichig rot |
| 395 | do. | do. | do. | 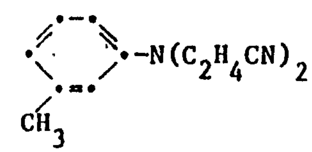 | orange |
| 396 | do. | do. | do. | 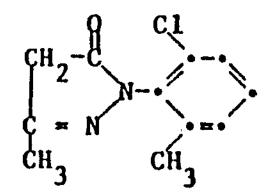 | rotstichig gelb |
| 397 | do. | do. | do. | 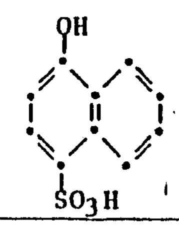 | braun |

Tabelle 1 (Fortsetzung)

| Beispiel | Diazokomponente | | | Kupplungskomponente | Nuance auf Polyamid |
|---|---|---|---|---|---|
| | 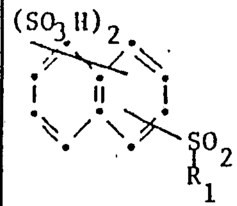 | $R_1$ | $R_2$ | | |
| 398 | | 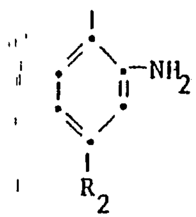 | 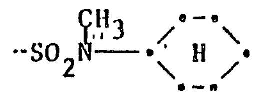 | 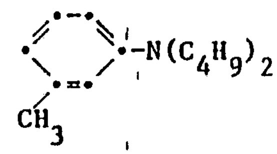 | rot |
| 399 | do. | do. | $-CF_3$ | do. | do. |
| 400 | do. | do. | $-Cl$ | do. | do. |
| 401 | do. | do. | $-SO_2N(CH_3)_2$ | do. | do. |
| 402 | do. | do. | do. | 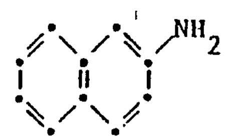 | do. |
| 403 | do. | do. | $-SO_2NH_2$ | 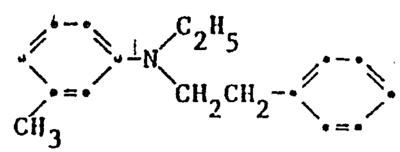 | do. |

Tabelle 1 (Fortsetzung)

| Bei-spiel | Diazokomponente | R1 | R2 | Kupplungskomponente | Nuance auf Polyamid |
|---|---|---|---|---|---|
| 404 | 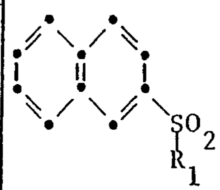 | 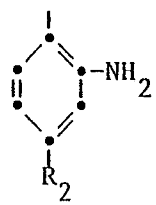 | $-SO_3H$ | 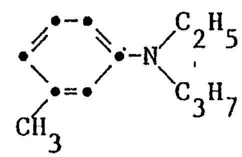 | gelbstichig rot |
| 405 | do. | do. | 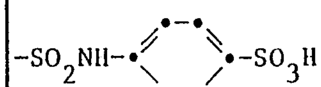 | do. | rot |

Tabelle 1 (Fortsetzung)

| Beispiel | Diazokomponente | $R_1$ | $R_2$ | Kupplungskomponente | Nuance auf Polyamid |
|---|---|---|---|---|---|
| 406 | 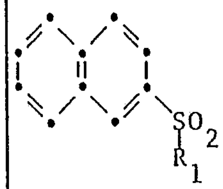 | 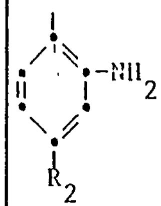 | 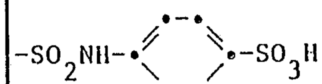 | 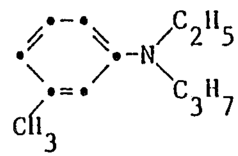 | rot |
| 407 | do. | do. | do. | 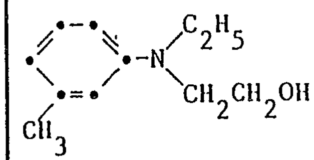 | do. |
| 408 | 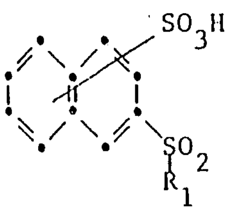 | 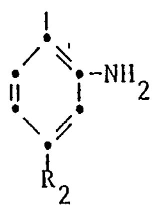 | $-SO_2C_2H_5$ | do. | do. |
| 409 | do. | do. | do. | 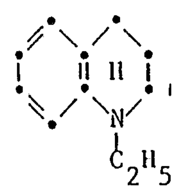 | do. |

Tabelle 1 (Fortsetzung)

| Beispiel | Diazokomponente | R1 | R2 | Kupplungskomponente | Nuance auf Polyamid |
|---|---|---|---|---|---|
| 410 | 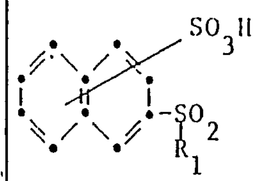 | 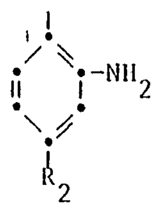 | $-SO_2C_2H_5$ | 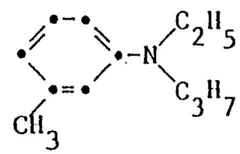 | rot |
| 411 | do. | do. | $-SO_2NH_2$ | do. | do. |
| 412 | do. | do. | do. | 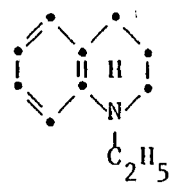 | do. |
| 413 | do. | do. | $-SO_2NHCH_3$ | do. | do. |
| 414 | do. | do. | do. | 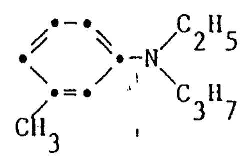 | do. |

Tabelle 2

| Bei-spiel | | Diazokomponente R₁ | Diazokomponente R₂ | Kupplungskomponente | Nuance auf Polyamid |
|---|---|---|---|---|---|
| 415 | 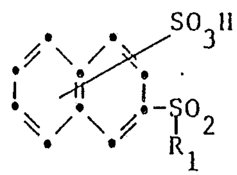 | 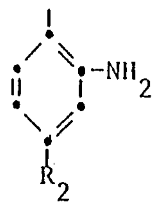 | $-SO_2NHCH_3$ | 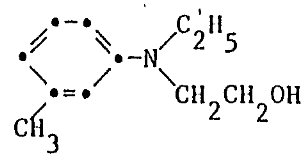 | rot |
| 416 | do. | do. | $-CF_3$ | do. | do. |
| 417 | do. | do. | do. | 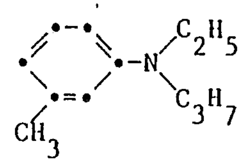 | do. |
| 418 | do. | do. | do. | 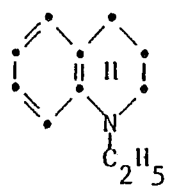 | do. |

Tabelle 2 (Fortsetzung)

| Bei-spiel | Diazokomponente | $R_1$ | $R_2$ | Kupplungskomponente | Nuance auf Wolle |
|---|---|---|---|---|---|
| 419 | 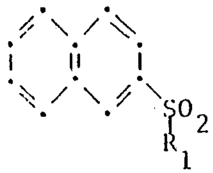 | 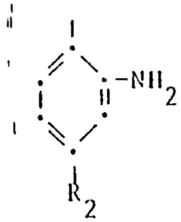 | $-SO_3H$ | 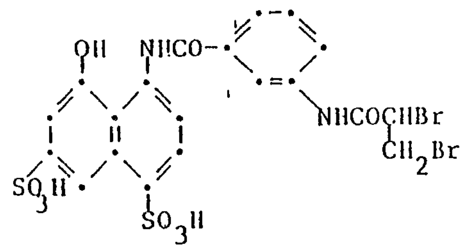 | rot |
| 420 | do. | do. | do. | 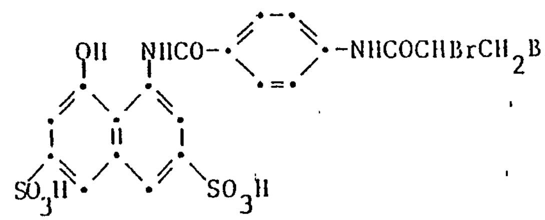 | do. |
| 421 | do. | do. | do. | 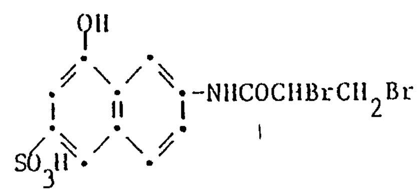 | gelbstichig rot |
| 422 | do. | do. | do. | 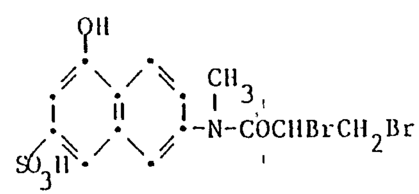 | rotstichig orange |

Tabelle 2 (Fortsetzung)

| Bei-spiel | Diazokomponente | | | Kupplungskomponente | Nuance auf Wolle |
|---|---|---|---|---|---|
| | | $R_1$ | $R_2$ | | |
| 423 | 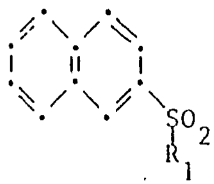 | 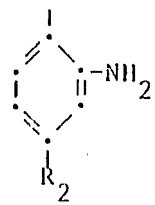 | $-SO_3H$ | 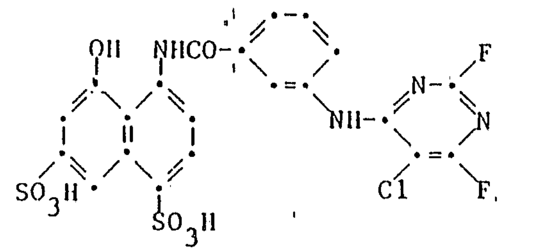 | rot |
| 424 | 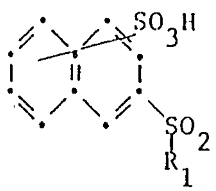 | do. | $-Cl$ | 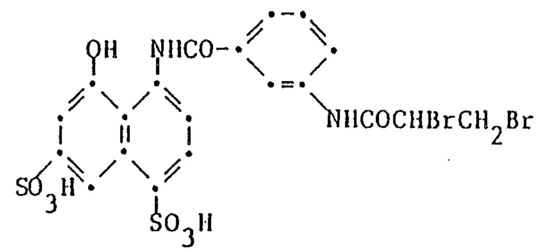 | do. |
| 425 | do. | do. | do. | 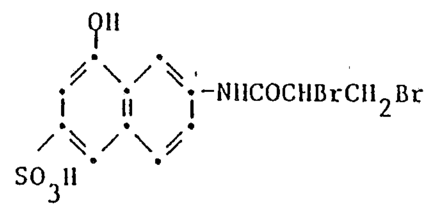 | gelbstichig rot |
| 426 | do. | do. | $-CF_3$ | do. | do. |
| 427 | do. | do. | do. | 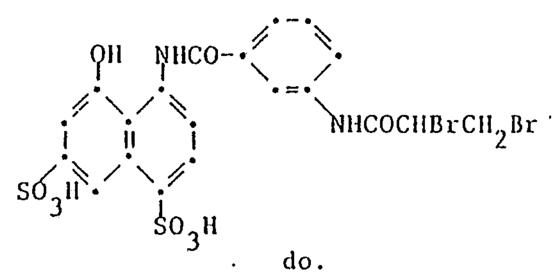 | rot |
| 428 | do. | do. | $-SO_2NH_2$ | do. | do. |

Tabelle 2 (Fortsetzung)

| Bei-spiel | Diazokomponente | | | Kupplungskomponente | Nuance auf Wolle |
|---|---|---|---|---|---|
| | | $R_1$ | $R_2$ | | |
| 429 | 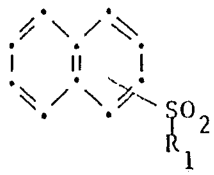 | 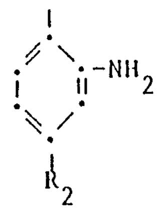 | $-SO_3H$ | 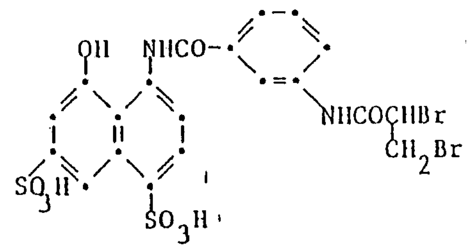 | rot |
| 430 | do. | do. | do. | 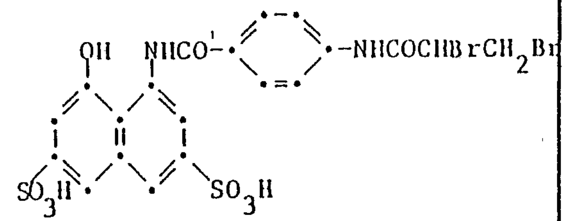 | do. |
| 431 | do. | do. | do. | 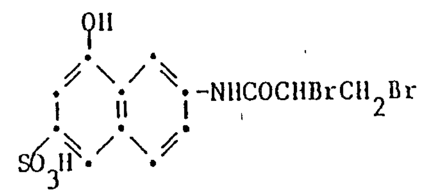 | gelbstichig rot |
| 432 | do. | do. | do. | 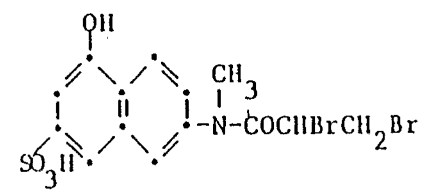 | rotstichig orange |

Tabelle 2 (Fortsetzung)

| Bei-spiel | Diazokomponente | | | Kupplungskomponente | Nuance auf Wolle |
|---|---|---|---|---|---|
| | | $R_1$ | $R_2$ | | |
| 433 | 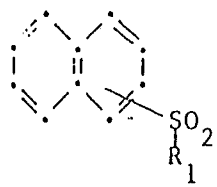 | 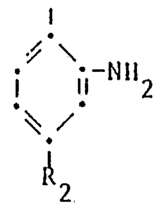 | $-SO_3H$ | 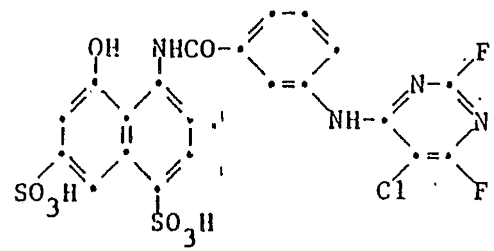 | rot |
| 434 | 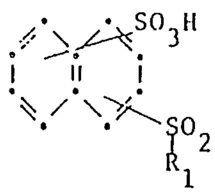 | do. | $-Cl$ | 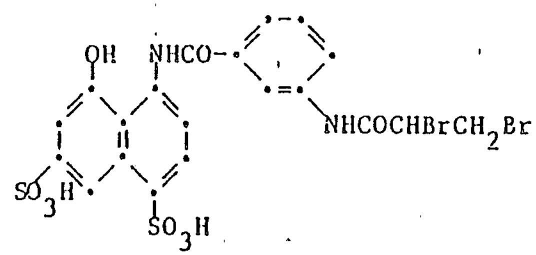 | do. |
| 435 | do. | do. | do. | 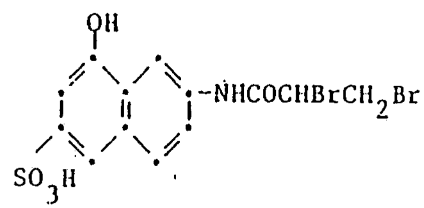 | gelbstichig rot |
| 436 | do. | do. | $-CF_3$ | do. | do. |
| 437 | do. | do. | do. | 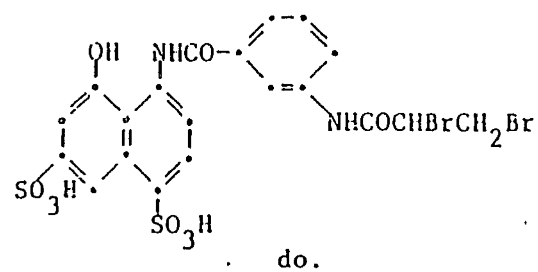 | rot |
| 438 | do. | do. | $-SO_2NH_2$ | do. | do. |

Färbevorschrift I

Man färbt 10 Teile Helancatrikot in 500 Teilen einer wässerigen Flotte, die 1 g/l Mononatriumphosphat enthält und mit Dinatriumphosphat auf pH 6 gestellt wird. Der Anteil des Farbstoffes gemäss Beispiel 13 beträgt 0,7 %, bezogen auf das Fasergewicht. Die Färbedauer bei einer Temperatur von 98° beträgt 30 bis 90 Minuten. Das gefärbte Helancastück wird anschliessend herausgenommen und wie üblich gewaschen und getrocknet. Man erhält ein gelbstichig rot gefärbtes Helancastück, das eine reine Nuance und sehr gute Gesamtechtheiten aufweist.

Färbevorschrift II

Man färbt 10 Teile eines Wollstückes in 500 Teilen einer wässerigen Flotte, enthaltend, bezogen auf das Fasergewicht, 4 Gewichtsprozent Ammonsulfat, 1,5 Gewichtsprozent 80 %ige Essigsäure, 1 Gewichtsprozent eines substituierten Alkylaminopolyglykoläthers und 4 Gewichtsprozent des Farbstoffs gemäss Beispiel 15, bei einer Temperatur von 98° während 30 bis 90 Minuten. Anschliessend kühlt man auf 80° ab, neutralisiert durch Zugabe von 2,5 Gewichtsprozent 25 %igem wässerigem Ammoniak und stellt während 15 Minuten bei dieser Temperatur fertig. Das gefärbte Wollstück wird anschliessend herausgenommen und wie üblich gewaschen und getrocknet. Man erhält ein Wollstück, das eine reine Nuance und gute Gesamtechtheiten aufweist.

**Patentansprüche**

1. Monoazofarbstoffe der Formel

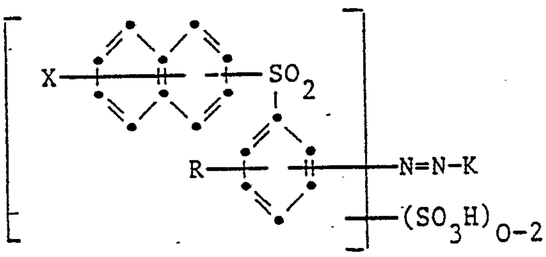

(1)

worin K der Reste eines Amino- oder Alkoxybenzols, Amino- oder Alkoxynaphthalins, Phenols, Naphthols, Aminonaphthols, Pyrazolons, Aminopyrazols, Pyridons, Pyrimidins, Indols, Diphenylamins, Acetessigsäureamids, Naphthimidazols, Tetrahydrochinolins oder Pyrazolo[2,3-a]pyrimidins ist, wobei die oben genannten Reste weitersubstituiert sein können, und R Wasserstoff, Halogen, Carboxy, ein $C_{1-6}$-Alkyl-, $C_{1-6}$-Alkoxy-, $C_{2-6}$-Alkanoylamino-, $C_{1-6}$-Alkylsulfonylamino-, $C_{1-6}$-Alkylsulfonyl-, Phenyl- oder Naphthyl-$C_{1-4}$-alkylsulfonyl- oder Benzoylrest, wobei die oben genannten Reste weitersubstituiert sein können, oder eine

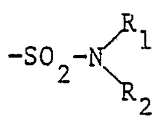 oder 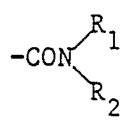

-Gruppe ist, worin $R_1$ und $R_2$ unabhängig voneinander Wasserstoff, einen $C_{1-6}$-Alkyl-, $C_{5-7}$-Cycloalkyl-, Phenyl- oder Naphthylrest bedeuten, wobei die genannten Reste weitersubstituiert sein können, und worin X Wasserstoff, Halogen oder ein $C_{1-6}$-Alkyl-, $C_{1-6}$-Alkoxy-, $C_{2-6}$-Alkanoylamino- oder $C_{1-6}$-Alkylsulfonylamino-Rest, der weitersubstituiert sein kann, ist, ausgenommen 3-Methyl-1-(m- oder p-sulfophenyl)-5-amino-pyrazol-4-azo-1'-[4'-naphthyl-(2")-sulfonylbenzol] gemäss den Beispielen 36 und 37 der britischen Patentschrift 868 474, 3-Methyl-1-(m-sulfophenyl)-5-aminopyrazol-4-azo-1'-[2'-naphthyl-(2")-sulfonylbenzol] gemäss Beispiel 24 der französischen Patentschrift 1 214 975, 3-Methyl-1-(3'-chlor-6'-sulfophenyl)-5-aminopyrazol-4-azo-1"-[2"-naphthyl-(2"')-sulfonyl-benzol] gemäss Beispiel 25 der französischen Patentschrift 1 214 975, und ausgenommen Monoazofarbstoffe der Formel (1), worin K als Aminonaphthalin- oder Aminonaphtholrest einen N-substituierten Sulfamoylrest enthält.

2. Monoazofarbstoffe gemäss Anspruch 1, worin der Rest —N=N—K in o- oder p-Stellung zur —$SO_2$-Gruppe an den Phenylring gebunden ist, und K, R und X die in Anspruch 1 angegebenen Bedeutungen haben.

3. Monoazofarbstoffe gemäss Anspruch 1, worin die Monoazofarbstoffe der Formel (1) 1 bis 3 Sulfonsäuregruppen enthalten, und K, R und X die in Anspruch 1 angegebenen Bedeutungen haben.

4. Monoazofarbstoffe gemäss Anspruch 2, worin X Wasserstoff oder $C_{1-4}$-Alkanoylamino ist, und K und R die in Anspruch 2 angegebenen Bedeutungen haben.

5. Monoazofarbstoffe gemäss Anspruch 4, worin K ein N-$C_{1-4}$-Alkylamino- oder N,N-di-$C_{1-4}$-alkylamino-benzoylrest, der im Benzolring durch Methyl, Methoxy und Acetylamino substituiert sein kann und worin die N-Alkylreste unabhängig voneinander durch Cyano, Hydroxy, Sulfo oder Phenyl substituiert sein können, ein $C_{1-2}$-Alkoxybenzolrest, der durch Methyl substituiert sein kann, ein Methoxynaphthalinrest, ein Phenolrest, der durch Methyl substituiert ist, ein Aminonaphthalinrest, der durch Sulfo substituiert sein kann, ein Hydroxynaphthalinrest, der durch Sulfo substituiert ist, ein Aminonaphtholrest, der im Naphthalinkern durch Sulfo substituiert ist, und worin die Aminogruppe durch Methyl, α,β-Dibrompropionyl, α-β-Dibrompropionylaminobenzoyl und 2,6-Difluor-5-chlorpyrimidylaminobenzoyl substituiert sein kann, ein 1-Phenyl-3-methylpyrazolon-5-rest, der im Phenylrest durch Methyl, Aethyl und Chlor substituiert sein kann, ein 1-Phenyl-3-methylaminopyrazolrest, der im Phenylrest durch Chlor und Sulfo substituiert sein kann, ein 2-Methylindolrest, ein 1-Chlorphenylamino-2-pentyl-naphthimidazolrest, der im Naphthalinkern durch Hydroxy und Sulfo substituiert ist, ein 1-Aethyl-4-methyl-3-carbamoyl-6-hydroxypyridon-(2)-rest, ein N-Methyl- oder N-Aethyl-1,2,3,4-tetrahydrochinolinrest oder ein 2,4,6-Triaminopyrimidinrest ist, und worin R Wasserstoff, Chlor, Methyl, Methoxy, Carboxy, Trifluormethyl, Acetylamino, $C_1$-$C_2$-Alkylsulfonyl, eine

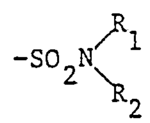 oder 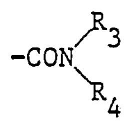

-Gruppe ist, wobei $R_1$ Wasserstoff oder Methyl, $R_2$ Wasserstoff, $C_{1-2}$-Alkyl, Cyclohexyl, β-Hydroxyäthyl, β-Sulfoäthyl, Sulfophenyl, das durch Methyl, Methoxy, Chlor, Acetylamino und Carboxy substituiert sein kann, Disulfophenyl, und Mono- oder Disulfonaphthyl, $R_3$ Wasserstoff oder Methyl und $R_4$ Wasserstoff, Methyl, β-Sulfoäthyl oder Sulfophenyl bedeutet, oder ein Benzoylrest ist, der im Benzolkern durch Sulfo substituiert ist und durch Chlor oder Methyl weitersubstituiert sein kann, und worin X Wasserstoff oder Acetylamino ist.

6. Monoazofarbstoffe gemäss Anspruch 5, worin K ein N,N-Di-$C_{1-4}$-alkylaminobenzolrest, der im Benzolring durch Methyl, Methoxy und Acetylamino substituiert sein kann und worin die N-Alkylreste unabhängig voneinander durch Cyano, Hydroxy, Sulfo oder Phenyl substituiert sein können, ein 1-Phenyl-3-methylaminopyrazolrest, der im Phenylrest durch Chlor und Sulfo substituiert sein kann, oder ein 2-Methylindolrest ist, und R und X die in Anspruch 5 angegebenen Bedeutungen haben.

7. Monoazofarbstoffe gemäss Anspruch 6, worin X Wasserstoff ist und K und R die in Anspruch 6 angegebenen Bedeutungen haben.

8. Monoazofarbstoffe gemäss Anspruch 7, worin R in o- oder p-Stellung zur $SO_2$-Gruppe an den Phenylring gebunden ist und K die in Anspruch 7 angegebene Bedeutung hat.

9. Monoazofarbstoffe gemäss Anspruch 6 der Formel

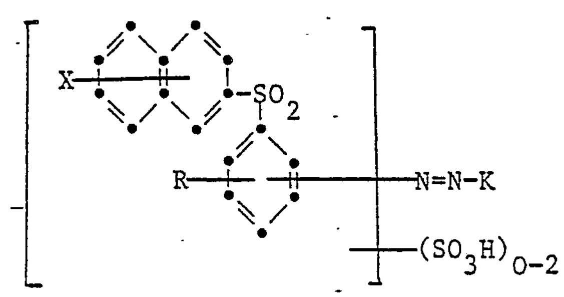

(2)

worin K, R und X die in Anspruch 6 angegebenen Bedeutungen haben.

10. Monoazofarbstoffe gemäss Anspruch 9 der Formel

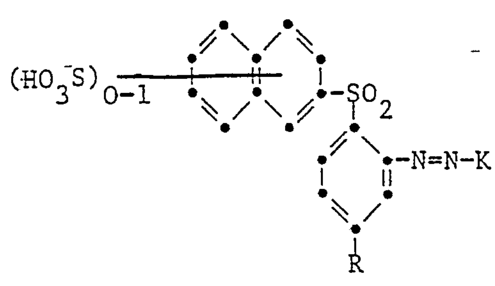

(3)

worin K ein 3-Methyl-N,N-diäthylanilinrest, 3-Methyl-N,N-di-n-butylanilinrest, ein 1-Phenyl-3-methyl-5-aminopyrazolrest, ein 1-(2'-Chlor-5'-sulfophenyl)-3-methyl-5-aminopyrazolrest oder ein 2-Methylindolrest und R Chlor, Trifluormethyl, Sulfo oder $-SO_2NH_2$ ist, wobei der Monoazofarbstoff der Formel (3) nur eine Sulfogruppe enthält.

11. Verfahren zur Herstellung der Monoazofarbstoffe gemäss Anspruch 1, dadurch gekennzeichnet, dass man eine Diazokomponente der Formel

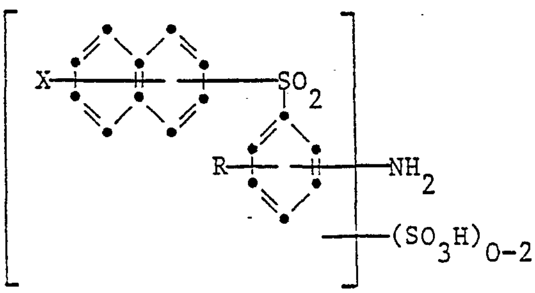 (4)

diazotiert und auf eine Kupplungskomponente der Formel kuppelt, worin K, R und X in den Formeln (4) und (5) die in Anspruch 1 angegebenen Bedeutungen haben.

12. Verfahren zur Herstellung von Mischungen der Monoazofarbstoffe gemäss Anspruch 1 der Formeln

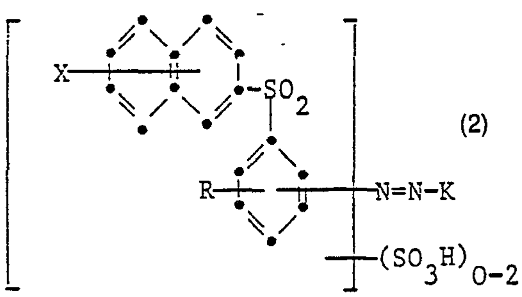 (2) und 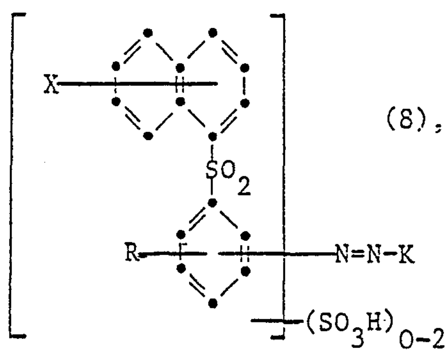 (8),

worin K, R und X die in Anspruch 1 angegebenen Bedeutungen haben, dadurch gekennzeichnet, dass man eine Mischung der Diazokomponenten der Formeln

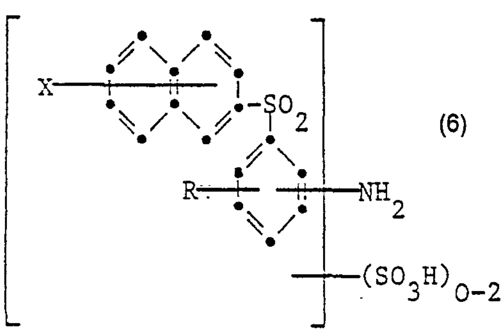 (6) und 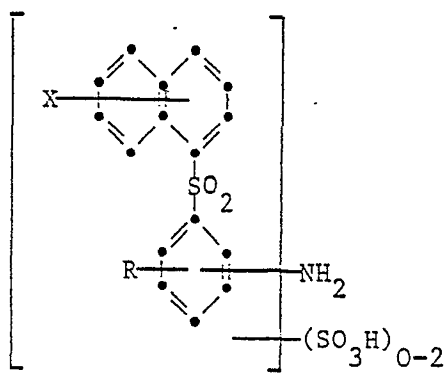 (9)

diazotiert und auf eine Kupplungskomponente der Formel

H—K (5)

kuppelt, worin K, R und X in den Formeln (2), (6), (8) und (9) die im Anspruch 1 angegebenen Bedeutungen haben.

13. Verbindungen der Formel

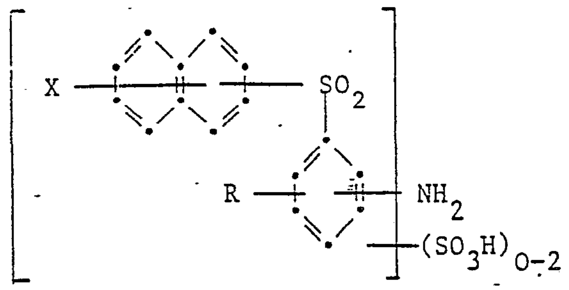

(4)

worin R Wasserstoff, Halogen, Carboxy, ein $C_{1-6}$-Alkyl-, $C_{1-6}$-Alkoxy-, $C_{2-6}$-Alkanoylamino-, $C_{1-6}$-Alkylsulfonylamino-, $C_{1-6}$-Alkylsulfonyl-, Phenyl- oder Naphthyl-$C_{1-4}$-alkylsulfonyl- oder Benzoylrest, wobei die obengenannten Reste weitersubstituiert sein können, oder eine

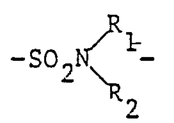 oder 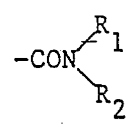

-Gruppe ist, worin $R_1$ und $R_2$ unabhängig voneinander Wasserstoff, einen $C_{1-6}$-Alkyl-, $C_{5-7}$-Cycloalkyl-, Phenyl- oder Naphthylrest bedeuten, wobei die genannten Reste weitersubstituiert sein können, und worin X Wasserstoff, Halogen oder ein $C_{1-6}$-Alkyl, $C_{1-6}$-Alkoxy-, $C_{2-6}$-Alkanoylamino- oder $C_{1-6}$-Alkylsulfonylamino-Rest, der weitersubstituiert sein kann, ist, ausgenommen 4-Amino-1-[naphthyl-(2')-sulfonyl]-benzol gemäss Beispiel 36 der britischen Patentschrift 868 474, 2-Amino-1-[naphthyl-(2')-sulfonyl]-benzol gemäss Beispiel 24 der französischen Patentschrift 1 214 975 und 2-Amino-1-[sulfonaphthyl-(2')-sulfonyl]-benzol gemäss Beispiel 35 der französischen Patentschrift 1 221 165.

14. Verbindungen gemäss Anspruch 13, worin die —$NH_2$-Gruppe in o- oder p-Stellung zur —$SO_2$-Gruppe an den Phenylring gebunden ist, und R und X die in Anspruch 13 angegebenen Bedeutungen haben.

15. Verbindungen gemäss Anspruch 14, worin X Wasserstoff oder $C_{1-4}$-Alkanoylamino ist und R die in Anspruch 14 angegebene Bedeutung hat.

16. Verbindungen gemäss Anspruch 15, worin R Wasserstoff, Chlor, Methyl, Methoxy, Carboxy, Trifluormethyl, Acetylamino-$C_{1-2}$-Alkylsulfonyl, eine

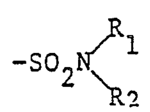 oder 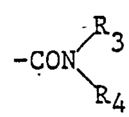

-Gruppe, wobei $R_1$ Wasserstoff oder Methyl, $R_2$ Wasserstoff, $C_{1-2}$-Alkyl, Cyclohexyl, β-Hydroxyäthyl, β-Sulfoäthyl, Sulfophenyl, das durch Methyl, Methoxy, Chlor, Acetylamino und Carboxy substituiert sein kann, Disulfophenyl, und Mono- oder Disulfonaphthyl, $R_3$ Wasserstoff oder Methyl und $R_4$ Wasserstoff, Methyl, β-Sulfoäthyl oder Sulfophenyl bedeutet, oder ein Benzoylrest ist, der im Benzolkern durch Sulfo substituiert ist und durch Chlor oder Methyl weitersubstituiert sein kann, und worin X Wasserstoff oder Acetylamino ist.

17. Verbindungen gemäss Anspruch 16, worin X Wasserstoff ist und R die in Anspruch 16 angegebene Bedeutung hat.

18. Verbindungen gemäss Anspruch 17, worin R in o- oder p-Stellung zur —$SO_2$-Gruppe an den Phenylring gebunden ist.

19. Verbindungen gemäss Anspruch 16 der Formel

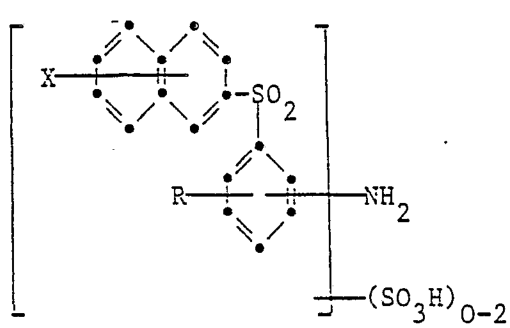

(6)

worin R und X die in Anspruch 16 angegebenen Bedeutungen haben.

20. Verbindungen gemäss Anspruch 19 der Formel

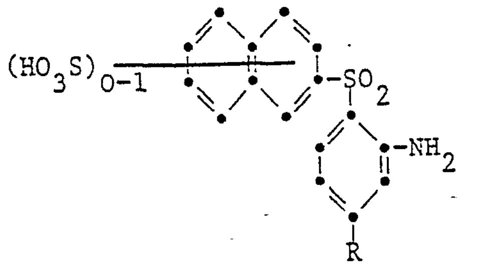

(7)

worin R Chlor, Trifluormethyl, Sulfo oder $—SO_2NH_2$ ist und die Verbindung der Formel (7) höchstens eine Sulfogruppe enthält.

21. Verfahren zur Herstellung von Verbindungen gemäss Anspruch 13, dadurch gekennzeichnet, dass man eine Verbindung der Formel

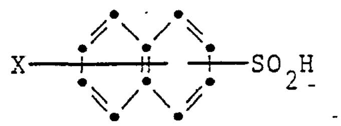

(10)

worin X die in Anspruch 13 angegebene Bedeutung hat, mit einer Verbindung der Formel

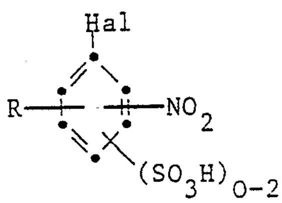

(11)

worin Hal Halogen bedeutet und R die in Anspruch 13 angegebene Bedeutung hat, umsetzt, das Reaktionsprodukt gegebenenfalls sulfoniert und die Nitrogruppe zur Aminogruppe reduziert.

22. Verfahren zum Färben und Bedrucken unter Verwendung der Azofarbstoffe gemäss Anspruch 1.

23. Verfahren gemäss Anspruch 22 zum Färben von synthetischen und natürlichen Polyamidfasern.

24. Färbe- und Druckpräparate, die Azofarbstoffe gemäss den Ansprüchen 1 bis 10 enthalten.

**Claims**

1. A monoazo dye of the formula

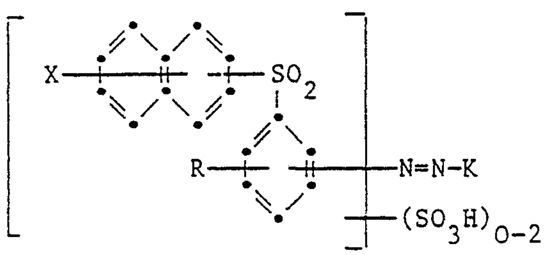

(1)

wherein K is the radical of an aminobenzene or alkoxybenzene, of an aminonaphthalene or alkoxynaphthalene, of a phenol, naphthol, aminonaphthol, pyrazolone, aminopyrazole, pyridone, pyrimidine, indole, diphenylamine, acetoacetamide, naphthimidazole, tetrahydroquinoline or pyrazolo[2,3-a]pyrimidine, which radicals may be further substituted, and R is hydrogen, halogen, carboxy a $C_1$-$C_6$-alkyl, $C_1$-$C_6$-alkoxy, $C_2$-$C_6$-alkanoylamino, $C_1$-$C_6$-alkylsulfonylamino, $C_1$-$C_6$-alkylsulfonyl, phenyl($C_1$-$C_4$)alkylsulfonyl or naphthyl($C_1$-$C_4$)alkyl-sulfonyl or benzoyl radical, which radicals may be further substituted, or is an

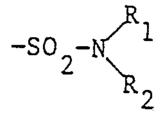 or 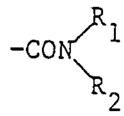

group, wherein each of $R_1$ and $R_2$ independently of the other is hydrogen or a $C_1$-$C_6$-alkyl, $C_5$-$C_7$-cycloalkyl, phenyl or naphthyl radical, which radicals may be further substituted, and wherein X is hydrogen, halogen or a $C_1$-$C_6$-alkyl, $C_1$-$C_6$-alkoxy, $C_2$-$C_6$-alkanoylamino or $C_1$-$C_6$-alkylsulfonylamino radical, which radicals may be further substituted, with the exception of 3-methyl-1-(m- or p-sulfophenyl)-5-aminopyrazol-4-azo-1'-[4'-naphthyl-(2")-sulfonylbenzene] according to Examples 36 and 37 of British patent specification 868 474, 3-methyl-1-(m-sulfophenyl)-5-amino-pyrazol-4-azo-1'-[2'-naphthyl-(2")-sulfonylbenzene] according to Example 24 of French patent specification 1 214 975, 3-methyl-1-(3'-chloro-6'-sulfophenyl)-5-aminopyrazol-4-azo-1"-[2"-naphthyl-(2‴)-sulfonylbenzene according to Example 25 of French patent specification 1 214 975, and with the exception of monoazo dyes of the formula (I), wherein K as aminonaphthalene or aminonaphthol radical contains an N-substituted sulfamoyl radical.

2. A monoazo dye according to claim 1, wherein the radical —N=N—K is linked to the phenyl ring in the ortho- or para-position to the —$SO_2$ group, and K, R and X are as defined in claim 1.

3. A monoazo dye of the formula (1) according to claim 1, which contains 1 to 3 sulfo groups in the molecule, and K, R and X are as defined in claim 1.

4. A monoazo dye according to claim 1, wherein X is hydrogen or $C_1$-$C_4$-alkanoylamino, and K and R are as defined in claim 2.

5. A monoazo dye according to claim 4, wherein K is an N-$C_1$-$C_4$-alkylaminobenzene or N,N-di($C_1$-$C_4$)alkylaminobenzene radical which may be substituted in the benzene ring by methyl, methoxy and acetamido and wherein the N-alkyl moieties may each independently be substituted by cyano, hydroxy, sulfo or phenyl, or is a $C_1$-$C_2$-alkoxybenzene radical which may be substituted by methyl ; a methoxynaphthalene radical, a phenol radical which is substituted by methyl, an aminonaphthalene radical which may be substituted by sulfo, a hydroxynaphthalene radical which is substituted by sulfo, an aminonaphthol radical which is substituted in the naphthalene nucleus by sulfo, and wherein the amino group may be substituted by methyl, α,β-dibromopropionyl, α,β-dibromopropionylaminobenzoyl and 2,6-di-fluoro-5-chloropyrimidylaminobenzoyl ; or is a 1-phenyl-3-methylpyrazol-5-one radical which may be substituted in the phenyl nucleus by methyl, ethyl and chlorine, a 1-phenyl-3-methylaminopyrazole radical which may be substituted in the phenyl nucleus by chlorine and sulfo, a 2-methylindole radical, a 1-chlorophenylamino-2-pentylnaphthimidazole radical which is substituted in the naphthalene nucleus by hydroxy and sulfo, a 1-ethyl-4-methyl-3-carbamoyl-6-hydroxypyrid-2-one radical, an N-methyl- or N-ethyl-1,2,3,4-tetrahydroquinoline radical or a 2,4,6-triamino-pyrimidine radical, and wherein R is hydrogen, chlorine, methyl, methoxy, carboxy, trifluoromethyl, acetamido, $C_1$-$C_2$-alkylsulfonyl, an

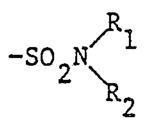 or 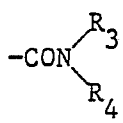

group, wherein $R_1$ is hydrogen or methyl, $R_2$ is hydrogen, $C_1$-$C_2$-alkyl, cyclohexyl, β-hydroxyethyl, β-sulfoethyl, sulfophenyl which may be substituted by methyl, methoxy, chlorine, acetamido and carboxy ; disulfophenyl, and mono- or disulfonaphthyl, $R_3$ is hydrogen or methyl and $R_4$ is hydrogen, methyl, β-sulfoethyl or sulfophenyl, or is a benzoyl radical which is substituted in the benzene nucleus by sulfo and may be further substituted by chlorine or methyl ; and X is hydrogen or acetamido.

6. A monoazo dye according to claim 5, wherein K is an N,N-di($C_1$-$C_4$)-alkylaminobenzene radical which may be substituted in the benzene ring by methyl, methoxy and acetamido, and wherein the N-alkyl moieties may each independently be substituted by cyano, hydroxy, sulfo or phenyl, or is a 1-phenyl-3-methylaminopyrazole radical which may be substituted in the phenyl nucleus by chlorine and sulfo, or is a 2-methylindole radical, and R and X are as defined in claim 5.

7. A monoazo dye according to claim 6, wherein X is hydrogen and K and R are as defined in claim 6.

8. A monoazo dye according to claim 7, wherein R is linked to the phenyl ring in the ortho- or para-position to the —$SO_2$ group, and K is as defined in claim 7.

9. A monoazo dye according to claim 6 of the formula

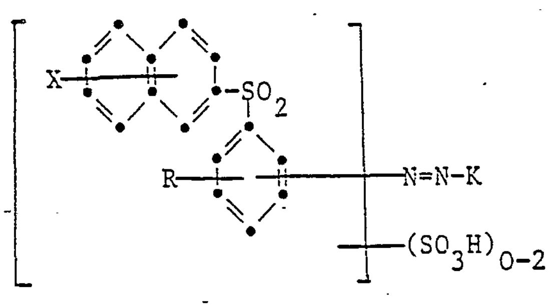

(2)

wherein K, R and X are as defined in claim 6.

10. A monoazo dye according to claim 9 of the formula

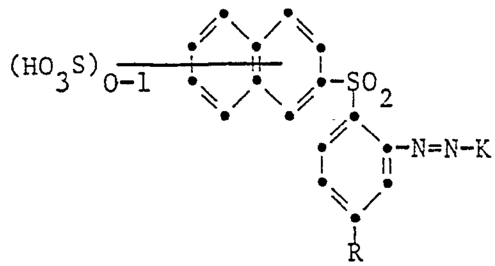

(3)

wherein K is a 3-methyl-N,N-diethylaniline radical, a 3-methyl-N,N-di-n-butylaniline radical, a 1-phenyl-3-methyl-5-aminopyrazole radical, a 1-(2'-chloro-5'-sulfophenyl)-3-methyl-5-aminopyrazole radical or a 2-methylindole radical, and R is chlorine, trifluoromethyl, sulfo or $-SO_2NH_2$, which monoazo dye of formula (3) contains only one sulfo group.

11. A process for the preparation of a monoazo dye as claimed in claim 1, which process comprises diazotising a diazo component of the formula

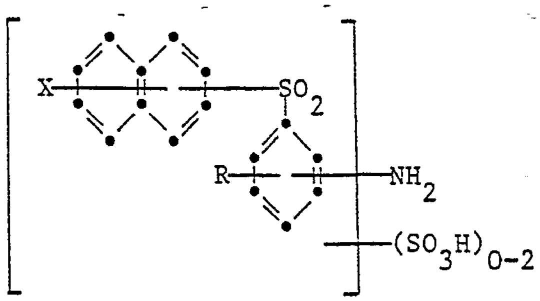

(4)

and coupling the diazonium compound to a coupling component of the formula

$$H-K \quad (5)$$

in which formulae (4) and (5) above K, R and X are as defined in claim 1.

12. A process for the preparation of a mixture of monoazo dyes of the formulae

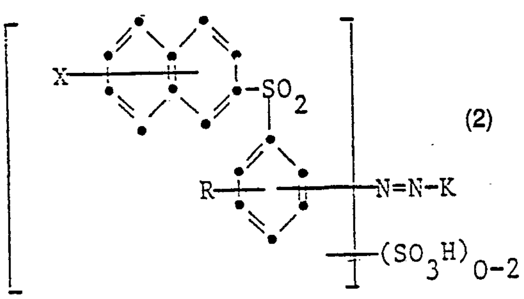

(2) and

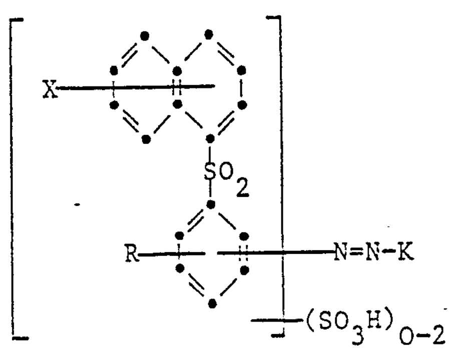

(8)

wherein K, R and X are as defined in claim 1, which process comprises diazotising a mixture of the diazo components of the formulae

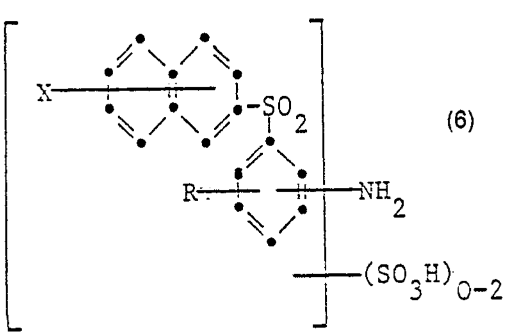

(6) and

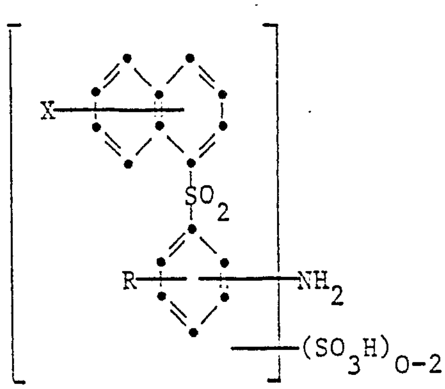

(9)

and coupling the diazonium compound to a coupling component of the formula

H—K (5)

in which formulae (2), (5), (6), (8) and (9) above K, R and X are as defined in claim 1.

13. A compound of the formula

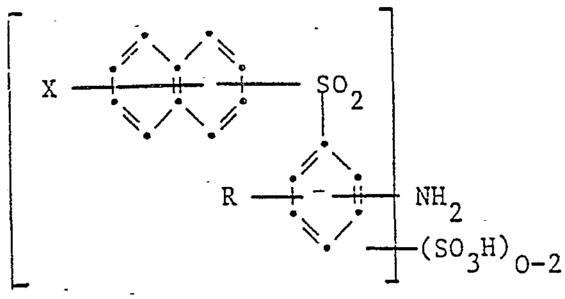

(4)

wherein R is hydrogen, halogen, carboxy, a $C_1$-$C_6$alkyl, $C_1$-$C_6$alkoxy, $C_2$-$C_6$alkanoylamino, $C_1$-$C_6$alkylsulfonylamino, $C_1$-$C_6$alkylsulfonyl, phenyl-$C_1$-$C_4$alkylsulfonyl or naphthyl-$C_1$-$C_4$alkylsulfonyl or benzoyl radical, which radicals may be further substituted, or is an

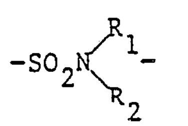 or 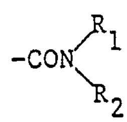

group, wherein each of $R_1$ and $R_2$ independently of the other is hydrogen, a $C_1$-$C_6$alkyl, $C_5$-$C_7$cycloalkyl, phenyl or naphthyl radical, which radicals may be further substituted, and wherein X is hydrogen, halogen or a $C_1$-$C_6$alkyl, $C_1$-$C_6$alkoxy, $C_2$-$C_6$alkanoylamino or $C_1$-$C_6$alkylsulfonylamino radical, which radicals may be further substituted, with the exception of 4-amino-1-[naphthyl-(2')-sulfonyl]benzene according to Example 36 of British patent specification 868 474, 2-amino-1-[naphthyl-(2')-sulfonyl]benzene according to Example 24 of French patent specification 1 214 975 and 2-amino-1-[sulfonaphthyl-(2')-sulfonyl]benzene according to Example 35 of French patent specification 1 221 165.

14. A compound according to claim 13, wherein the —$NH_2$ group is linked to the phenyl ring in the ortho- or para-position to the —$SO_2$ group and R and X are as defined in claim 13.

15. A compound according to claim 14, wherein X is hydrogen or $C_1$-$C_4$alkanoylamino, and R is as defined in claim 14.

16. A compound according to claim 15, wherein R is hydrogen, chlorine, methyl, methoxy, carboxy, trifluoromethyl, acetamido, $C_1$-$C_2$alkylsulfonyl, an

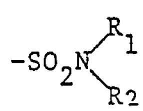 or 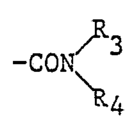

group, wherein $R_1$ is hydrogen or methyl, $R_2$ is hydrogen, $C_1$-$C_2$alkyl, cyclohexyl, β-hydroxyethyl, β-sulfoethyl, sulfophenyl which may be substituted by methyl, methoxy, chlorine, acetamido and carboxy, or is disulfophenyl, and mono- and disulfonaphthyl, $R_3$ is hydrogen or methyl and $R_4$ is hydrogen, methyl, β-sulfoethyl or sulfophenyl, or is a benzoyl radical which is substituted in the benzene nucleus by sulfo and may be further substituted by chlorine or methyl, and X is hydrogen or acetamido.

17. A compound according to claim 16, wherein X is hydrogen and R is as defined in claim 16.

18. A compound according to claim 17, wherein R is linked to the phenyl ring in the ortho- or para-position to the —$SO_2$ group.

19. A compound according to claim 16 of the formula

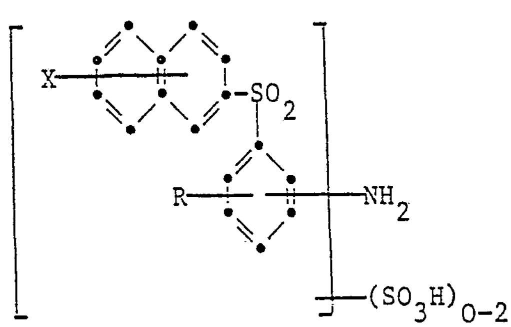

(6)

wherein R and X are as defined in claim 16.

20. A compound according to claim 19 of the formula

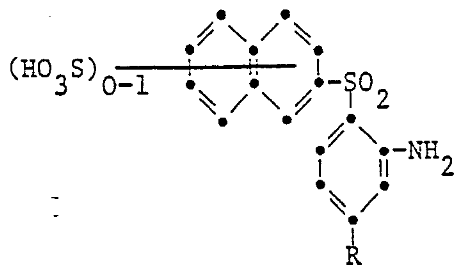

(7)

wherein R is chlorine, trifluoromethyl, sulfo or $-SO_2NH_2$, which compound of formula (7) contains only one sulfo group.

21. A process for the preparation of a compound as claimed in claim 13, which comprises reacting a compound of the formula

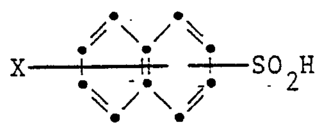

(10)

wherein X is as defined in claim 13, with a compound of the formula

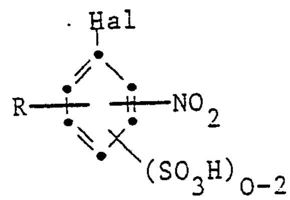

(11)

wherein Hal is halogen and R is as defined in claim 13, and, if desired, sulfonating the reaction product and reducing the nitro group to the amino group.

22. A process for dyeing and printing, which comprises the use of an azo dye as claimed in claim 1.

23. A process according to claim 22 for dyeing synthetic and natural polyamide fibres.

24. A dyeing or printing composition which contains an azo dye as claimed in any one of claims 1 to 10.

**Revendications**

1. Colorants monoazoïques de formule

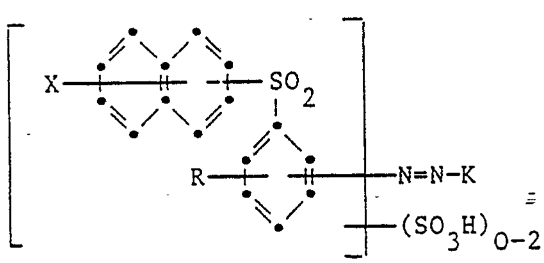

(1)

dans laquelle K représente le résidu d'un aminobenzène, d'un alcoxybenzène, d'un aminonaphtalène, d'un alcoxynaphtalène, d'un phénol, d'un naphtol, d'un aminonaphtol, d'une pyrazolone, d'un aminopyrazol, d'une pyridone, d'une pyrimidine, d'un indol, d'une diphénylamine, d'un acétoacétamide, d'un naphtimidazol, d'une tétrahydroquinoline, ou d'une pyrazolo-[2,3-a]pyrimidine, les résidus mentionnés ci-dessus pouvant encore être substitués, et R représente un atome d'hydrogène ou d'halogène ou un groupe carboxy, ou bien un résidu alkyle en $C_{1-6}$, alcoxy en $C_{1-6}$, alkanoylamino en $C_{2-6}$, alkylsulfonylamino en $C_{1-6}$, alkylsulfonyle en $C_{1-6}$, phényl-(alkyle en $C_{1-4}$)-sulfonyle, naphtyl-(alkyle en $C_{1-4}$)-sulfonyle, ou benzoyle, les résidus mentionnés ci-dessus pouvant encore être substitués, ou bien encore un groupe

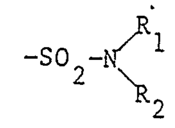 ou 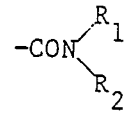

$R_1$ et $R_2$ représentant, indépendamment l'un de l'autre, un atome d'hydrogène ou un groupe alkyle en $C_{1-6}$, cycloalkyle en $C_{5-7}$, phényle ou naphtyle, ces résidus mentionnés ci-dessus pouvant encore être substitués, et dans laquelle X représente un atome d'hydrogène ou d'halogène ou un groupe alkyle en $C_{1-6}$, alcoxy en $C_{1-6}$, alkanoylamino en $C_{2-6}$, ou alkylsulfonylamino en $C_{1-6}$, pouvant être encore substitué, à l'exception des 3-méthyl-1-(m- ou p-sulfophényl)-5-aminopyrazol-4-azo-1'-[4'-naphtyl-(2")-sulfonylbenzène], conformes aux exemples 36 et 37 du brevet britannique 868 474, du 3-méthyl-1-(m-sulfophényl)-5-aminopyrazol-4-azo-1'-[2'-naphtyl-(2")-sulfonylbenzène], conforme à l'exemple 24 du brevet français 1 214 975, du 3-méthyl-1-(3'-chloro-6'-sulfophényl)-5-aminopyrazol-4-azo-1"-[2"-naphtyl-(2‴)-sulfonylbenzène], conforme à l'exemple 25 du brevet français 1 214 975, et des colorants monoazoïques de formule (1), dans lesquels K, en tant que résidu d'un aminonaphtalène ou d'un aminonaphtol, contient un groupe sulfamoyle substitué à l'azote.

2. Colorants monoazoïques conformes à la revendication 1, dans lesquels le résidu —N=N—K est lié au noyau phényle en position o- ou p- par rapport au groupe $—SO_2—$, et K, R et X ont les significations indiquées dans la revendication 1.

3. Colorants monoazoïques conformes à la revendication 1, dans lesquels les colorants monoazoïques de formule (1) contiennent de 1 à 3 groupes acide sulfonique, et K, R et X ont les significations indiquées dans la revendication 1.

4. Colorants monoazoïques conformes à la revendication 2, dans lesquels X est un atome d'hydrogène ou un groupe alcanoylamino en $C_{1-4}$, et K et R ont les significations indiquées dans la revendication 2.

5. Colorants monoazoïques conformes à la revendication 4, dans lesquels K est un résidu d'un N-(alkyle en $C_{1-4}$)-aminobenzène ou d'un N,N-di-(alkyle en $C_{1-4}$)-aminobenzène, qui peut être substitué sur le noyau benzénique par un groupe méthyle, méthoxy, ou acétylamino, les groupes N-alkyle, indépendamment l'un de l'autre, pouvant être substitués par un groupe cyano, hydroxyle, sulfo ou phényle, un résidu d'un (alcoxy en $C_{1-2}$)-benzène, qui peut être substitué par un groupe méthyle, un résidu d'un méthoxynaphtalène, un résidu d'un phénol substitué par un groupe méthyle, un résidu d'un aminonaphtalène qui peut être substitué par un groupe sulfo, un résidu d'un hydroxynaphtalène substitué par un groupe sulfo, un résidu d'un aminonaphtol substitué par un groupe sulfo dans le noyau naphtalène, le groupe amino pouvant être substitué par un groupe méthyle, α,β-dibromopropionyle, α,β-dibromopropionylaminobenzoyle ou 2,6-difluoro-5-chloro-pyrimidylaminobenzoyle, un résidu d'une 1-phényl-3-méthylpyrazolone-5, qui peut être substitué dans le noyau phényle par un groupe méthyle, un groupe éthyle, ou un atome de chlore, un résidu d'un 1-phényl-3-méthylaminopyrazol, qui peut être substitué dans le noyau phényle par un atome de chlore ou un groupe sulfo, un résidu d'un 2-méthylindol, un résidu d'un 1-chlorophénylamino-2-pentyl-naphtimidazol, substitué dans le noyau naphtalène par des groupes hydroxyle et sulfo, un résidu d'une 1-éthyl-4-méthyl-3-carbamoyl-6-hydroxypyridone-(2), un résidu d'une N-(méthyl ou éthyl)-1,2,3,4-tétrahydroquinoline, ou un résidu d'une 2,4,6-triaminopyrimidine, et dans lesquels R est un atome d'hydrogène ou de chlore, ou un groupe méthyle, méthoxy, carboxyle, trifluorométhyle, acétylamino, alkylsulfonyle en $C_{1-2}$, un groupe

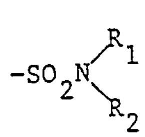 ou 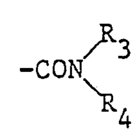

où $R_1$ représente un atome d'hydrogène ou un groupe méthyle, $R_2$ représente un atome d'hydrogène ou un groupe alkyle en $C_{1-2}$, cyclohexyle, β-hydroxyéthyle, β-sulfoéthyle, sulfophényle, éventuellement substitué par un groupe méthyle, méthoxy, acétylamino, ou carboxyle, ou par un atome de chlore, disulfophényle, disulfonaphtyle ou monosulfonaphtyle, $R_3$ représente un atome d'hydrogène ou un groupe méthyle, et $R_4$ représente un atome d'hydrogène ou un groupe méthyle, sulfoéthyle ou sulfophényle, ou bien R est un résidu benzoyle, dont le noyau benzénique est substitué par un groupe sulfo et peut encore être substitué par un atome de chlore ou un groupe méthyle, et dans lesquels X est un atome d'hydrogène ou un groupe acétylamino.

6. Colorants monoazoïques conformes à la revendication 5, dans lesquels K est un résidu d'un N,N-di-(alkyle en $C_{1-4}$)-aminobenzène, qui peut être substitué sur le noyau benzénique par un groupe méthyle, méthoxy, ou acétylamino, et où les groupes N-alkyle, indépendamment l'un de l'autre, peuvent être substitués par un groupe cyano, hydroxyle, sulfo, ou phényle, un résidu d'un 1-phényl-3-méthylaminopyrazol, qui peut être substitué sur le noyau phényle par un groupe sulfo et par un atome de chlore, ou bien un résidu d'un 2-méthyl-indole, et dans lesquels R et X ont les significations indiquées dans la revendication 5.

7. Colorants monoazoïques conformes à la revendication 6, dans lesquels X est un atome d'hydrogène, et K et R ont les significations indiquées dans la revendication 6.

8. Colorants monoazoïques conformes à la revendication 7, dans lesquels R est lié sur le noyau phényle en position o- ou p- par rapport au groupe —$SO_2$—, et K a la signification indiquée dans la revendication 7.

9. Colorants monoazoïques conformes à la revendication 6, de formule

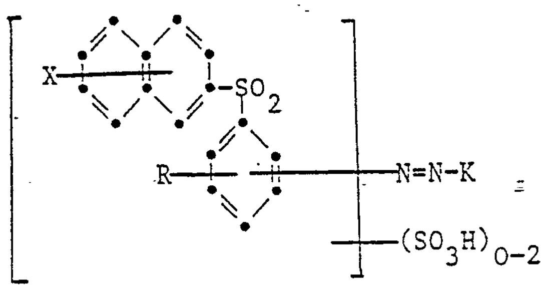

(2)

dans laquelle K, R et X ont les significations indiquées dans la revendication 6.

10. Colorants monoazoïques conformes à la revendication 9, de formule

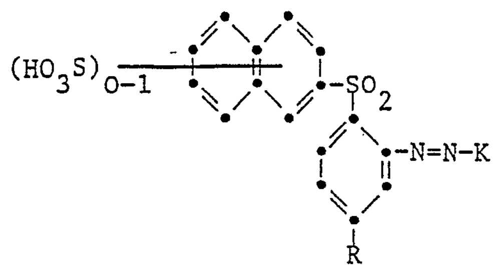

(3)

dans laquelle K est un résidu d'une 3-méthyl-N,N-diéthylaniline, un résidu d'une 3-méthyl-N,N-di-n-butylaniline, un résidu d'un 1-phényl-3-méthyl-5-aminopyrazol, un résidu d'un 1-(2'-chloro-5'-sulfophényl)-3-méthyl-5-aminopyrazol, ou bien un résidu d'un 2-méthylindole, et R est un atome de chlore ou un groupe trifluorométhyle, sulfo ou —$SO_2NH_2$, le colorant monoazoïque de formule (3) ne contenant qu'un seul groupe sulfo.

11. Procédé de préparation des colorants monoazoïques conformes à la revendication 1, caractérisé en ce que l'on diazote un composant diazo de formule

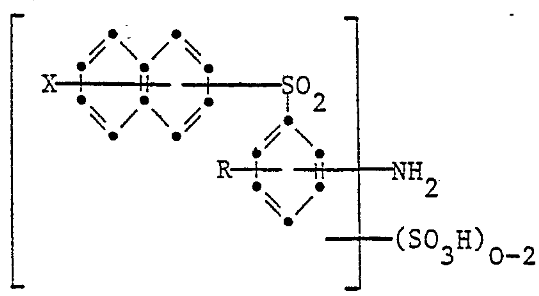

(4)

et qu'on le copule sur un composant de copulation de formule

H—K (5)

K, R et X ayant dans les formules (4) et (5) les significations indiquées dans la revendication 1.

12. Procédé de préparation de mélanges de colorants monoazoïques conformes à la revendication 1, de formules

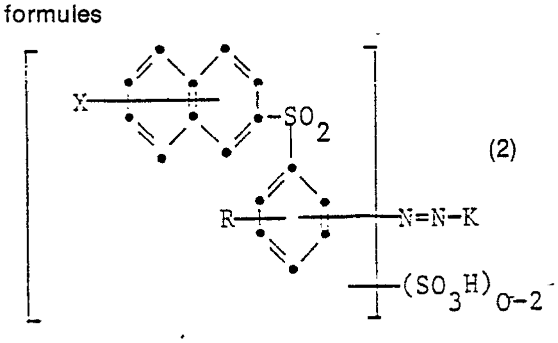

(2) et

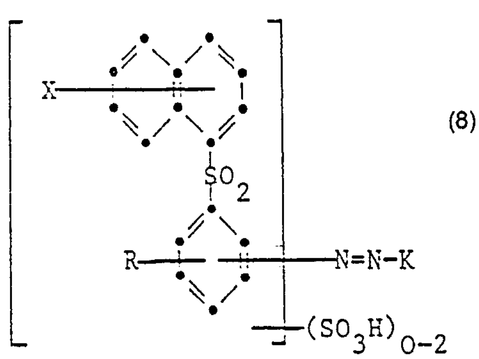

(8)

dans lesquelles K, R et X ont les significations indiquées dans la revendication 1, caractérisé en ce que l'on diazote un mélange de composants diazo de formules

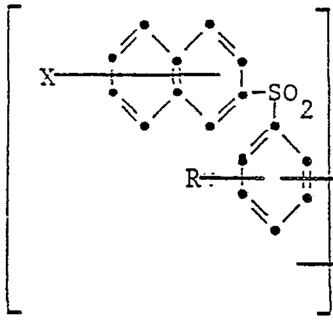 (6) et 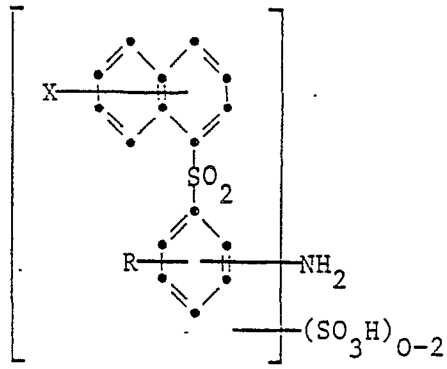 (9)

et qu'on le copule sur un composant de copulation de formule

H—K (5)

K, R et X ayant, dans les formules (2), (6), (8) et (9), les significations indiquées dans la revendication 1.

13. Composés de formule

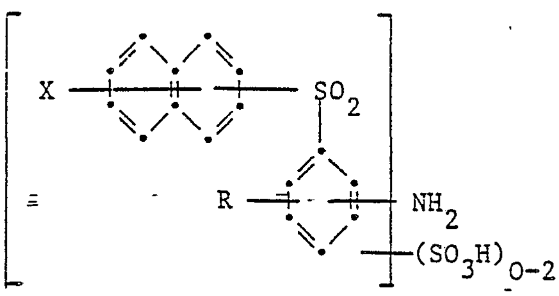 (4)

dans laquelle R représente un atome d'hydrogène ou d'halogène, ou un groupe carboxyle, alkyle en $C_{1-6}$, alcoxy en $C_{1-6}$, alcanoylamino en $C_{2-6}$, alkylsulfonylamino en $C_{1-6}$, alkylsulfonyle en $C_{1-6}$, phényl-(alkyle en $C_{1-4}$)-sulfonyle, naphtyl-(alkyle en $C_{1-4}$)-sulfonyle, ou benzoyle, les groupes mentionnés ci-dessus pouvant encore être substitués, ou bien un groupe

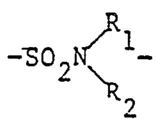 ou 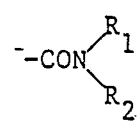

$R_1$ et $R_2$ représentant, indépendamment l'un de l'autre, un atome d'hydrogène ou un groupe alkyle en $C_{1-6}$, cycloalkyle en $C_{5-7}$, phényle ou naphtyle, les groupes mentionnés pouvant encore être substitués, et dans laquelle X représente un atome d'hydrogène ou d'halogène ou un groupe alkyle en $C_{1-6}$, alcoxy en $C_{1-6}$, alcanoylamino en $C_{2-6}$, ou alkylsulfonylamino en $C_{1-6}$, qui peut encore être substitué ; à l'exception du 4-amino-1-(naphtyl-(2')-sulfonyl)-benzène conforme à l'exemple 36 du brevet britannique n° 868 474, du 2-amino- 1-(naphtyl-(2')-sulfonyl)-benzène conforme à l'exemple 24 du brevet français n° 1 214 975, et du 2-amino-1-(sulfonaphtyl-(2')-sulfonyl)-benzène conforme à l'exemple 35 du brevet français n° 1 221 165.

14. Composés conformes à la revendication 13, dans lesquels le groupe —$NH_2$— est lié sur le noyau phényle en position o- ou p- par rapport au groupe —$SO_2$—, et R et X ont les significations indiquées dans la revendication 13.

15. Composés conformes à la revendication 14, dans lesquels X est un atome d'hydrogène ou un groupe alcanoylamino en $C_{1-4}$, et R a la signification indiquée dans la revendication 14.

16. Composés conformes à la revendication 15, dans lesquels R est un atome d'hydrogène ou de chlore, ou un groupe méthyle, méthoxy, carboxy, trifluorométhyle, acétylamino, alkylsulfonyle en $C_{1-2}$,

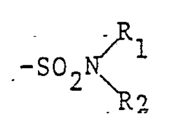 ou 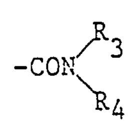

$R_1$ représentant un atome d'hydrogène ou un groupe méthyle, $R_2$ représentant un atome d'hydrogène ou un groupe alkyle en $C_{1\text{-}2}$, cyclohexyle, β-hydroxyéthyle, β-sulfoéthyle, sulfophényle, qui peut encore être substitué par un atome de chlore ou par un groupe méthyle, méthoxy, acétylamino ou carboxyle, ou bien un groupe disulfophényle, monosulfonaphtyle ou disulfonaphtyle, $R_3$ représentant un atome d'hydrogène ou un groupe méthyle, et $R_4$ représentant un atome d'hydrogène ou un groupe méthyle, β-sulfoéthyle, ou sulfophényle, ou bien un groupe benzoyle qui est substitué sur le noyau benzénique par un groupe sulfo et qui peut encore être substitué par un atome de chlore ou un groupe méthyle, et dans lesquels X représente un atome d'hydrogène ou un groupe acétylamino.

17. Composés conformes à la revendication 16, dans lesquels X est un atome d'hydrogène et R a la signification indiquée dans la revendication 16.

18. Composés conformes à la revendication 17, dans lesquels R est lié au noyau phényle en position o- ou p- par rapport au groupe $—SO_2—$.

19. Composés conformes à la revendication 16, de formule

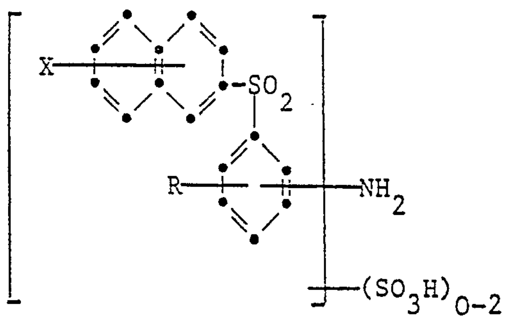

(6)

dans laquelle R et X ont les significations indiquées dans la revendication 16.

20. Composés conformes à la revendication 19, de formule

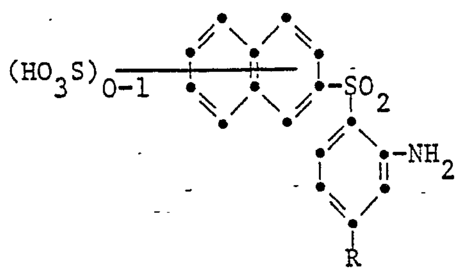

(7)

dans laquelle R est un atome de chlore ou un groupe trifluorométhyle, sulfo ou $—SO_2NH_2$, le composé de formule (7) contenant au plus un groupe sulfo.

21. Procédé de préparation de composés conformes à la revendication 13, caractérisé en ce que l'on fait réagir un composé de formule

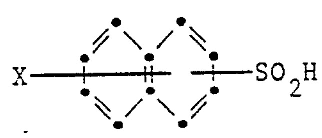

(10)

dans laquelle X a la signification indiquée dans la revendication 13, avec un composé de formule

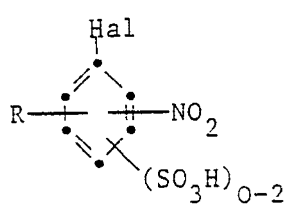

(11)

dans laquelle Hal représente un atome d'halogène et R a la signification indiquée dans la revendication 13, on sulfone éventuellement le produit de réaction, et on réduit le groupe nitro en un groupe amino.

22. Procédé de teinture ou d'impression utilisant les colorants azoïques conformes à la revendication 1.

23. Procédé, conforme à la revendication 22, de teinture de fibres en polyamide, naturelles ou synthétiques.

24. Préparation pour teinture ou impression, contenant des colorants azoïques conformes aux revendications 1 à 10.